# EUROPÄISCHE PATENTSCHRIFT

(11) **EP 2 041 146 B1**
(45) Veröffentlichungstag und Bekanntmachung des Hinweises auf die Patenterteilung: **31.07.2013**
(21) Anmeldenummer: 07765357.4
(22) Anmeldetag: 11.06.2007
(51) Int. Cl.: C07F 7/08

(54) **GEMISCHE AUS SILICIUMHALTIGEN KOPPLUNGSREAGENTIEN**
MIXTURES OF SILICON-CONTAINING COUPLING REAGENTS
MÉLANGES DE RÉACTIFS DE COUPLAGE CONTENANT DU SILICIUM

(30) Priorität: 17.07.2006 DE 102006033310
(43) Veröffentlichungstag der Anmeldung: 01.04.2009
(73) Patentinhaber: Evonik Degussa GmbH, 45128 Essen (DE)
(72) Erfinder: ALBERT, Philipp, 79539 Lörrach (DE); FRIEDEL, Manuel, 8048 Zürich (DE); KORTH, Karsten, 79639 Grenzach-Wyhlen (DE); HASSE, Andre, 52441 Linnich-Ederen (DE); KLOCKMANN, Oliver, 52382 Niederzier (DE)
(86) Internationale Anmeldenummer: PCT/EP2007/055711
(87) Internationale Veröffentlichungsnummer: WO 2008/009514

(56) Entgegenhaltungen:
- EP-A- 1 672 017
- EP-A1- 1 285 926
- EP-A1- 1 637 535
- EP-A2- 1 683 801
- DE-B- 1 163 820
- US-B1- 6 197 105

## Beschreibung

Die Erfindung betrifft Gemische aus siliciumhaltigen Kopplungsreagentien, Verfahren zu ihrer Herstellung, sowie ihre Verwendung.

Es ist bekannt, Silane als Haftvermittler einzusetzen. So werden Aminoalkyltrialkoxysilane, Methacryloxyalkyltrialkoxysilane, Polysulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt (E.P. Plueddemann, "Silane Coupling Agents", 2^{nd} Ed. Plenum Press 1982).

Diese Haftvermittler beziehungsweise Kupplungs- oder Verbindungsagentien bilden sowohl zum Füllstoff als auch zum Elastomer Bindungen und bewirken somit zwischen der Füllstoffoberfläche und dem Elastomer eine gute Wechselwirkung.

Desweiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole, Methanol und Ethanol, in erheblichen Mengen freigesetzt (Berkemeier, D.; Hader, W.; Rinker, M.; Heiss, G. Mixing of silica compounds from the viewpoint of a manufacturer of internal mixers. Gummi, Fasern, Kunststoffe (2001), 54(1), 17-22).

Es ist weiterhin bekannt, daß Methoxy- und Ethoxysubstituierte Silane reaktiver sind als die entsprechenden langkettigen Alkoxy-substituierten Silane und somit schneller an den Füllstoff anbinden können, so daß auf den Einsatz von Methoxy- und Ethoxy-Substituenten aus technischer und wirtschaftlicher Sicht bisher nicht verzichtet werden konnte.

Aus EP1394166 , JP 62-181346, DE 3426987 und EP 0085831 sind verschiedene Mercaptosilane bekannt.

Ferner sind aus DE 102005032658.7 polyethersubstituierte Mercaptosilane bekannt. Diese Silane werden synthetisiert, indem man Alkoxysilane mit einem alkoxylierten Alkohol katalysiert umsetzt.

Aus DE 102005052233 ist ein Verfahren zur Herstellung von Organosilanen durch Umsetzung von (Halogenorganyl)alkoxysilanen mit wasserhaltigen Schwefelungsreagentien bekannt.

Ferner ist aus JP 2005232354 die Verwendung von Mercaptosilanen mit partialen Estern von Maleinsäureanhydrid mit (Poly)oxypropylenderivaten in Kautschukmischungen bekannt.

Aus EP 1672017 sind Kautschukmischungen, enthaltend Kautschuk, Füllstoffe, gegebenenfalls weitere Kautschukhilfsmittel und mindestens ein Mercaptosilan bekannt.

Nachteil der bekannten alkoxysubstituierten und/oder alkylpolyethersubstituierten Mercaptosilane mit langkettigen Alkoxygruppen sind bei Verwendung in Kautschukmischungen die schlechten Verarbeitungseigenschaften und/oder dynamischen Eigenschaften bei reduzierter Alkoholemission oder die guten Verarbeitungseigenschaften und/oder dynamischen Eigenschaften bei einer erhöhten Alkoholemission.

Aufgabe der vorliegenden Erfindung ist es, Kopplungsreagentien zur Verfügung zu stellen, die in füllstoffverstärkten Gummimischungen zu mindestens gleichen Verarbeitungseigenschaften und/oder mindestens gleichen dynamischen Eigenschaften im Vergleich zu bekannten, z.B. alkylpolyetheralkoholsubstituierten Mercaptoorganylsilanen, bei reduzierter Alkoholemission, führen.

Gegenstand der Erfindung sind Gemische aus siliciumhaltigen Kopplungsreagentien, welche dadurch gekennzeichnet sind, dass diese
silanolgruppenhaltige (Mercaptoorganyl)alkylpolyethersilane und
silanolgruppenfreie (Mercaptoorganyl)alkylpolyethersilane in einem Gew.-Verhältnis von 5:95 bis 95:5, bevorzugt von 8:92 bis 92:8, besonders bevorzugt von 12:88 bis 88:12, ganz besonders bevorzugt von 17:83 bis 85:15 und außerordentlich bevorzugt von 25:75 bis 75:25, enthalten.

Silanolgruppenhaltige (Mercaptoorganyl)alkylpolyethersilane können Verbindungen der allgemeinen Formel I

(X)(X')(X'')Si-R^{I}-SH I

sein, wobei unabhängig voneinander
X eine Alkylpolyethergruppe O-((CR^{II}₂)_{w}-O-)ᵥ Alk, vorzugsweise 0- (CH₂-CH₂-O-)ᵥ Alk oder 0- (CH (CH₃) -CH₂-O-)ᵥ Alk, ist, mit
v = 1-40, bevorzugt 2-30, besonders bevorzugt 3-25, ganz besonders bevorzugt 4-20, außerordentlich bevorzugt 5-16,
w = 1-40, bevorzugt 2-30, besonders bevorzugt 2-20, ganz besonders bevorzugt 3-10,
R^{II} unabhängig voneinander H, eine Phenyl- oder eine unverzweigte oder verzweigte Alkylgruppe, vorzugsweise eine C₁-C₁₁ Alkylgruppe, besonders bevorzugt eine CH₃- oder CH₂-CH₃-Gruppe, ist,
Alk eine verzweigte oder unverzweigte, gesättigte oder ungesättigte, substituierte oder unsubstituierte, aliphatische, aromatische oder gemischt aliphatische /aromatische einbindige C₁-C₃₅ -, bevorzugt C₂-C₂₂ -, besonders bevorzugt C₃-C₁₈ -, ganz besonders bevorzugt C₄ - C₁₃ -, außerordentlich bevorzugt C₆-C₁₀ -, Kohlenwasserstoffgruppe ist,
X' ein verzweigtes oder unverzweigtes Alkyl, bevorzugt C₁-C₁₈ Alkyl-,besonders bevorzugt CH₃, CH₂-CH₃, CH(CH₃) -CH₃, CH₂-CH₂-CH₃ oder C₄-C₁₈- Alkyl,
ein verzweigtes oder unverzweigtes Alkoxy, bevorzugt C₁-C₁₈ Alkoxy-, besonders bevorzugt -OCH₃, -OCH₂-CH₃, -OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy, ein verzweigtes oder unverzweigtes C₂-C₂₅ Alkenyloxy-, vorzugsweise C₄-C₂₀ Alkenyloxy, besonders bevorzugt C₆ bis C₁₈ Alkenyloxy,
ein C₆-C₃₅ Aryloxy-, vorzugsweise C₉-C₃₀ Aryloxy, besonders bevorzugt Phenyloxy (-OC₆H₅) oder C₉ bis C₁₈ Aryloxy, eine verzweigte oder unverzweigte C₇-C₃₅ Alkylaryloxygruppe, vorzugsweise C₉-C₃₀ Alkylaryloxygruppe, besonders bevorzugt Benzyloxy-, (-O-CH₂-C₆H₅) oder -O-CH₂-CH₂-C₆H₅,
eine verzweigte oder unverzweigte C₇-C₃₅ Aralkyloxygruppe, vorzugsweise C₇-C₂₅ Aralkyloxygruppe, besonders bevorzugt Tolyloxy (-O-C₆H₄-CH₃) oder eine C₉ bis C₁₈ Aralkyloxygruppe, ein X oder eine Hydroxygruppe (-OH) ist,
X'' eine Hydroxygruppe (-OH) ist,
R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, ist.

Die Gemische aus siliciumhaltigen Kopplungsreagentien können > 5 Gew.-%, vorzugsweise > 25 Gew.-%, besonders bevorzugt > 40 Gew.-%, ganz besonders bevorzugt > 70 Gew.-%, außerordentlich bevorzugt > 90 Gew.-%,
silanolgruppenhaltige (Mercaptoorganyl)alkylpolyethersilane und
silanolgruppenfreie (Mercaptoorganyl)alkylpolyethersilane enthalten. Die Gemische aus siliciumhaltigen Kopplungsreagentien können im Wesentlichen aus silanolgruppenhaltigen
(Mercaptoorganyl)alkylpolyethersilanen und silanolgruppenfreien (Mercaptoorganyl)alkylpolyethersilanen bestehen.

Silanolgruppenfreie (Mercaptoorganyl)alkylpolyethersilane können Verbindungen der allgemeinen Formel II

(X) (X''') (X''') Si-R^{I}-SH II

sein, wobei unabhängig voneinander X und R^{I} die oben angegebenen Bedeutungen aufweisen und X''' unabhängig voneinander ein verzweigtes oder unverzweigtes Alkyl, bevorzugt C₁-C₁₈ Alkyl-,besonders bevorzugt CH₃, CH₂-CH₃, CH(CH₃)-CH₃, CH₂-CH₂-CH₃ oder C₄-C₁₈- Alkyl,
ein verzweigtes oder unverzweigtes Alkoxy, bevorzugt C₁-C₁₈ Alkoxy-, besonders bevorzugt -OCH₃, -OCH₂-CH₃, -OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy, ein verzweigtes oder unverzweigtes C₂-C₂₅ Alkenyloxy-, vorzugsweise C₄-C₂₀ Alkenyloxy, besonders bevorzugt C₆ bis C₁₈ Alkenyloxy,
ein C₆-C₃₅ Aryloxy-, vorzugsweise C₆-C₃₀ Aryloxy, besonders bevorzugt Phenyloxy (-OC₆H₅) oder C₉ bis C₁₈ Aryloxy,
eine verzweigte oder unverzweigte C₇-C₃₅ Alkylaryloxygruppe, vorzugsweise C₉-C₃₀ Alkylaryloxygruppe, besonders bevorzugt Benzyloxy-, (-O-CH₂-C₆H₅) oder -O-CH₂-CH₂-C₆H₅,
eine verzweigte oder unverzweigte C₇-C₃₅ Aralkyloxygruppe, vorzugsweise C₇-C₂₅ Aralkyloxygruppe, besonders bevorzugt Tolyloxy (-O-C₆H₄-CH₃) oder eine C₉ bis C₁₈ Aralkyloxygruppe, oder ein X ist.

Die Gruppe ((CR^{II}₂)_{w}-O-) kann Ethylenoxid- (CH₂-CH₂-O), Propylenoxid-, beispielsweise (CH(CH₃)-CH₂-O) oder (CH₂-CH(CH₃)-O), oder Butylenoxideinheiten, beispielsweise (-CH₂-CH₂-CH₂-CH₂-O), (-CH(CH₂-CH₃)-CH₂-O) oder (-CH₂-CH(CH₂-CH₃)-O), sein.

Die Gruppe O-(CR^{II}₂-CR^{II}₂-O)ᵥ kann bevorzugt sein:
0- (-CH₂-CH₂-O-) **a,**
0- (-CH (CH₃) -CH₂-O-)**a,**
O-(-CH₂-CH (CH₃) -O-) **a,**
O-(-CH₂-CH₂-O-)**a**(-CH(CH₃)-CH₂-O-)**,**
O- (-CH₂-CH₂-O-) (-CH (CH₃) -CH₂-O-)**a,**
0- (-CH₂-CH₂-O-) **a**(-CH₂-CH (CH₃) -O-),
0- (-CH₂-CH₂-O-) (-CH₂-CH (CH₃) -O-)**a,**
O- (-CH (CH₃) -CH₂-O-)**a**(-CH₂-CH (CH₃) -O-)**,**
0- (-CH (CH₃) -CH₂-O- (-CH₂-CH (CH₃) -O-) **a,**
0- (-CH₂-CH₂-O-) (-CH (CH₃) -CH₂-O-) **_{b}**(-CH₂-CH (CH₃) -O-) **_{c}** oder
Kombination miteinander,
wobei a + b + c = v ist.

Die Indexe a, b und c sind ganze Zahlen und bezeichnen die Anzahl der Wiederholeinheiten.

Die Alkylpolyethergruppe X mit 0- (CR^{II}₂-CR^{II}₂-O) ᵥ-Alk kann
O-(CH₂-CH₂O)₂-C₃H₇, O-(CH₂-CH₂O)₃-C₃H₇, O-(CH₂-CH₂O)₄-C₃H₇, O-(CH₂-CH₂O)₅-C₃H₇, O-(CH₂₋CH₂O)₆-C₃H₇, O-(CH₂-CH₂O) ₇-C₃H₇, O-(CH(CH₃)₋CH₂O)₂-C₃H₇, O-(CH(CH₃)-CH₂O) ₃-C₃H₇, O-(CH(CH₃)-CH₂O)₄-C₃H_{7,} O-(CH(CH₃)-CH₂O)-C₃H₇, O-(CH(CH₃)-CH₂O)₆-C₃H₇,
0- (CH₂-CH₂O) ₂-C₄H₉, 0- (CH₂-CH₂O)₃-C₄H₉, O-(CH₂-CH₂O)₄-C₄H₉, O-(CH₂-CH₂O)₅-C₄H₉, O-(CH₂-CH₂O)₆-C₄H₉, O-(CH₂-CH₂O)₇-C₄H₉, O-(CH(CH₃)-CH₂O)₂-C₄H₉, O-(CH(CH₃)-CH₂O)₃-C₄H₉, O-(CH(CH₃)-CH₂O)₄-C₄H₉, O-(CH(CH₃)-CH₂O)₅-C₄H₉, O-(CH(CH₃)-CH₂O)₆-C₄H₉,
O-(CH₂-CH₂O)₂-C₅H₁₁, O-(CH₂-CH₂O)₃-C₅H₁₁, O-(CH₂-CH₂O)₄-C₅H₁₁, O-(CH₂-CH₂O)₅-C₅H₁₁, O-(CH₂-CH₂O)₆-C₅H₁₁, O-(CH₂-CH₂O)₇-C₅H₁₁, O-(CH(CH₃)-CH₂O)₂-C₅H₁₁, O-(CH(CH₃)-CH₂O)₃-C₅H₁₁, O-(CH(CH₃)-CH₂O)₄-C₅H₁₁, O-(CH(CH₃)-CH₂O)₅-C₅H₁₁, O-(CH(CH₃)-CH₂O)₆-C₅H₁₁,
O-(CH₂-CH₂O)₂-C₆H₁₃, O-(CH₂-CH₂O)₃-C₆H₁₃, O-(CH₂-CH₂O)₄-C₆H_{13,} O-(CH₂-CH₂O)₅-C₆H₁₃, O-(CH₂-CH₂O)₆-C₆H_{13,} O-(CH₂-CH₂O)₇-C₆H_{13,} O-(CH(CH₃)-CH₂O)₂-C₆H_{13,} O-(CH(CH₃-CH₂O)₃-C₆H_{13,} O-(CH(CH₃)-CH₂O)₄-C₆H₁₃, O-(CH(CH₃)-CH₂O)₅-C₆H₁₃, O-(CH(CH₃)-CH₂O)₆-C₆H₁₃,
O-(CH₂-CH₂O) ₂-C₇H₁₅, O-(CH₂-CH₂O) ₃-C₇H₁₅, O-(CH₂-CH₂O) ₄-C₇H₁₅, O-(CH₂-CH₂O) ₅-C₇H₁₅, O-(CH₂-CH₂O) ₆-C₇H₁₅, O-(CH₂-CH₂O)₇-C₇H₁₅, O-(CH (CH₃)-CH₂O) ₂-C₇H₁₅, O-(CH(CH₃)-CH₂O)₃-C₇H₁₅, O-(CH(CH₃)-CH₂O)₄-C₇H₁₅, O-(CH(CH₃)-CH₂O)₅-C₇H₁₅, O-(CH(CH₃)-CH₂O)₆-C₇H₁₅,
O-(CH₂-CH₂O)₂-C₈H₁₇, O-(CH₂-CH₂O)₃-C₈H₁₇, O-(CH₂-CH₂O)₄-C₈H₁₇, O-(CH₂-CH₂O)₅-C₈H₁₇, O-(CH₂-CH₂O)₆-C₈H₁₇, O-(CH₂-CH₂O)₇-C₈H₁₇, O-(CH(CH₃₎-CH₂O)₂-C₈H₁₇, O-(CH(CH₃)-CH₂O)₃-C₈H₁₇, O-(CH(CH₃)-CH₂O)₄-C₈H₁₇, O-(CH(CH₃)-CH₂O)₅-C₈H₁₇,O-(CH(CH₃)-CH₂O)₆-C₈H₁₇,
O-(CH₂-CH₂O)₂-C₉H₁₉, O-(CH₂-CH₂O)₃-C₉H₁₉, O-(CH₂-CH₂O)₄-C₉H₁₉, O-(CH₂-CH₂O)₅-C₉H₁₉, O-(CH₂-CH₂O)₆-C₉H₁₉, O-(CH₂-CH₂O)₇-C₉H₁₉, O-(CH(CH₃)-CH₂O)₂-C₉H₁₉, O-(CH(CH₃)-CH₂O)₃-C₉H₁₉, O-(CH(CH₃)-CH₂O)₄-C₉H₁₉, O-(CH(CH₃)-CH₂O)₅-C₉H₁₉, O-(CH(CH₃)-CH₂O)₆-C₉H₁₉,
O- (CH₂-CH₂O) ₂-C₁₀H₂₁, 0- (CH₂-CH₂O) ₃-C₁₀H₂₁, 0- (CH₂-CH₂O) ₄-C₁₀H₂₁, O- (CH₂-CH₂O)₅-C₁₀H₂₁, 0- (CH₂-CH₂O)₆-C₁₀H₂₁, 0- (CH₂-CH₂O)₇-C₁₀H₂₁, 0- (CH (CH₃) -CH₂O)₂-C₁₀H₂₁, 0- (CH (CH₃) -CH₂O)₃-C₁₀H₂₁, 0- (CH (CH₃) - CH₂O)₄-C₁₀H₂₁, 0- (CH (CH₃) -CH₂O)₅-C₁₀H₂₁, 0- (CH (CH₃) -CH₂O)₆-C₁₀H₂₁,
O- (CH₂-CH₂O)₂-C₁₁H₂₃, 0- (CH₂-CH₂O)₃-C₁₁H₂₃, 0- (CH₂-CH₂O)₄-C₁₁H₂₃, O-(CH₂-CH₂O)₅-C₁₁H₂₃, 0- (CH₂-CH₂O)₆-C₁₁H₂₃, 0- (CH₂-CH₂O)₇-C₁₁H₂₃, O-(CH(CH₃)-CH₂O) ₂-C₁₁H₂₃, O-(CH(CH₃)-CH₂O)₃-C₁₁H₂₃, O-(CH(CH₃)-CH₂O)₄-C₁₁H₂₃, 0- (CH (CH₃) -CH₂O)₅-C₁₁H₂₃, 0- (CH (CH₃)-CH₂O) ₆-C₁₁H₂₃,
0- (CH₂-CH₂O)₂-C₁₂H₂₅, O-(CH₂-CH₂O)₃-C₁₂H₂₅, 0- (CH₂-CH₂O)₄-C₁₂H₂₅, O-(CH₂-CH₂O)₅-C₁₂H₂₅, 0- (CH₂-CH₂O)₆-C₁₂H₂₅, 0- (CH₂-CH₂O)₇-C₁₂H₂₅, O-(CH(CH₃)-CH₂O)₂-C₁₂H₂₅, O-(CH(CH₃)-CH₂O)₃-C₁₂H₂₅, O-(CH(CH₃)-CH₂O)₄-C₁₂H₂₅, 0- (CH (CH₃) -CH₂O)₅-C₁₂H₂₅,
0- (CH₂-CH₂O)₂-C₁₃H₂₇, 0- (CH₂-CH₂O)₃-C₁₃H₂₇, 0- (CH₂-CH₂O)₄-C₁₃H₂₇, O- (CH₂-CH₂O)₅-C₁₃H₂₇, 0- (CH₂-CH₂O)₆-C₁₃H₂₇, 0- (CH₂-CH₂O)₇-C₁₃H₂₇, O-(CH(CH₃)-CH₂O)₂-C₁₃H₂₇, O-(CH (CH₃)-CH₂O)₃-C₁₃H₂₇, O-(CH(CH₃)-CH₂O)₄-C₁₃H₂₇, 0- (CH (CH₃) -CH₂O)₅-C₁₃H₂₇,
0- (CH₂-CH₂O)₂-C₁₄H₂₉, 0- (CH₂-CH₂O)₃-C₁₄H₂₉, 0- (CH₂-CH₂O)₄-C₁₄H₂₉, 0- (CH₂-CH₂O)₅-C₁₄H₂₉, 0- (CH₂-CH₂O)₆-C₁₄H₂₉, 0- (CH₂-CH₂O)₇-C₁₄H₂₉, 0- (CH (CH₃) -CH₂O)₂-C₁₄H₂₉, 0- (CH (CH₃) -CH₂O)₃-C₁₄H₂₉, 0- (CH (CH₃)-CH₂O)₄-C₁₄H₂₉, 0- (CH (CH₃) -CH₂O)₅-C₁₄H₂₉,
0- (CH₂-CH₂O)₂-C₁₅H₃₁, 0- (CH₂-CH₂O) ₃-C₁₅H₃₁, O-(CH₂-CH₂O)₄-C₁₅H₃₁, 0- (CH₂-CH₂O)₅-C₁₅H₃₁, O- (CH₂-CH₂O)₆-C₁₅H₃₁, 0- (CH₂-CH₂O)₇-C₁₅H₃₁, O- (CH (CH₃) -CH₂O)₂-C₁₅H₃₁, 0- (CH (CH₃) -CH₂O)₃-C₁₅H₃₁, 0- (CH (CH₃)-CH₂O)₄-C₁₅H₃₁,
0- (CH₂-CH₂O)₂-C₁₆H₃₃, 0- (CH₂-CH₂O)₃-C₁₆H₃₃, 0- (CH₂-CH₂O)₄-C₁₆H₃₃, 0- (CH₂-CH₂O)₅-C₁₆H₃₃, 0- (CH₂-CH₂O)₆-C₁₆H₃₃,
   0- (CH (CH₃) -CH₂O)₂-C₁₆H₃₃, 0- (CH (CH₃) -CH₂O)₃-C₁₆H₃₃, 0- (CH (CH₃)-CH₂O)₄-C₁₆H₃₃,
O-(CH₂-CH₂O)₂-C₁₇H₃₅, 0- (CH₂-CH₂O)₃--C₁₇H₃₅, 0- (CH₂-CH₂O)₄-C₁₇H₃₅, 0- (CH₂-CH₂O)₅-C₁₇H₃₅, 0- (CH₂-CH₂O)₆-C₁₇H₃₅,
   0- (CH (CH₃) -CH₂O)₂-C₁₇H₃₅, 0- (CH (CH₃) -CH₂O)₃-C₁₇H₃₅, 0- (CH (CH₃)-CH₂O)₄-C₁₇H₃₅,
O- (CH₂-CH₂O) ₂-C₁₈H₃₇, 0- (CH₂-CH₂O) ₃-C₁₈H₃₇, 0- (CH₂-CH₂O) ₄-C₁₈H₃₇, 0- (CH₂-CH₂O) ₅-C₁₈H₃₇,
   0- (CH (CH₃) -CH₂O)₂-C₁₈H₃₇, 0- (CH (CH₃)-CH₂O) ₃-C₁₈H₃₇,
O-(CH₂-CH₂O)₂-C₆H₄-C₉H₁₉, O-(CH₂-CH₂O)₃-C₆H₄-C₉H₁₉, O-(CH₂-CH₂O)₄--C₆H₄-C₉H₁₉, O-(CH₂-CH₂O)₅-C₆H₄-C₉H₁₉, O- (CH₂-CH₂O)₆-C₆H₄-C₉H₁₉, 0- (CH₂-CH₂O)₇-C₆H₄-C₉H₁₉,
   0- (CH (CH₃) -CH₂O)₂-C₆H₄-C₉H₁₉, 0- (CH (CH₃) -CH₂O)₃-C₆H₄-C₉H₁₉ oder 0- (CH (CH₃) -CH₂O)₄-C₆H₄-C₉H₁₉ sein.

Die Alkylpolyethergruppe X mit 0- (CR^{TT}₂-CR^{TT}2-O) ᵥ-Alk kann für v = 5, R^{II} = H und Alk gleich C₁₃H₂₇ 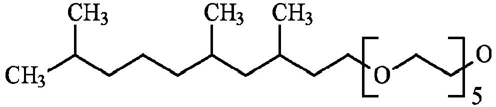 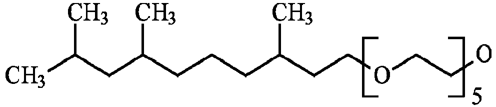 oder 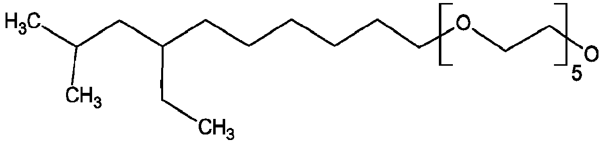 sein.

Die mittlere Verzweigungszahl der Kohlenstoffkette Alk kann 1 bis 5, vorzugsweise 1,2 bis 4, sein. Die mittlere Verzweigungszahl ist dabei definiert als die (Anzahl der CH₃-Gruppen)-1.

R^{I} kann -CH₂-, -CH₂CH₂-, -CH₂CH₂CH₂-, -CH₂CH₂CH₂CH₂-, -CH(CH₃)-, -CH₂CH(CH3)-, -CH(CH3)CH₂-, -C(CH₃)₂-_{,} -CH(C₂H₅) -, - CH₂CH₂CH (CH₃) -, -CH₂ (CH₃)CH₂CH₂-, -CH₂CH (CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH_{z}CH₂CH₂CH₂CH₂CH₂CH₂CH₂- oder 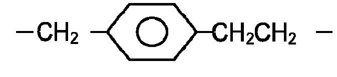 bedeuten.

Bevorzugte Verbindungen der allgemeinen Formel I können sein:
[[C₃H₇O-(CH₂-CH₂O)₂](Me)(HO)Si(CH₂)₃]-SH,
   [[C₃H₇O-(CH₂-CH₂O)₃](Me) (HO) Si(CH₂) ₃]-SH,
   [[C₃H₇O-(CH₂-CH₂O)₄](Me) (HO) Si(CH₂) ₃]-SH,
   [[C₃H₇O-(CH₂-CH₂O)₅](Me) (HO) Si(CH₂)₃]-SH,
   [[C₃H₇O-(CH₂-CH₂O)₆](Me) (HO) Si(CH₂)₃]-SH,
[[C₄H₉O-(CH₂-CH₂O)₂](Me) (HO) Si(CH₂)₃]-SH,
   [[C₄H₉O-(CH₂-CH₂O)₃](Me) (HO) Si(CH₂)₃]-SH,
   [[C₄H₉O-(CH₂-CH₂O)₄](Me) (HO)Si(CH₂)₃]-SH,
   [[C₄H₉O-(CH₂-CH₂O)₅](Me) (HO) Si(CH₂)₃]-SH,
   [[C₄H₉O-(CH₂-CH₂O)₆](Me) (HO) Si(CH₂)₃]-SH,
[[C₅H₁₁O-(CH₂-CH₂O)₂](Me) (HO) Si(CH₂)₃]-SH,
   [[C₅H₁₁O-(CH₂-CH₂O)₃](Me) (HO) Si(CH₂)₃]-SH,
   [[C₅H₁₁O-(CH₂-CH₂O)₄](Me) (HO)Si(CH₂)₃]-SH,
   [[C₅H₁₁O-(CH₂-CH₂O)₅](Me) (HO)Si(CH₂)₃]-SH,
   [[C₅H₁₁O-(CH₂-CH₂O)₆](Me) (HO) Si(CH₂)₃]-SH,
[[C₆H₁₃O-(CH₂-CH₂O)₂](Me) (HO) Si(CH₂)₃]-SH,
   [[C₆H₁₃O-(CH₂-CH₂O)₃](Me) (HO) Si(CH₂)₃]-SH,
   [[C₆H₁₃O-(CH₂-CH₂O)₄](Me) (HO) Si(CH₂) ₃]-SH,
   [[C₆H₁₃O-(CH₂-CH₂O)₅](Me) (HO) Si(CH₂)₃]-SH,
   [[C₆H₁₃O-(CH₂-CH₂O)₆](Me) (HO)Si(CH₂)-₃]-SH,
[[C₇H₁₅O-(CH₂-CH₂O)₂](Me) (HO)Si(CH₂)₃]-SH,
   [[C₇H₁₅O-(CH₂-CH₂O)₃](Me) (HO) Si(CH₂)₃]-SH,
   [[C₇H₁₅O-(CH₂-CH₂O)₄](Me) (HO)Si(CH₂)₃]-SH,
   [[C₇H₁₅O-(CH₂-CH₂O)₅](Me) (HO)Si(CH₂)₃]-SH,
   [[C₇H₁₅O-(CH₂-CH₂O)₆](Me) (HO) Si(CH₂)₃]-SH,
[[C₈H₁₇O-(CH₂-CH₂O)₂](Me) (HO) Si(CH₂) ₃]-SH,
   [[C₈H₁₇O-(CH₂-CH₂O)₃](Me) (HO) Si(CH₂)₃]-SH,
   [[C₈H₁₇O-(CH₂-CH₂O)₄](Me) (HO) Si(CH₂)₃]-SH,
   [[C₈H₁₇O-(CH₂-CH₂O)₅](Me) (HO) Si(CH₂)₃]-SH,
   [[C₈H₁₇O-(CH₂-CH₂O)₆](Me) (HO)Si(CH₂)₃]-SH,
[[C₉H₁₉O-(CH₂-CH₂O)₂](Me) (HO)Si(CH₂)₃]-SH,
   [[C₉H₁₉O-(CH₂-CH₂O)₃](Me)(HO) Si(CH₂)₃]-SH,
   [[C₉H₁₉O-(CH₂-CH₂O)₄](Me)(HO) Si(CH₂)₃]-SH,
   [[C₉H₁₉O-(CH₂-CH₂O)₅](Me)(HO) Si(CH₂)₃]-SH,
   [[C₉H₁₉O-(CH₂-CH₂O)₆](Me)(HO) Si(CH₂)₃]-SH,
[[C₁₀H₂₁O-(CH₂-CH₂O)₂](Me)(HO)Si(CH₂)₃]-SH,
   [[C₁₀H₂₁O-(CH₂-CH₂O)₃](Me)(HO)Si(CH₂)₃]-SH,
   [C₁₀H₂₁O-(CH₂-CH₂O)₄](Me)(HO) Si(CH₂)₃]-SH,
   [C₁₀H₂₁O-(CH₂-CH₂O)₅](Me)(HO) Si(CH₂)₃]-SH,
   [C₁₀H₂₁O-(CH₂-CH₂O)₆](Me)(HO) Si(CH₂)₃]-SH,
[[C₁₁H₂₃O-(CH₂-CH₂O)₂](Me)(HO) Si(CH₂)₃]-SH,
   [[C₁₁H₂₃O-(CH₂-CH₂O)₃](Me)(HO) Si(CH₂)₃]-SH,
   [[C₁₁H₂₃O-(CH₂-CH₂O)₄](Me)(HO) Si(CH₂)₃]-SH,
   [[C₁₁H₂₃O-(CH₂-CH₂O)₅](Me)(HO) Si(CH₂)₃]-SH,
   [[C₁₁H₂₃O-(CH₂-CH₂O)₆](Me)(HO) Si(CH₂)₃]-SH,
[[C₁₂H₂₅O-(CH₂-CH₂O)₂](Me)(HO) Si(CH₂)₃]-SH,
   [[C₁₂H₂₅O-(CH₂-CH₂O)₃](Me)(HO) Si(CH₂)₃]-SH,
   [[C₁₂H₂₅O-(CH₂-CH₂O)₄](Me)(HO) Si(CH₂)₃]-SH,
   [[C₁₂H₂₅O-(CH₂-CH₂O)₅](Me)(HO) Si(CH₂)₃]-SH,
   [[C₁₂H₂₅O-(CH₂-CH₂O)₆](Me)(HO) Si(CH₂)₃]-SH,
[[C₁₃H₂₇O-(CH₂-CH₂O)₂](Me)(HO) Si(CH₂)₃]-SH,
   [[C₁₃H₂₇O-(CH₂-CH₂O)₃](Me)(HO) Si(CH₂)₃]-SH,
   [[C₁₃H₂₇O-(CH₂-CH₂O)₄](Me) (HO) Si(CH₂)₃]-SH,
   [[C₁₃H₂₇O-(CH₂-CH₂O)₅](Me)(HO) Si(CH₂)₃]-SH,
   [[C₁₃H₂₇O-(CH₂-CH₂O)₆](Me)(HO) Si(CH₂)₃]-SH,
[[C₁₄H₂₉O-(CH₂-CH₂O)₂](Me) (HO)Si(CH₂)₃]-SH,
   [[C₁₄H₂₉O-(CH₂-CH₂O)₃](Me)(HO)Si(CH₂)₃]-SH,
   [[C₁₄H₂₉O-(CH₂-CH₂O)₄](Me)(HO)Si(CH₂)₃]-SH,
   [[C₁₄H₂₉O-(CH₂-CH₂O)₅](Me)(HO)Si(CH₂)₃]-SH,
   [[C₁₄H₂₉O-(CH₂-CH₂O)₆](Me)(HO)Si(CH₂)₃]-SH,
[[C₁₅H₃₁O-(CH₂-CH₂O)₂](Me)(HO) Si(CH₂)₃]-SH,
   [[C₁₅H₃₁O-(CH₂-CH₂O)₃](Me)(HO) Si(CH₂)₃]-SH,
   [[C₁₅H₃₁-O-(CH₂-CH₂O)₄](Me)(HO) Si(CH₂)₃]-SH,
   [[C₁₅H₃₁O-(CH₂-CH₂O)₅](Me)(HO) Si(CH₂)₃]-SH,
   [[C₁₅H₃₁O-(CH₂-CH₂O)₆](Me)(HO) Si(CH₂)₃]-SH,
[[C₁₆H₃₃O-(CH₂-CH₂O)₂](Me)(HO) Si(CH₂)₃]-SH,
   [[C₁₆H₃₃O-(CH₂-CH₂O)₃](Me)(HO)Si(CH₂)₃]-SH,
   [[C₁₆H₃₃O-(CH₂-CH₂O)₄](Me)(HO)Si(CH₂)₃]-SH,
   [[C₁₆H₃₃O-(CH₂-CH₂O)₅](Me)(HO)Si(CH₂)₃]-SH,
   [[C₁₆H₃₃O-(CH₂-CH₂O)₆](Me)(HO)Si(CH₂)₃]-SH,
[[C₁₇H₃₅O-(CH₂-CH₂O)₂](Me)(HO) Si(CH₂)₃]-SH,
   [[C₁₇H₃₅O-(CH₂-CH₂O)₃](Me)(HO) Si(CH₂)₃]-SH,
   [[C₁₇H₃₅O-(CH₂-CH₂O)₄](Me)(HO) Si(CH₂)₃]-SH,
   [[C₁₇H₃₅O-(CH₂-CH₂O)₅](Me)(HO)Si(CH₂)₃]-SH,
   [[C₁₇H₃₅O-(CH₂-CH₂O)₆](Me)(HO)Si(CH₂)₃]-SH,
[[C₁₈H₃₇O-(CH₂-CH₂O)₂](Me)(HO)Si(CH₂)₃]-SH,
   [[C₁₈H₃₇O-(CH₂-CH₂O)₃](Me)(HO) Si(CH₂)₃]-SH,
   [[C₁₈H₃₇O-(CH₂-CH₂O)₄](Me)(HO)Si(CH₂)₃]-SH,
   [[C₁₈H₃₇O-(CH₂-CH₂O)₅](Me)(HO)Si(CH₂)₃]-SH,
   [[C₁₈H₃₇O-(CH₂-CH₂O)₆](Me)(HO)Si(CH₂)₃]-SH,
[[C₃H₇O-(CH₂-CH₂O)₂](MeO)(HO) Si(CH₂)₃]-SH,
   [[C₃H₇O-(CH₂-CH₂O)₃](MeO)(HO)Si(CH₂)₃]-SH,
   [[C₃H₇O-(CH₂-CH₂O)₄](MeO)(HO)Si(CH₂)₃]-SH,
   [[C₃H₇O-(CH₂-CH₂O)₅](MeO)(HO) Si(CH₂)₃]-SH,
   [[C₃H₇O-(CH₂-CH₂O)₆](MeO)(HO)Si(CH₂)₃]-SH,
[[C₄H₉O-(CH₂-CH₂O)₂](MeO)(HO) Si(CH₂)₃]-SH,
   [[C₄H₉O-(CH₂-CH₂O)₃](MeO)(HO) Si(CH₂)₃]-SH,
   [[C₄H₉O-(CH₂-CH₂O)₄](MeO)(HO) Si(CH₂)₃]-SH,
   [[C₄H₉O-(CH₂-CH₂O)₅](MeO)(HO)Si(CH₂)₃]-SH,
   [[C₄H₉O-(CH₂-CH₂O)₆](MeO)(HO)Si(CH₂)₃]-SH,
[[C₅H₁₁O-(CH₂-CH₂O)₂](MeO)(HO)Si(CH₂)₃]-SH,
   [[C₅H₁₁O-(CH₂-CH₂O)₃](MeO)(HO)Si(CH₂)₃]-SH,
   [[C₅H₁₁O-(CH₂-CH₂O)₄](MeO)(HO)Si(CH₂)₃]-SH,
   [[C₅H₁₁O-(CH₂-CH₂O)₅](MeO)(HO)Si (CH₂)₃]-SH,
   [[C₅H₁₁O-(CH₂-CH₂O)₆](MeO)(HO)Si (CH₂)₃]-SH,
[[C₆H₁₃O-(CH₂-CH₂O)₂](MeO)(HO)Si(CH₂)₃]-SH,
   [[C₆H₁₃O-(CH₂-CH₂O)₃](MeO)(HO)Si (CH₂)₃]-SH,
   [[C₆H₁₃O-(CH₂-CH₂O)₄](MeO)(HO)Si(CH₂)₃]-SH,
   [[C₆H₁₃O-(CH₂-CH₂O)₅](MeO)(HO)Si(CH₂)₃]-SH,
   [[C₆H₁₃O-(CH₂-CH₂O)₆](MeO)(HO)Si(CH₂)₃]-SH,
[[C₇H₁₅O-(CH₂-CH₂O)₂](MeO)(HO)Si(CH₂)₃]-SH,
   [[C₇H₁₅O-(CH₂-CH₂O)₃](MeO)(HO)Si(CH₂)₃]-SH,
   [[C₇H₁₅O-(CH₂-CH₂O)₄](MeO)(HO)Si(CH₂)₃]-SH,
   [[C₇H₁₅O-(CH₂-CH₂O)₅](MeO)(HO)Si(CH₂)₃]-SH,
   [[C₇H₁₅O-(CH₂-CH₂O)₆](MeO)(HO)Si(CH₂)₃]-SH,
[[C₈H₁₇O-(CH₂-CH₂O)₂](MeO)(HO)Si(CH₂)₃]-SH,
   [[C₈H₁₇O-(CH₂-CH₂O)₃](MeO)(HO)Si(CH₂)₃]-SH,
   [[C₈H₁₇O-(CH₂-CH₂O)₄](MeO)(HO)Si(CH₂)₃]-SH,
   [[C₈H₁₇O-(CH₂-CH₂O)₅](MeO)(HO)Si(CH₂)₃]-SH,
   [[C₈H₁₇O-(CH₂-CH₂O)₆](MeO)(HO)Si(CH₂)₃]-SH,
[[C₉H₁₉O-(CH₂-CH₂O)₂](MeO)(HO)Si(CH₂)₃]-SH,
   [[C₉H₁₉O-(CH₂-CH₂O)₃](MeO)(HO)Si(CH₂)₃]-SH,
   [[C₉H₁₉O-(CH₂-CH₂O)₄](MeO)(HO)Si(CH₂)₃]-SH,
   [[C₉H₁₉O-(CH₂-CH₂O)₅](MeO)(HO)Si(CH₂)₃]-SH,
   [[C₉H₁₉O-(CH₂-CH₂O)₆](MeO)(HO)Si(CH₂)₃]-SH,
[[C₁₀H₂₁O-(CH₂-CH₂O)₂](MeO)(HO)Si(CH₂)₃]-SH,
   [[C₁₀H₂₁O-(CH₂-CH₂O)₃](MeO)(HO)Si(CH₂)₃]-SH,
   [[C₁₀H₂₁O-(CH₂-CH₂O)₄](MeO)(HO)Si(CH₂)₃]-SH,
   [[C₁₀H₂₁-O-(CH₂-CH₂O)₅](MeO)(HO)Si(CH₂)₃]-SH,
   [[C₁₀H₂₁-O-(CH₂-CH₂O)₆](MeO)(HO)Si(CH₂)₃]-SH,
[[C₁₁H₂₃O-(CH₂-CH₂O)₂](MeO)(HO)Si(CH₂)₃]-SH,
   [[C₁₁H₂₃O-(CH₂-CH₂O)₃](MeO)(HO)Si(CH₂)₃]-SH,
   [[C₁₁H₂₃O-(CH₂-CH₂O)₄](MeO)(HO)Si(CH₂)₃]-SH,
   [[C₁₁H₂₃O-(CH₂-CH₂O)₅](MeO)(HO)Si(CH₂)₃]-SH,
   [[C₁₁H₂₃O-(CH₂-CH₂O)₆](MeO)(HO)Si(CH₂)₃]-SH,
[[C₁₂H₂₅O-(CH₂-CH₂O)₂](MeO)(HO)Si(CH₂)₃]-SH,
   [[C₁₂H₂₅O-(CH₂-CH₂O)₃](MeO)(HO)Si(CH₂)₃]-SH,
   [[C₁₂H₂₅O-(CH₂-CH₂O)₄](MeO)(HO)Si(CH₂)₃]-SH,
   [[C₁₂H₂₅O-(CH₂-CH₂O)₅](MeO)(HO)Si(CH₂)₃]-SH,
   [[C₁₂H₂₅O-(CH₂-CH₂O)₆](MeO)(HO)Si(CH₂)₃]-SH,
[[C₁₃H₂₇O-(CH₂-CH₂O)₂](MeO)(HO)Si(CH₂)₃]-SH,
   [[C₁₃H₂₇O-(CH₂-CH₂O)₃](MeO)(HO)Si(CH₂)₃]-SH,
   [[C₁₃H₂₇O-(CH₂-CH₂O)₄](MeO)(HO)Si(CH₂)₃]-SH,
   [[C₁₃H₂₇O-(CH₂-CH₂O)₅](MeO)(HO)Si(CH₂)₃]-SH,
   [[C₁₃H₂₇O-(CH₂-CH₂O)₆](MeO)(HO)Si(CH₂)₃]-SH,
[[C₁₄H₂₉O-(CH₂-CH₂O)₂](MeO)(HO)Si(CH₂)₃]-SH,
   [[C₁₄H₂₉O-(CH₂-CH₂O)₃](MeO)(HO)Si(CH₂)₃]-SH,
   [[C₁₄H₂₉O-(CH₂-CH₂O)₄](MeO)(HO)Si(CH₂)₃]-SH,
   [[C₁₄H₂₉O-(CH₂-CH₂O)₅](MeO)(HO)Si(CH₂)₃]-SH,
   [[C₁₄H₂₉O-(CH₂-CH₂O)₆](MeO)(HO)Si(CH₂)₃]-SH,
[[C₁₆H₃₃O-(CH₂-CH₂O)₂](MeO)(HO)Si(CH₂)₃]-SH,
   [[C₁₆H₃₃O-(CH₂-CH₂O)₃](MeO)(HO)Si(CH₂)₃]-SH,
   [[C₁₆H₃₃O-(CH₂-CH₂O)₄](MeO)(HO)Si(CH₂)₃]-SH,
   [[C₁₆H₃₃O-(CH₂-CH₂O)₅](MeO)(HO)Si(CH₂)₃]-SH,
   [[C₁₆H₃₃O-(CH₂-CH₂O)₆](MeO)(HO)Si(CH₂)₃]-SH,
[[C₁₈H₃₇O-(CH₂-CH₂O)₂](MeO)(HO)Si(CH₂)₃]-SH,
   [[C₁₈H₃₇O-(CH₂-CH₂O)₃](MeO)(HO)Si(CH₂)₃]-SH,
   [[C₁₈H₃₇O-(CH₂-CH₂O)₄](MeO)(HO)Si(CH₂)₃]-SH,
   [[C₁₈H₃₇O-(CH₂-CH₂O)₅](MeO)(HO)Si(CH₂)₃]-SH,
   [[C₁₈H₃₇O-(CH₂-CH₂O)₆](MeO)(HO)Si(CH₂)₃]-SH,
[[C₃H₇O-(CH₂-CH₂O)₂]₂(HO)Si(CH₂)₃]-SH,
   [[C₃H₇O-(CH₂-CH₂O)₃]₂(HO)Si(CH₂)₃]-SH,
   [[C₃H₇O-(CH₂-CH₂O)₄]₂(HO)Si(CH₂)₃]-SH,
   [[C₃H₇O-(CH₂-CH₂O)₅]₂(HO)Si(CH₂)₃]-SH,
   [[C₃H₇O-(CH₂-CH₂O)₆]₂(HO)Si(CH₂)₃]-SH,
[[C₄H₉O-(CH₂-CH₂O)₂]2(HO)Si(CH)₃]-SH,
   [[C₄H₉O-(CH₂-CH₂O)₃]₂(HO)Si(CH₂)₃]-SH,
   [[C₄H₉O-(CH₂-CH₂O)₄]₂(HO)Si(CH₂)₃]-SH,
   [[C₉H₉O-(CH₂-CH₂O)₅]₂(HO)Si(CH₂)₃]-SH,
   [[C₄H₉O-(CH₂-CH₂O)₆]2(HO)Si(CH₂)₃]-SH,
[[C₅H₁₁O-(CH₂-CH₂O)₂]₂(HO)Si(CH₂)₃]-SH,
   [[C₅H₁₁O-(CH₂-CH₂O)₃]2(HO)Si(CH₂)₃]-SH,
   [[C₅H₁₁O-(CH₂-CH₂O)₄]₂(HO)Si(CH₂)₃]-SH,
   [[C₅H₁₁O-(CH₂-CH₂O)₅]₂(HO)Si(CH₂)₃]-SH,
   [[C₅H₁₁O-(CH₂-CH₂O)₆]₂(HO)Si(CH₂)₃]-SH,
[[C₆H₁₃O-(CH₂-CH₂O)₂]₂(HO)Si(CH₂)₃]-SH,
   [[C₆H₁₃O-(CH₂-CH₂O)₃]₂(HO)Si(CH₂)₃]-SH,
   [[C₆H₁₃O-(CH₂-CH₂O)₄]₂(HO)Si(CH₂)₃]-SH,
   [[C₆H₁₃O-(CH₂-CH₂O)₅]₂(HO)Si(CH₂)₃]-SH,
   [[C₆H₁₃O-(CH₂-CH₂O)₆]₂(HO)Si(CH₂)₃]-SH,
[[C₇H₁₅O-(CH₂-CH₂O)₂]₂(HO)Si(CH₂)₃]-SH,
   [[C₇H₁₅O-(CH₂-CH₂O)₃]₂(HO)Si(CH₂)₃]-SH,
   [[C₇H₁₅O-(CH₂-CH₂O)₄]₂(HO)Si(CH₂)₃]-SH,
   [[C₇H₁₅O-(CH₂-CH₂O)₅]₂₂(HO)Si(CH₂)₃]-SH,
   [[C₇H₁₅O-(CH₂-CH₂O)₆]₂(HO)Si(CH₂)₃]-SH,
[[C₈H₁₇O-(CH₂-CH₂O)₂]₂(HO)Si(CH₂)₃]-SH,
   [[C₈H₁₇O-(CH₂-CH₂O)₃]₂(HO)Si(CH₂)₃]-SH,
   [[C₈H₁₇O-(CH₂-CH₂O)₄]₂(HO)Si(CH₂)₃]-SH,
   [[C₈H₁₇O-(CH₂-CH₂O)₅]₂(HO)Si(CH₂)₃]-SH,
   [[C₈H₁₇O-(CH₂-CH₂O)₆]₂(HO)Si(CH₂)₃]-SH,
[[C₉H₁₉O-(CH₂-CH₂O)₂]₂(HO)Si(CH₂)₃]-SH,
   [[C₉H₁₉O-(CH₂-CH₂O)₃]₂(HO)Si(CH₂)₃]-SH,
   [[C₉H₁₉O-(CH₂-CH₂O)₄]₂(HO)Si(CH₂)₃]-SH,
   [[C₉H₁₉O-(CH₂-CH₂O)₅]₂(HO)Si(CH₂)₃]-SH,
   [[C₉H₁₉O-(CH₂-CH₂O)₆]₂(HO)Si(CH₂)₃]-SH,
[[C₁₀H₂₁O-(CH₂-CH₂O)₂]₂(HO)Si(CH₂)₃]-SH,
   [[C₁₀H₂₁O-(CH₂-CH₂O)₃]₂(HO)Si(CH₂)₃]-SH,
   [[C₁₀H₂₁O-(CH₂-CH₂O)₄]₂(HO)Si(CH₂)₃]-SH,
   [[C₁₀H₂O-(CH₂-CH₂O)₅]₂(HO)Si(CH₂)₃]-SH,
   [[C₁₀H₂₁O-(CH₂-CH₂O)₆]₂(HO)Si(CH₂)₃]-SH,
[[C₁₁H₂₃O-(CH₂-CH₂O)₂]₂(HO)Si(CH₂)₃]-SH,
   [[C₁₁H₂₃O-(CH₂-CH₂O)₃]₂(HO)Si(CH₂)₃]-SH,
   [[C₁₁H₂₃O-(CH₂-CH₂O)₄]₂(HO)Si(CH₂)₃]-SH,
   [[C₁₁H₂₃O-(CH₂-CH₂O)₅]₂(HO)Si(CH₂)₃]-SH,
   [[C₁₁H₂₃O-(CH₂-CH₂O)₆]₂(HO)Si(CH₂)₃]-SH,
[[C₁₂H₂₅O-(CH₂-CH₂O)₂]₂(HO)Si(CH₂)₃]-SH,
   [[C₁₂H₂₅O-(CH₂-CH₂O)₃]₂(HO)Si(CH₂)₃]-SH,
   [[C₁₂H₂₅O-(CH₂-CH₂O)₄]₂(HO)Si(CH₂)₃]-SH,
   [[C₁₂H₂₅O-(CH₂-CH₂O)₅]₂(HO)Si(CH₂)₃]-SH,
   [[C₁₂H₂₅O-(CH₂-CH₂O)₆]₂(HO)Si(CH₂)₃]-SH,
[[C₁₃H₂₇O-(CH₂-CH₂O)₂]₂(HO)Si(CH₂)₃]-SH,
   [[C₁₃H₂₇O-(CH₂-CH₂O)₃]₂(HO)Si(CH₂)₃]-SH,
   [[C₁₃H₂₇O-(CH₂-CH₂O)₄]₂(HO)Si(CH₂)₃]-SH,
   [[C₁₃H₂₇O-(CH₂-CH₂O)₅]₂(HO)Si(CH₂)₃]-SH,
   [[C₁₃H₂₇O-(CH₂-CH₂O)₆]₂(HO)Si(CH₂)₃]-SH,
[[C₁₄H₂₉O-(CH₂-CH₂O)₂]₂(HO)Si(CH₂)₃]-SH,
   [[C₁₄H₂₉O-(CH₂-CH₂O)₃]₂(HO)Si(CH₂)₃]-SH,
   [[C₁₄H₂₉O-(CH₂-CH₂O)₄]₂(HO)Si(CH₂)₃]-SH,
   [[C₁₄H₂₉O-(CH₂-CH₂O)₅]₂(HO)Si(CH₂)₃]-SH,
   [[C₁₄H₂₉O-(CH₂-CH₂O)₆]₂(HO)Si(CH₂)₃]-SH,
[[C₁₆H₃₃O-(CH₂-CH₂O)₂]₂(HO)Si(CH₂)₃]-SH,
   [[C₁₆H₃₃O-(CH₂-CH₂O)₃]₂(HO)Si(CH₂)₃]-SH,
   [[C₁₆H₃₃O-(CH₂-CH₂O)₄]₂(HO)Si(CH₂)₃]-SH,
   [[C₁₆H₃₃O-(CH₂-CH₂O)₅]2(HO)Si(CH₂)₃]-SH,
   [[C₁₆H₃₃O-(CH₂-CH₂O)₆]2(HO)Si(CH₂)₃]-SH,
[[C₁₈H₃₇O-(CH₂-CH₂O)₂]₂(HO)Si(CH₂)₃]-SH,
   [[C₁₈H₃₇O-(CH₂-CH₂O)₃]₂(HO)Si(CH₂)₃]-SH,
   [[C₁₈H₃₇O-(CH₂-CH₂O)₄]₂(HO)Si(CH₂)₃]-SH,
   [[C18H₃₇O-(CH₂-CH₂O)₅]₂(HO)Si(CH₂)₃]-SH,
   [[C₁₈H₃₇O-(CH₂-CH₂O)₆]₂(HO)Si(CH₂)₃]-SH,
[[C₃H₇O-(CH₂-CH₂O)₂](EtO)(HO)Si(CH₂)₃]-SH,
   [[C₃H₇O-(CH₂-CH₂O)₃](EtO)(HO)Si(CH₂)₃]-SH,
   [[C₃H₇O-(CH₂-CH₂O)₄](EtO)(HO)Si(CH₂)₃]-SH,
   [[C₃H₇O-(CH₂-CH₂O)₅](EtO)(HO)Si(CH₂)₃]-SH,
   [[C₃H₇O-(CH₂-CH₂O)₆](EtO)(HO)Si(CH₂)₃]-SH,
[[C₄H₉O-(CH₂-CH₂O)₂](EtO)(HO)Si(CH₂)₃]-SH,
   [[C₄H₉O-(CH₂-CH₂O)₃](EtO)(HO)Si(CH₂)₃]-SH,
   [[C₄H₉O-(CH₂-CH₂O)₄](EtO)(HO)Si(CH₂)₃]-SH,
   [[C₄H₉O-(CH₂-CH₂O)₅](EtO)(HO)Si(CH₂)₃]-SH,
   [[C₄H₉O-(CH₂-CH₂O)₆](EtO)(HO)Si(CH₂)₃]-SH,
[[C₅H₁₁O-(CH₂-CH₂O)₂](EtO)(HO)Si(CH₂)₃]-SH,
   [[C₅H₁₁O-(CH₂-CH₂O)₃](EtO)(HO)Si(CH₂)₃]-SH,
   [[C₅H₁₁O-(CH₂-CH₂O)₄](EtO)(HO)Si(CH₂)₃]-SH,
   [[C₅H₁₁O-(CH₂-CH₂O)₅](EtO)(HO)Si(CH₂)₃]-SH,
   [[C₅H₁₁O-(CH₂-CH₂O)₆](EtO)(HO)Si(CH₂)₃]-SH,
[[C₆H₁₃O-(CH₂-CH₂O)₂](EtO)(HO)Si(CH₂)₃]-SH,
   [[C₆H₁₃O-(CH₂-CH₂O)₃](EtO)(HO)Si(CH₂)₃]-SH,
   [[C₆H₁₃O-(CH₂-CH₂O)₄](EtO)(HO)Si(CH₂)₃]-SH,
   [[C₆H₁₃O-(CH₂-CH₂O)₅](EtO)(HO)Si(CH₂)₃]-SH,
   [[C₆H₁₃O-(CH₂-CH₂O)₆](EtO)(HO)Si(CH₂)₃]-SH,
[[C₇H₁₅O-(CH₂-CH₂O)₂](EtO)(HO)Si(CH₂)₃]-SH,
   [[C₇H₁₅O-(CH₂-CH₂O)₃](EtO)(HO)Si(CH₂)₃]-SH,
   [[C₇H₁₅O-(CH₂-CH₂O)₄](EtO)(HO)Si(CH₂)₃]-SH,
   [[C₇H₁₅O-(CH₂-CH₂O)₅](EtO)(HO)Si(CH₂)₃]-SH,
   [[C₇H₁₅O-(CH₂-CH₂O)₆](EtO)(HO)Si(CH₂)₃]-SH,
[[C₈H₁₇O-(CH₂-CH₂O)₂](EtO)(HO)Si(CH₂)₃]-SH,
   [[C₈H₁₇O-(CH₂-CH₂O)₃](EtO)(HO)Si(CH₂)₃]-SH,
   [[C₈H₁₇O-(CH₂-CH₂O)₄](EtO)(HO)Si(CH₂)₃]-SH,
   [[C₈H₁₇O-(CH₂-CH₂O)₅](EtO)(HO)Si(CH₂)₃]-SH,
   [[C₈H₁₇O-(CH₂-CH₂O)₆](EtO)(HO)Si(CH₂)₃]-SH,
[[C₉H₁₉O-(CH₂-CH₂O)₂](EtO)(HO)Si(CH₂)₃]-SH,
   [[C₉H₁₉O-(CH₂-CH₂O)₃](EtO)(HO)Si(CH₂)₃]-SH,
   [[C₉H₁₉O-(CH₂-CH₂O)₄](EtO)(HO)Si(CH₂)₃]-SH,
   [[C₉H₁₉O-(CH₂-CH₂O)₅](EtO)(HO)Si(CH₂)₃]-SH,
   [[C₉H₁₉O-(CH₂-CH₂O)₆](EtO)(HO)Si(CH₂)₃]-SH,
[[C₁₀H₂₁-O-(CH₂-CH₂O)₂](EtO)(HO)Si(CH₂)₃]-SH,
   [[C₁₀H₂₁-O-(CH₂-CH₂O)₃](EtO)(HO)Si(CH₂)₃]-SH,
   [C₁₀H₂₁O-(CH₂-CH₂O)₄](EtO)(HO)Si(CH₂)₃]-SH,
   [[C₁₀H₂₁O-(CH₂-CH₂O)₅](EtO)(HO)Si(CH₂)₃]-SH,
   [C₁₀H₂₁O-(CH₂-CH₂O)₆](EtO)(HO)Si(CH₂)₃]-SH,
[[C₁₁H₂₃O-(CH₂-CH₂O)₂](EtO)(HO)Si(CH₂)₃]-SH,
   [[C₁₁H₂₃O-(CH₂-CH₂O)₃](EtO)(HO)Si(CH₂)₃]-SH,
   [[C₁₁H₂₃O-(CH₂-CH₂O)₄](EtO)(HO)Si(CH₂)₃]-SH,
   [[C₁₁H₂₃O-(CH₂-CH₂O)₅](EtO)(HO)Si(CH₂)₃]-SH,
   [[C₁₁H₂₃O-(CH₂-CH₂O)₆](EtO)(HO)Si(CH₂)₃]-SH,
[[C₁₂H₂₅O-(CH₂-CH₂O)₂](EtO)(HO)Si(CH₂)₃]-SH,
   [[C₁₂H₂₅O-(CH₂-CH₂O)₃](EtO)(HO)Si(CH₂)₃]-SH,
   [[C₁₂H₂₅O-(CH₂-CH₂O)₄](EtO)(HO)Si(CH₂)₃]-SH,
   [[C₁₂H₂₅O-(CH₂-CH₂O)₅](EtO)(HO)Si(CH₂)₃]-SH,
   [[C₁₂H₂₅O-(CH₂-CH₂O)₆](EtO)(HO)Si(CH₂)₃]-SH,
[[C₁₃H₂₇O-(CH₂-CH₂O)₂](EtO)(HO)Si(CH₂)₃]-SH,
   [[C₁₃H₂₇O-(CH₂-CH₂O)₃](EtO)(HO)Si(CH₂)₃]-SH,
   [[C₁₃H₂₇O-(CH₂-CH₂O)₄](EtO)(HO)Si(CH₂)₃]-SH,
   [[C₁₃H₂₇O-(CH₂-CH₂O)₅](EtO)(HO)Si(CH₂)₃]-SH,
   [[C₁₃H₂₇O-(CH₂-CH₂O)₆](EtO)(HO)Si(CH₂)₃]-SH,
[[C₁₄H₂₉O-(CH₂-CH₂O)₂](EtO)(HO)Si(CH₂)₃]-SH,
   [[C₁₄H₂₉O-(CH₂-CH₂O)₃](EtO)(HO)Si(CH₂)₃]-SH,
   [[C₁₄H₂₉O-(CH₂-CH₂O)₄](EtO)(HO)Si(CH₂)₃]-SH,
   [[C₁₄H₂₉O-(CH₂-CH₂O)₅](EtO)(HO)Si(CH₂)₃]-SH,
   [[C₁₄H₂₉O-(CH₂-CH₂O)₆](EtO)(HO)Si(CH₂)₃]-SH,
[[C₁₆H₃₃O-(CH₂-CH₂O)₂](EtO)(HO)Si(CH₂)₃]-SH,
   [[C₁₆H₃₃O-(CH₂-CH₂O)₃](EtO)(HO)Si(CH₂)₃]-SH,
   [[C₁₆H₃₃O-(CH₂-CH₂O)₄](EtO)(HO)Si(CH₂)₃]-SH,
   [[C₁₆H₃₃O-(CH₂-CH₂O)₅](EtO)(HO)Si(CH₂)₃]-SH,
   [[C₁₆H₃₃O-(CH₂-CH₂O)₆](EtO)(HO)Si(CH₂)₃]-SH,
[[C₁₇H₃₅O-(CH₂-CH₂O)₂](EtO)(HO)Si(CH₂)₃]-SH,
   [[C₁₇H₃₅O-(CH₂-CH₂O)₃](EtO)(HO)Si(CH₂)₃]-SH,
   [[C₁₇H₃₅O-(CH₂-CH₂O)₄](EtO)(HO)Si (CH₂)₃]-SH,
   [[C₁₇H₃₅O-(CH₂-CH₂O)₅](EtO)(HO)Si(CH₂)₃]-SH,
   [[C₁₇H₃₅O-(CH₂-CH₂O)₆](EtO)(HO)Si(CH₂)₃]-SH,
[[C₁₈H₃₇O-(CH₂-CH₂O)₂](EtO)(HO)Si(CH₂)₃]-SH,
   [[C₁₈H₃₇O-(CH₂-CH₂O)₃](EtO)(HO)Si(CH₂)₃]-SH,
   [[C₁₈H₃₇O-(CH₂-CH₂O)₄](EtO)(HO)Si(CH₂)₃]-SH,
   [[C₁₈H₃₇O-(CH₂-CH₂O)₅](EtO)(HO)Si(CH₂)₃]-SH,
   [[C₁₈H₃₇O-(CH₂-CH₂O)₆](EtO)(HO)Si(CH₂)₃]-SH,
[[C₃H₇O-(CH₂-CH₂O)₂](HO)₂Si(CH₂)₃]-SH,
   [[C₃H₇O-(CH₂-CH₂O)₃](HO)₂Si(CH₂)₃]-SH,
   [[C₃H₇O-(CH₂-CH₂O)₄](HO)₂Si(CH₂)₃]-SH,
   [[C₃H₇O-(CH₂-CH₂O)₅](HO)₂Si(CH₂)₃]-SH,
   [[C₃H₇O-(CH₂-CH₂O)₆](HO)₂Si(CH₂)₃]-SH,
[[C₄H₉O-(CH₂-CH₂O)₂](HO)₂Si(CH₂)₃]-SH,
   [[C₄H₉O-(CH₂-CH₂O)₃](HO)₂Si(CH₂)₃]-SH,
   [[C₄H₉O-(CH₂-CH₂O)₄](HO)₂Si(CH₂)₃]-SH,
   [[C₄H₉O-(CH₂-CH₂O)₅](HO)₂Si(CH₂)₃]-SH,
   [[C₄H₉O-(CH₂-CH₂O)₆](HO)₂Si(CH₂)₃]-SH,
[[C₅H₁₁O-(CH₂-CH₂O)₂](HO)₂Si(CH₂)₃]-SH,
   [[C₅H₁₁O-(CH₂-CH₂O)₃](HO)₂Si(CH₂)₃]-SH,
   [[C₅H₁₁O-(CH₂-CH₂O)₄](HO)₂Si(CH₂)₃]-SH,
   [[C₅H₁₁O-(CH₂-CH₂O)₅](HO)₂Si(CH₂)₃]-SH,
   [[C₅H₁₁O-(CH₂-CH₂O)₆](HO)₂Si(CH₂)₃]-SH,
[[C₆H₁₃O-(CH₂-CH₂O)₂](HO)₂Si(CH₂)₃]-SH,
   [[C₆H₁₃O-(CH₂-CH₂O)₃](HO)₂Si(CH₂)₃]-SH,
   [[C₆H₁₃O-(CH₂-CH₂O)₄](HO)₂Si(CH₂)₃]-SH,
   [[C₆H₁₃O-(CH₂-CH₂O)₅](HO)₂Si(CH₂)₃]-SH,
   [[C₆H₁₃O-(CH₂-CH₂O)₆](HO)₂Si(CH₂)₃]-SH,
[[C₇H₁₅O-(CH₂-CH₂O)₂](HO)₂Si(CH₂)₃]-SH,
   [[C₇H₁₅O-(CH₂-CH₂O)₃](HO)₂Si(CH₂)₃]-SH,
   [[C₇H₁₅O-(CH₂-CH₂O)₄](HO)₂Si(CH₂)₃]-SH,
   [[C₇H₁₅O-(CH₂-CH₂O)₅](HO)₂Si(CH₂)₃]-SH,
   [[C₇H₁₅O-(CH₂-CH₂O)₆](HO)₂Si(CH₂)₃]-SH,
[[C₈H₁₇O-(CH₂-CH₂O)₂](HO)₂Si(CH₂)₃]-SH,
   [[C₈H₁₇O-(CH₂-CH₂O)₃](HO)₂Si(CH₂)₃]-SH,
   [[C₈H₁₇O-(CH₂-CH₂O)₄](HO)₂Si(CH₂)₃]-SH,
   [[C₈H₁₇O-(CH₂-CH₂O)₅](HO)₂Si(CH₂)₃]-SH,
   [[C₈H₁₇O-(CH₂-CH₂O)₆](HO)₂Si(CH₂)₃]-SH,
[[C₉H₁₉O-(CH₂-CH₂O)₂](HO)₂Si(CH₂)₃]-SH,
   [[C₉H₁₉O-(CH₂-CH₂O)₃](HO)₂Si(CH₂)₃]-SH,
   [[C₉H₁₉O-(CH₂-CH₂O)₄](HO)₂Si(CH₂)₃]-SH,
   [[C₉H₁₉O-(CH₂-CH₂O)₅](HO)₂Si(CH₂)₃]-SH,
   [[C₉H₁₉O-(CH₂-CH₂O)₆](HO)₂Si(CH₂)₃]-SH,
[[C₁₀H₂₁O-(CH₂-CH₂O)₂](HO)₂Si(CH₂)₃]-SH,
   [[C₁₀H₂₁O-(CH₂-CH₂O)₃](HO)₂Si(CH₂)₃]-SH,
   [[C₁₀H₂₁O-(CH₂-CH₂O)₄](HO)₂Si(CH₂)₃]-SH,
   [[C₁₀H₂₁O-(CH₂-CH₂O)₅](HO)₂Si(CH₂)₃]-SH,
   [[C₁₀H₂₁O-(CH₂-CH₂O)₆](HO)₂Si(CH₂)₃]-SH,
[[C₁₁H₂₃O-(CH₂-CH₂O)₂](HO)₂Si(CH₂)₃]-SH,
   [[C₁₁H₂₃O-(CH₂-CH₂O)₃](HO)₂Si(CH₂)₃]-SH,
   [[C₁₁H₂₃O-(CH₂-CH₂O)₄](HO)₂Si(CH₂)₃]-SH,
   [[C₁₁H₂₃O-(CH₂-CH₂O)₅](HO)₂Si(CH₂)₃]-SH,
   [[C₁₁H₂₃O-(CH₂-CH₂O)₆](HO)₂Si(CH₂)₃]-SH,
[[C₁₂H₂₅O-(CH₂-CH₂O)₂](HO)₂Si(CH₂)₃]-SH,
   [[C₁₂H₂₅O-(CH₂-CH₂O)₃](HO)₂Si(CH₂)₃]-SH,
   [[C₁₂H₂₅O-(CH₂-CH₂O)₄](HO)₂Si(CH₂)₃]-SH,
   [[C₁₂H₂₅O-(CH₂-CH₂O)₅](HO)₂Si(CH₂)₃]-SH,
   [[C₁₂H₂₅O-(CH₂-CH₂O)₆](HO)₂Si(CH₂)₃]-SH,
[[C₁₃H₂₇O-(CH₂-CH₂O)₂](HO)₂Si(CH₂)₃]-SH,
   [[C₁₃H₂₇O-(CH₂-CH₂O)₃](HO)₂Si(CH₂)₃]-SH,
   [[C1₃H₂₇O-(CH₂-CH₂O)₄](HO)₂Si(CH₂)₃]-SH,
   [[C₁₃H₂₇O-(CH₂-CH₂O)₅](HO)₂Si(CH₂)₃]-SH,
   [[C₁₃H₂₇O-(CH₂-CH₂O)₆](HO)₂Si(CH₂)₃]-SH,
[[C₁₄H₂₉O-(CH₂-CH₂O)₂](HO)₂Si(CH₂)₃]-SH,
   [[C₁₄H₂₉O-(CH₂-CH₂O)₃](HO)₂Si(CH₂)₃]-SH,
   [[C₁₄H₂₉O-(CH₂-CH₂O)₄](HO)₂Si(CH₂)₃]-SH,
   [[C₁₄H₂₉O-(CH₂-CH₂O)₅](HO)₂Si(CH₂)₃]-SH,
   [[C₁₄H₂₉O-(CH₂-CH₂O)₆](HO)₂Si(CH₂)₃]-SH,
[[C₁₆H₃₃O-(CH₂-CH₂O)₂](HO)₂Si(CH₂)₃]-SH,
   [[C₁₆H₃₃O-(CH₂-CH₂O)₃](HO)₂Si(CH₂)₃]-SH,
   [[C₁₆H₃₃O-(CH₂-CH₂O)₄](HO)₂Si(CH₂)₃]-SH,
   [[C₁₆H₃₃O-(CH₂-CH₂O)₅](HO)₂Si(CH₂)₃]-SH,
   [[C₁₆H₃₃O-(CH₂-CH₂O)₆](HO)₂Si(CH₂)₃]-SH,
[[C₁₇H₃₅O-(CH₂-CH₂O)₂](HO)₂Si(CH₂)₃]-SH,
   [[C₁₇H₃₅O-(CH₂-CH₂O)₃](HO)₂Si(CH₂)₃]-SH,
   [[C₁₇H₃₅O-(CH₂-CH₂O)₄](HO)₂Si(CH₂)₃]-SH,
   [[C₁₇H₃₅O-(CH₂-CH₂O)₅](HO)₂Si(CH₂)₃]-SH,
   [[C₁₇H₃₅O-(CH₂-CH₂O)₆](HO)₂Si(CH₂)₃]-SH,
[[C₁₈H₃₇O-(CH₂-CH₂O)₂](HO)₂Si(CH₂)₃]-SH,
   [[C₁₈H₃₇O-(CH₂-CH₂O)₃](HO)₂Si(CH₂)₃]-SH,
   [[C₁₈H₃₇O-(CH₂-CH₂O)₄](HO)₂Si(CH₂)₃]-SH,
   [[C₁₈H₃₇O-(CH₂-CH₂O)₅](HO)₂Si(CH₂)₃]-SH, oder
   [[C₁₈H₃₇O-(CH₂-CH₂O)₆](HO)₂Si(CH₂)₃]-SH, wobei die Alkylreste unverzweigt oder verzweigt sein können.

Verbindungen der Formel I mit Alk = C₃H₇, C₄H₉, C₅H₁₁, C₆H₁₃, C₇H₁₅, C₈H₁₇, C₉H₁₉, C₁₀H₂₁, C₁₁H₂₃, C₁₂H₂₅, C₁₃H₂₇, C₁₄H₂₉, C₁₅H₃₁, C₁₆H₃₃, C₁₇H₃₅ oder C₁₈H₃₇ können sein:
[[Alk-O-(CH₂-CH(CH₃)O-)₂](MeO)(HO)Si (CH₂)₃]-SH,
   [[Alk-O-(CH₂-CH(CH₃)O-)₃](MeO)(HO)Si (CH₂)₃]-SH,
   [[Alk-O-(CH₂-CH(CH₃)O-)₄](MeO)(HO)Si (CH₂)₃]-SH,
   [[Alk-O-(CH₂-CH(CH₃)O-)₅](MeO)(HO)Si (CH₂)₃]-SH,
   [[Alk-O-(CH₂-CH(CH₃)O-)₆](MeO)(HO)Si (CH₂)₃]-SH,
[[Alk-O-(CH₂-CH(CH₃)O-)₂]₂(HO)Si (CH₂)₃]-SH,
   [[Alk-O-(CH₂-CH(CH₃)O-)₃]₂(HO)Si (CH₂)₃]-SH,
   [[Alk-O-(CH₂-CH(CH₃)O-)₄]₂(HO)Si (CH₂)₃]-SH,
   [[Alk-O-(CH₂-CH(CH₃)O-)₅]₂(HO)Si (CH₂)₃]-SH,
   [[Alk-O-(CH₂-CH(CH₃)O-)₆]₂(HO)Si(CH₂)₃]-SH,
[[Alk-O-(CH₂-CH(CH₃)O-)₂](Me)(HO)Si (CH₂)₃]-SH,
   [[Alk-O-(CH₂-CH(CH₃)O-)₃](Me) (HO)Si (CH₂)₃]-SH,
   [[Alk-O-(CH₂-CH(CH₃)O-)₄](Me)(HO)Si (CH₂)₃]-SH,
   [[Alk-O-(CH₂-CH(CH₃)O-)₅](Me)(HO)Si (CH₂)₃]-SH,
   [[Alk-O-(CH₂-CH(CH₃)O-)₆](Me)(HO)Si (CH₂)₃]-SH,
[[Alk-O-(CH₉-CH(CH₃)O-)₂](EtO)(HO)Si (CH₂)₃]-SH,
   [[Alk-O-(CH₂-CH(CH₃)O-)₃](EtO)(HO)Si (CH₂)₃]-SH,
   [[Alk-O-(CH₂-CH(CH₃)O-)₄](EtO)(HO)Si (CH₂)₃]-SH,
   [[Alk-O-(CH₂-CH(CH₃)O-)₅](EtO)(HO)Si (CH₂)₃]-SH,
   [[Alk-O-(CH₂-CH(CH₃)O-)₆](EtO)(HO)Si (CH₂)₃]-SH,
wobei die Gruppen Alk unverzweigt oder verzweigt sein können.

Bevorzugte Verbindungen der allgemeinen Formel II können sein:
[[C₃H₇O-(CH₂-CH₂O)₂](Me) (MeO)Si (CH₂)₃]-SH,
   [[C₃H₇O-(CH₂-CH₂O)₃](Me) (MeO)Si (CH₂)₃]-SH,
   [[C₃H₇O-(CH₂-CH₂O)₄](Me) (MeO)Si (CH₂)₃]-SH,
   [[C₃H₇O-(CH₂-CH₂O)₅](Me) (MeO)Si (CH₂)₃]-SH,
   [[C₃H₇O-(CH₂-CH₂O)₆](Me)(MeO)Si (CH₂)₃]-SH,
[[C₄H₉O-(CH₂-CH₂O)₂](Me)(MeO)Si (CH₂)₃]-SH,
   [[C₄H₉O-(CH₂-CH₂O)₃](Me) (MeO)Si (CH₂)₃]-SH,
   [[C₄H₉O-(CH₂-CH₂O)₄](Me)(MeO)Si (CH₂)₃]-SH,
   [[C₄H₉O-(CH₂-CH₂O)₅](Me)(MeO)Si (CH₂)₃]-SH,
   [[C₄H₉O-(CH₂-CH₂O)₆](Me)(MeO)Si (CH₂)₃]-SH,
[[C₅H₁₁O-(CH₂-CH₂O)₂](Me)(MeO)Si (CH₂)₃]-SH,
   [[C₅H₁₁O-(CH₂-CH₂O)₃](Me)(MeO)Si(CH₂)₃]-SH,
   [[C₅H₁₁O-(CH₂-CH₂O)₄](Me)(MeO)Si(CH₂)₃]-SH,
   [[C₅H₁₁O-(CH₂-CH₂O)₅](Me)(MeO)Si(CH₂)₃]-SH,
   [[C₅H₁₁O-(CH₂-CH₂O)₆](Me)(MeO)Si(CH₂)₃]-SH,
[[C₆H₁₃O-(CH₂-CH₂O)₂](Me)(MeO)Si(CH₂)₃]-SH,
   [[C₆H₁₃O-(CH₂-CH₂O)₃](Me)(MeO)Si(CH₂)₃]-SH,
   [[C₆H₁₃O-(CH₂-CH₂O)₄](Me)(MeO)Si(CH₂)₃]-SH,
   [[C₆H₁₃O-(CH₂-CH₂O)₅](Me)(MeO)Si(CH₂)₃]-SH,
   [[C₆H₁₃O-(CH₂-CH₂O)₆](Me)(MeO)Si(CH₂)₃]-SH,
[[C₇H₁₅O-(CH₂-CH₂O)₂](Me)(MeO)Si(CH₂)₃]-SH,
   [[C₇H₁₅O-(CH₂-CH₂O)₃](Me)(MeO)Si(CH₂)₃]-SH,
   [[C₇H₁₅O-(CH₂-CH₂O)₄](Me)(MeO)Si (CH₂)₃]-SH,
   [[C₇H₁₅O-(CH₂-CH₂O)₅](Me)(MeO)Si(CH₂)₃]-SH,
   [[C₇H₁₅O-(CH₂-CH₂O)₆](Me)(MeO)Si(CH₂)₃]-SH,
[[C₈H₁₇O-(CH₂-CH₂O)₂](Me)(MeO)Si (CH₂)₃]-SH,
   [[C₈H₁₇O-(CH₂-CH₂O)₃](Me)(MeO)Si(CH₂)₃]-SH,
   [[C₈H₁₇O-(CH₂-CH₂O)₄](Me)(MeO)Si (CH₂)₃]-SH,
   [[C₈H₁₇O-(CH₂-CH₂O)₅](Me)(MeO)Si(CH₂)₃]-SH,
   [[C₈H₁₇O-(CH₂-CH₂O)₆](Me)(MeO)Si(CH₂)₃]-SH,
[[C₉H₁₉O-(CH₂-CH₂O)₂](Me)(MeO)Si(CH₂)₃]-SH,
   [[C₉H₁₉O-(CH₂-CH₂O)₃](Me)(MeO)Si(CH₂)₃]-SH,
   [[C₉H₁₉O-(CH₂-CH₂O)₄](Me)(MeO)Si(CH₂)₃]-SH,
   [[C₉H₁₉O-(CH₂-CH₂O)₅](Me)(MeO)Si(CH₂)₃]-SH,
   [[C₉H₁₉O-(CH₂-CH₂O)₆](Me)(MeO)Si(CH₂)₃]-SH,
[[C₁₀H₂₁O-(CH₂-CH₂O)₂](Me)(MeO)Si(CH₂)₃]-SH,
   [[C₁₀H₂₁O-(CH₂-CH₂O)₃](Me)(MeO)Si(CH₂)₃]-SH,
   [[C₁₀H₂₁O-(CH₂-CH₂O)₄](Me)(MeO)Si(CH₂)₃]-SH,
   [[C₁₀H₂₁O-(CH₂-CH₂O)₅](Me)(MeO)Si(CH₂)₃]-SH,
   [[C₁₀H₂₁O-(CH₂-CH₂O)₆](Me)(MeO)Si(CH₂)₃]-SH,
[[C₁₁H₂₃O-(CH₂-CH₂O)₂](Me)(MeO)Si(CH₂)₃]-SH,
   [[C₁₁H₂₃O-(CH₂-CH₂O)₃](Me)(MeO)Si(CH₂)₃]-SH,
   [[C₁₁H₂₃O-(CH₂-CH₂O)₄](Me)(MeO)Si(CH₂)₃]-SH,
   [[C₁₁H₂₃O-(CH₂-CH₂O)₅](Me)(MeO)Si(CH₂)₃]-SH,
   [[C₁₁H₂₃O-(CH₂-CH₂O)₆](Me)(MeO)Si(CH₂)₃]-SH,
[[C₁₂H₂₅O-(CH₂-CH₂O)₂](Me)(MeO)Si(CH₂)₃]-SH,
   [[C₁₂H₂₅O-(CH₂-CH₂O)₃](Me)(MeO)Si(CH₂)₃]-SH,
   [[C₁₂H₂₅O-(CH₂-CH₂O)₄](Me)(MeO)Si(CH₂)₃]-SH,
   [[C₁₂H₂₅O-(CH₂-CH₂O)₅](Me)(MeO)Si(CH₂)₃]-SH,
   [[C₁₂H₂₅O-(CH₂-CH₂O)₆](Me)(MeO)Si(CH₂)₃]-SH,
[[C₁₃H₂₇O-(CH₂-CH₂O)₂](Me)(MeO)Si(CH₂)₃]-SH,
   [[C₁₃H₂₇O-(CH₂-CH₂O)₃](Me)(MeO)Si(CH₂)₃]-SH,
   [[C₁₃H₂₇O-(CH₂-CH₂O)₄](Me)(MeO)Si(CH₂)₃]-SH,
   [[C₁₃H₂₇O-(CH₂-CH₂O)₅](Me)(MeO)Si(CH₂)₃]-SH,
   [[C₁₃H₂₇O-(CH₂-CH₂O)₆](Me)(MeO)Si(CH₂)₃]-SH,
[[C₁₄H₂₉O-(CH₂-CH₂O)₂](Me)(MeO)Si(CH₂)₃]-SH,
   [[C₁₄H₂₉O-(CH₂-CH₂O)₃](Me)(MeO)Si(CH₂)₃]-SH,
   [[C₁₄H₂₉O-(CH₂-CH₂O)₄](Me)(MeO)Si(CH₂)₃]-SH,
   [[C₁₄H₂₉O-(CH₂-CH₂O)₅](Me)(MeO)Si(CH₂)₃]-SH,
   [[C₁₄H₂₉O-(CH₂-CH₂O)₆](Me)(MeO)Si(CH₂)₃]-SH,
[[C₁₅H₃₁-O-(CH₂-CH₂O)₂](Me)(MeO)Si(CH₂)₃]-SH,
   [[C₁₅H₃₁O-(CH₂-CH₂O)₃](Me)(MeO)Si(CH₂)₃]-SH,
   [[C₁₅H₃₁O-(CH₂-CH₂O)₄](Me)(MeO)Si(CH₂)₃]-SH,
   [[C₁₅H₃₁O-(CH₂-CH₂O)₅](Me)(MeO)Si(CH₂)₃]-SH,
   [[C₁₅H₃₁O-(CH₂-CH₂O)₆](Me)(MeO)Si(CH₂)₃]-SH,
[[C₁₆H₃₃O-(CH₂-CH₂O)₂](Me)(MeO)Si(CH₂)₃]-SH,
   [[C₁₆H₃₃O-(CH₂-CH₂O)₃](Me)(MeO)Si(CH₂)₃]-SH,
   [[C₁₆H₃₃O-(CH₂-CH₂O)4](Me)(MeO)Si(CH₂)₃]-SH,
   [[C₁₆H₃₃O-(CH₂-CH₂O)₅](Me)(MeO)Si(CH₂)₃]-SH,
   [[C₁₆H₃₃O-(CH₂-CH₂O)₆](Me)(MeO)Si(CH₂)₃]-SH,
[[C₁₇H₃₅O-(CH₂-CH₂O)₂](Me)(MeO)Si(CH₂)₃]-SH,
   [[C₁₇H₃₅O-(CH₂-CH₂O)₃](Me)(MeO)Si(CH₂)₃]-SH,
   [[C₁₇H₃₅O-(CH₂-CH₂O)₄](Me)(MeO)Si(CH₂)₃]-SH,
   [[C₁₇H₃₅O-(CH₂-CH₂O)₅](Me)(MeO)Si(CH₂)₃]-SH,
   [[C₁₇H₃₅O-(CH₂-CH₂O)₆](Me)(MeO)Si(CH₂)₃]-SH,
[[C₁₈H₃₇O-(CH₂-CH₂O)₂](Me)(MeO)Si(CH₂)₃]-SH,
   [[C₁₈H₃₇O-(CH₂-CH₂O)₃](Me)(MeO)Si(CH₂)₃]-SH,
   [[C₁₈H₃₇O-(CH₂-CH₂O)₄](Me)(MeO)Si(CH₂)₃]-SH,
   [[C₁₈H₃₇O-(CH₂-CH₂O)₅](Me)(MeO)Si(CH₂)₃]-SH,
   [[C₁₈H₃₇O-(CH₂-CH₂O)₆](Me)(MeO)Si(CH₂)₃]-SH,
[[C₃H₇O-(CH₂-CH₂O)₂](Me)(EtO)Si(CH₂)₃]-SH,
   [[C₃H₇O-(CH₂-CH₂O)₃](Me)(EtO)Si(CH₂)₃]-SH,
   [[C₃H₇O-(CH₂-CH₂O)₄](Me)(EtO)Si(CH₂)₃]-SH,
   [[C₃H₇O-(CH₂-CH₂O)₅](Me)(EtO)Si(CH₂)₃]-SH,
   [[C₃H₇O-(CH₂-CH₂O)₆](Me)(EtO)Si(CH₂)₃]-SH,
[[C₄H₉O-(CH₂-CH₂O)₂](Me)(EtO)Si(CH₂)₃]-SH,
   [[C₄H₉O-(CH₂-CH₂O)₃](Me)(EtO)Si(CH₂)₃]-SH,
   [[C₄H₉O-(CH₂-CH₂O)₄](Me)(EtO)Si(CH₂)₃]-SH,
   [[C₄H₉O-(CH₂-CH₂O)₅](Me)(EtO)Si(CH₂)₃]-SH,
   [[C₄H₉O-(CH₂-CH₂O)₆](Me)(EtO)Si(CH₂)₃]-SH,
[[C₅H₁₁O-(CH₂-CH₂O)₂](Me)(EtO)Si(CH₂)₃]-SH,
   [[C₅H₁₁O-(CH₂-CH₂O)₃](Me)(EtO)Si(CH₂)₃]-SH,
   [[C₅H₁₁O-(CH₂-CH₂O)₄](Me)(EtO)Si(CH₂)₃]-SH,
   [[C₅H₁₁O-(CH₂-CH₂O)₅](Me)(EtO)Si(CH₂)₃]-SH,
   [[C₅H₁₁O-(CH₂-CH₂O)₆](Me)(EtO)Si(CH₂)₃]-SH,
[[C₆H₁₃O-(CH₂-CH₂O)₂](Me)(EtO)Si(CH₂)₃]-SH,
   [[C₆H₁₃O-(CH₂-CH₂O)₃](Me)(EtO)Si(CH₂)₃]-SH,
   [[C₆H₁₃O-(CH₂-CH₂O)₄](Me)(EtO)Si(CH₂)₃]-SH,
   [[C₆H₁₃O-(CH₂-CH₂O)₅](Me)(EtO)Si(CH₂)₃]-SH,
   [[C₆H₁₃O-(CH₂-CH₂O)₆](Me)(EtO)Si(CH₂)₃]-SH,
[[C₇H₁₅O-(CH₂-CH₂O)₂](Me)(EtO)Si(CH₂)₃]-SH,
   [[C₇H₁₅O-(CH₂-CH₂O)₃](Me)(EtO)Si(CH₂)₃]-SH,
   [[C₇H₁₅O-(CH₂-CH₂O)₄](Me)(EtO)Si(CH₂)₃]-SH,
   [[C₇H₁₅O-(CH₂-CH₂O)₅](Me)(EtO)Si(CH₂)₃]-SH,
   [[C₇H₁₅O-(CH₂-CH₂O)₆](Me)(EtO)Si(CH₂)₃]-SH,
[[C₈H₁₇O-(CH₂-CH₂O)₂](Me)(EtO)Si(CH₂)₃]-SH,
   [[C₈H₁₇O-(CH₂-CH₂O)₃](Me)(EtO)Si(CH₂)₃]-SH,
   [[C₈H₁₇O-(CH₂-CH₂O)₄](Me)(EtO)Si(CH₂)₃]-SH,
   [[C₈H₁₇O-(CH₂-CH₂O)₅](Me)(EtO)Si(CH₂)₃]-SH,
   [[C₈H₁₇O-(CH₂-CH₂O)₆](Me)(EtO)Si(CH₂)₃]-SH,
[[C₉H₁₉O-(CH₂-CH₂O)₂](Me)(EtO)Si(CH₂)₃]-SH,
   [[C₉H₁₉O-(CH₂-CH₂O)₃](Me)(EtO)Si(CH₂)₃]-SH,
   [[C₉H₁₉O-(CH₂-CH₂O)₄](Me)(EtO)Si(CH₂)₃]-SH,
   [[C₉H₁₉O-(CH₂-CH₂O)₅](Me)(EtO)Si(CH₂)₃]-SH,
   [[C₉H₁₉O-(CH₂-CH₂O)₆](Me)(EtO)Si(CH₂)₃]-SH,
[[C₁₀H₂₁O-(CH₂-CH₂O)₂](Me)(EtO)Si(CH₂)₃]-SH,
   [[C₁₀H₂₁O-(CH₂-CH₂O)₃](Me)(EtO)Si(CH₂)₃]-SH,
   [[C₁₀H₂₁O-(CH₂-CH₂O)₄](Me)(EtO)Si(CH₂)₃]-SH,
   [[C₁₀H₂₁O-(CH₂-CH₂O)₅](Me)(EtO)Si(CH₂)₃]-SH,
   [[C₁₀H₂₁O-(CH₂-CH₂O)₆](Me)(EtO)Si(CH₂)₃]-SH,
[[C₁₁H₂₃O-(CH₂-CH₂O)₂](Me)(EtO)Si(CH₂)₃]-SH,
   [[C₁₁H₂₃O-(CH₂-CH₂O)₃](Me)(EtO)Si(CH₂)₃]-SH,
   [[C₁₁H₂₃O-(CH₂-CH₂O)₄](Me)(EtO)Si(CH₂)₃]-SH,
   [[C₁₁H₂₃O-(CH₂-CH₂O)₅](Me)(EtO)Si(CH₂)₃]-SH,
   [[C₁₁H₂₃O-(CH₂-CH₂O)₆](Me)(EtO)Si(CH₂)₃]-SH,
[[C₁₂H₂₅O-(CH₂-CH₂O)₂](Me)(EtO)Si(CH₂)₃]-SH,
   [[C₁₂H₂₅O-(CH₂-CH₂O)₃](Me)(EtO)Si(CH₂)₃]-SH,
   [[C₁₂H₂₅O-(CH₂-CH₂O)₄](Me)(EtO)Si(CH₂)₃]-SH,
   [[C₁₂H₂₅O-(CH₂-CH₂O)₅](Me)(EtO)Si(CH₂)₃]-SH,
   [[C₁₂H₂₅O-(CH₂-CH₂O)₆](Me)(EtO)Si(CH₂)₃]-SH,
[[C₁₃H₂₇O-(CH₂-CH₂O)₂](Me)(EtO)Si(CH₂)₃]-SH,
   [[C₁₃H₂₇O-(CH₂-CH₂O)₃](Me)(EtO)Si(CH₂)₃]-SH,
   [[C₁₃H₂₇O-(CH₂-CH₂O)₄](Me)(EtO)Si(CH₂)₃]-SH,
   [[C₁₃H₂₇O-(CH₂-CH₂O)₅](Me)(EtO)Si(CH₂)₃]-SH,
   [[C₁₃H₂₇O-(CH₂-CH₂O)₆](Me)(EtO)Si(CH₂)₃]-SH,
[[C₁₄H₂₉O-(CH₂-CH₂O)₂](Me)(EtO)Si(CH₂)₃]-SH,
   [[C₁₄H₂₉O-(CH₂-CH₂O)₃](Me)(EtO)Si(CH₂)₃]-SH,
   [[C₁₄H₂₉O-(CH₂-CH₂O)₄](Me)(EtO)Si(CH₂)₃]-SH,
   [[C₁₄H₂₉O-(CH₂-CH₂O)₅](Me)(EtO)Si(CH₂)₃]-SH,
   [[C₁₄H₂₉O-(CH₂-CH₂O)₆](Me)(EtO)Si(CH₂)₃]-SH,
[[C₁₅H₃₁O-(CH₂-CH₂O)₂](Me)(EtO)Si(CH₂)₃]-SH,
   [[C₁₅H₃₁O-(CH₂-CH₂O)₃](Me)(EtO)Si(CH₂)₃]-SH,
   [[C₁₅H₃₁O-(CH₂-CH₂O)₄](Me)(EtO)Si(CH₂)₃]-SH,
   [[C₁₅H₃₁O-(CH₂-CH₂O)₅](Me)(EtO)Si(CH₂)₃]-SH,
   [[C₁₅H₃₁O-(CH₂-CH₂O)₆](Me)(EtO)Si(CH₂)₃]-SH,
[[C₁₆H₃₃O-(CH₂-CH₂O)₂](Me)(EtO)Si(CH₂)₃]-SH,
   [[C₁₆H₃₃O-(CH₂-CH₂O)₃](Me)(EtO)Si(CH₂)₃]-SH,
   [[C₁₆H₃₃O-(CH₂-CH₂O)₄](Me)(EtO)Si(CH₂)₃]-SH,
   [[C₁₆H₃₃O-(CH₂-CH₂O)₅](Me)(EtO)Si(CH₂)₃]-SH,
   [[C₁₆H₃₃O-(CH₂-CH₂O)₆](Me)(EtO)Si(CH₂)₃]-SH,
[[C₁₇H₃₅O-(CH₂-CH₂O)₂](Me)(EtO)Si(CH₂)₃]-SH,
   [[C₁₇H₃₅O-(CH₂-CH₂O)₃](Me)(EtO)Si(CH₂)₃]-SH,
   [[C₁₇H₃₅O-(CH₂-CH₂O)₄](Me)(EtO)Si(CH₂)₃]-SH,
   [[C₁₇H₃₅O-(CH₂-CH₂O)₅](Me)(EtO)Si(CH₂)₃]-SH,
   [[C₁₇H₃₅O-(CH₂-CH₂O)₆](Me)(EtO)Si(CH₂)₃]-SH,
[[C₁₈H₃₇O-(CH₂-CH₂O)₂](Me)(EtO)Si(CH₂)₃]-SH,
   [[C₁₈H₃₇O-(CH₂-CH₂O)₃](Me)(EtO)Si(CH₂)₃]-SH,
   [[C₁₈H₃₇O-(CH₂-CH₂O)₄](Me)(EtO)Si(CH₂)₃]-SH,
   [[C₁₈H₃₇O-(CH₂-CH₂O)₅](Me)(EtO)Si(CH₂)₃]-SH,
[[C₃H₇O-(CH₂-CH₂O)₂](MeO)₂Si(CH₂)₃]-SH,
   [[C₃H₇O-(CH₂-CH₂O)₃](MeO)₂Si(CH₂)₃]-SH,
   [[C₃H₇O-(CH₂-CH₂O)₄](MeO)₂Si(CH₂)₃]-SH,
   [[C₃H₇O-(CH₂-CH₂O)₅](MeO)₂Si(CH₂)₃]-SH,
   [[C₃H₇O-(CH₂-CH₂O)₆](MeO)₂Si(CH₂)₃]-SH,
[[C₄H₉O-(CH₂-CH₂O)₂](MeO)₂Si(CH₂)₃]-SH,
   [[C₄H₉O-(CH₂-CH₂O)₃](MeO)₂Si(CH₂)₃]-SH,
   [[C₄H₉O-(CH₂-CH₂O)₄](MeO)₂Si(CH₂)₃]-SH,
   [[C₄H₉O-(CH₂-CH₂O)₅](MeO)₂Si(CH₂)₃]-SH,
   [[C₄H₉O-(CH₂-CH₂O)₆](MeO)₂Si(CH₂)₃]-SH,
[[C₅H₁₁O-(CH₂-CH₂O)₂](MeO)₂Si(CH₂)₃]-SH,
   [[C₅H₁₁O-(CH₂-CH₂O)₃](MeO)₂Si(CH₂)₃]-SH,
   [[C₅H₁₁O-(CH₂-CH₂O)₄](MeO)₂Si(CH₂)₃]-SH,
   [[C₅H₁₁O-(CH₂-CH₂O)₅](MeO)₂Si(CH₂)₃]-SH,
   [[C₅H₁₁O-(CH₂-CH₂O)₆](MeO)₂Si(CH₂)₃]-SH,
[[C₆H₁₃O-(CH₂-CH₂O)₂](MeO)₂Si(CH₂)₃]-SH,
   [[C₆H₁₃O-(CH₂-CH₂O)₃](MeO)₂Si(CH₂)₃]-SH,
   [[C₆H₁₃O-(CH₂-CH₂O)₄](MeO)₂Si(CH₂)₃]-SH,
   [[C₆H₁₃O-(CH₂-CH₂O)₅](MeO)₂Si(CH₂)₃]-SH,
   [[C₆H₁₃O-(CH₂-CH₂O)₆](MeO)₂Si(CH₂)₃]-SH,
[[C₇H₁₅O-(CH₂-CH₂O)₂](MeO)₂Si(CH₂)₃]-SH,
   [[C₇H₁₅O-(CH₂-CH₂O)₃](MeO)₂Si(CH₂)₃]-SH,
   [[C₇H₁₅O-(CH₂-CH₂O)₄](MeO)₂Si(CH₂)₃]-SH,
   [[C₇H₁₅O-(CH₂-CH₂O)₅](MeO)₂Si(CH₂)₃]-SH,
   [[C₇H₁₅O-(CH₂-CH₂O)₆](MeO)₂Si(CH₂)₃]-SH,
[[C₈H₁₇O-(CH₂-CH₂O)₂](MeO)₂Si(CH₂)₃]-SH,
   [[C₈H₁₇O-(CH₂-CH₂O)₃](MeO)₂Si(CH₂)₃]-SH,
   [[C₈H₁₇O-(CH₂-CH₂O)₄](MeO)₂Si(CH₂)₃]-SH,
   [[C₈H₁₇O-(CH₂-CH₂O)₅](MeO)₂Si(CH₂)₃]-SH,
   [[C₈H₁₇O-(CH₂-CH₂O)₆](MeO)₂Si(CH₂)₃]-SH,
[[C₉H₁₉O-(CH₂-CH₂O)₂](MeO)₂Si(CH₂)₃]-SH,
   [[C₉H₁₉O-(CH₂-CH₂O)₃](MeO)₂Si(CH₂)₃]-SH,
   [[C₉H₁₉O-(CH₂-CH₂O)₄](MeO)₂Si(CH₂)₃]-SH,
   [[C₉H₁₉O-(CH₂-CH₂O)₅](MeO)₂Si(CH₂)₃]-SH,
   [[C₉H₁₉O-(CH₂-CH₂O)₆](MeO)₂Si(CH₂)₃]-SH,
[[C₁₀H₂₁O-(CH₂-CH₂O)₂](MeO)₂Si(CH₂)₃]-SH,
   [[C₁₀H₂₁O-(CH₂-CH₂O)₃](MeO)₂Si(CH₂)₃]-SH,
   [[C₁₀H₂₁O-(CH₂-CH₂O)₄](MeO)₂Si(CH₂)₃]-SH,
   [[C₁₀H₂₁O-(CH₂-CH₂O)₅](MeO)₂Si(CH₂)₃]-SH,
   [[C₁₀H₂₁O-(CH₂-CH₂O)₆](MeO)₂Si(CH₂)₃]-SH,
[[C₁₁H₂₃O-(CH₂-CH₂O)₂](MeO)₂Si(CH₂)₃]-SH,
   [[C₁₁H₂₃O-(CH₂-CH₂O)₃](MeO)₂Si(CH₂)₃]-SH,
   [[C₁₁H₂₃O-(CH₂-CH₂O)₄](MeO)₂Si(CH₂)₃]-SH,
   [[C₁₁H₂₃O-(CH₂-CH₂O)₅](MeO)₂Si(CH₂)₃]-SH,
   [[C₁₁H₂₃O-(CH₂-CH₂O)₆](MeO)₂Si(CH₂)₃]-SH,
[[C₁₂H₂₅O-(CH₂-CH₂O)₂](MeO)₂Si(CH₂)₃]-SH,
   [[C₁₂H₂₅O-(CH₂-CH₂O)₃](MeO)₂Si(CH₂)₃]-SH,
   [[C₁₂H₂₅O-(CH₂-CH₂O)₄](MeO)₂Si(CH₂)₃]-SH,
   [[C₁₂H₂₅O-(CH₂-CH₂O)₅](MeO)₂Si(CH₂)₃]-SH,
   [[C₁₂H₂₅O-(CH₂-CH₂O)₆](MeO)₂Si(CH₂)₃]-SH,
[[C₁₃H₂₇O-(CH₂-CH₂O)₂](MeO)₂Si(CH₂)₃]-SH,
   [[C₁₃H₂₇O-(CH₂-CH₂O)₃](MeO)₂Si(CH₂)₃]-SH,
   [[C₁₃H₂₇O-(CH₂-CH₂O)₄](MeO)₂Si(CH₂)₃]-SH,
   [[C₁₃H₂₇O-(CH₂-CH₂O)₅](MeO)₂Si(CH₂)₃]-SH,
   [[C₁₃H₂₇O-(CH₂-CH₂O)₆](MeO)₂Si(CH₂)₃]-SH,
[[C₁₄H₂₉O-(CH₂-CH₂O)₂](MeO)₂Si(CH₂)₃]-SH,
   [[C₁₄H₂₉O-(CH₂-CH₂O)₃](MeO)₂Si(CH₂)₃]-SH,
   [[C₁₄H₂₉O-(CH₂-CH₂O)₄](MeO)₂Si(CH₂)₃]-SH,
   [[C₁₄H₂₉O-(CH₂-CH₂O)₅](MeO)₂Si(CH₂)₃]-SH,
   [[C₁₄H₂₉O-(CH₂-CH₂O)₆](MeO)₂Si(CH₂)₃]-SH,
[[C₁₆H₃₃O-(CH₂-CH₂O)₂](MeO)₂Si(CH₂)₃]-SH,
   [[C₁₆H₃₃O-(CH₂-CH₂O)₃](MeO)₂Si(CH₂)₃]-SH,
   [[C₁₆H₃₃O-(CH₂-CH₂O)₄](MeO)₂Si(CH₂)₃]-SH,
   [[C₁₆H₃₃O-(CH₂-CH₂O)₅](MeO)₂Si(CH₂)₃]-SH,
   [[C₁₆H₃₃O-(CH₂-CH₂O)₆](MeO)₂Si(CH₂)₃]-SH,
[[C₁₈H₃₇O-(CH₂-CH₂O)₂](MeO)₂Si(CH₂)₃]-SH,
   [[C₁8H₃₇O-(CH₂-CH₂O)₃](MeO)₂Si(CH₂)₃]-SH,
   [[C₁₈H₃₇O-(CH₂-CH₂O)₄](MeO)₂Si(CH₂)₃]-SH,
   [[C₁₈H₃₇O-(CH₂-CH₂O)₅](MeO)₂Si(CH₂)₃]-SH,
   [[C₁₈H₃₇O-(CH₂-CH₂O)₆](MeO)₂Si(CH₂)₃]-SH,
[[C₃H₇O-(CH₂-CH₂O)₂]₂(MeO)Si (CH₂)₃]-SH,
   [[C₃H₇O-(CH₂-CH₂O)₃]₂(MeO)Si (CH₂)₃]-SH,
   [[C₃H₇O-(CH₂-CH₂O)₄]₂(MeO)Si (CH₂)₃]-SH,
   [[C₃H₇O-(CH₂-CH₂O)₅]₂(MeO)Si (CH₂)₃]-SH,
   [[C₃H₇O-(CH₂-CH₂O)₆]₂(MeO)Si (CH₂)₃]-SH,
[[C₄H₉O-(CH₂-CH₂O)₂]₂(MeO)Si (CH₂)₃]-SH,
   [[C₄H₉O-(CH₂-CH₂O)₃]₂(MeO)Si (CH₂)₃]-SH,
   [[C₄H₉O-(CH₂-CH₂O)₄]₂(MeO)Si (CH₂)₃]-SH,
   [[C₄H₉O-(CH₂-CH₂O)₅]₂(MeO)Si (CH₂)₃]-SH,
   [[C₄H₉O-(CH₂-CH₂O)₆]₂(MeO)Si (CH₂)₃]-SH,
[[C₅H₁₁O-(CH₂-CH₂O)₂]₂(MeO)Si (CH₂)₃]-SH,
   [[C₅H₁₁O-(CH₂-CH₂O)₃]₂(MeO)Si (CH₂)₃]-SH,
   [[C₅H₁₁O-(CH₂-CH₂O)₄]₂(MeO)Si (CH₂)₃]-SH,
   [[C₅H₁₁O-(CH₂-CH₂O)₅]₂ (MeO)Si (CH₂)₃]-SH,
   [[C₅H₁₁O-(CH₂-CH₂O)₆]₂ (MeO)Si (CH₂)₃]-SH,
[[C₆H₁₃O-(CH₂-CH₂O)₂]₂(MeO)Si (CH₂)₃]-SH,
   [[C₆H₁₃O-(CH₂-CH₂O)₃]₂(MeO)Si (CH₂)₃]-SH,
   [[C₆H₁₃O-(CH₂-CH₂O)₄]₂(MeO)Si (CH₂)₃]-SH,
   [[C₆H₁₃O-(CH₂-CH₂O)₅]₂ (MeO)Si (CH₂)₃]-SH,
   [[C₆H₁₃O-(CH₂-CH₂O)₆]₂(MeO)Si (CH₂)₃]-SH,
[[C₇H₁₅O-(CH₂-CH₂O)₂]₂(MeO)Si (CH₂)₃]-SH,
   [[C₇H₁₅O-(CH₂-CH₂O)₃]₂(MeO)Si(CH₂)₃]-SH,
   [[C₇H₁₅O-(CH₂-CH₂O)₄]₂(MeO)Si(CH₂)₃]-SH,
   [[C₇H₁₅O-(CH₂-CH₂O)₅]₂(MeO)Si(CH₂)₃]-SH,
   [[C₇H₁₅O-(CH₂-CH₂O)₆]₂ (MeO)Si(CH₂)₃]-SH,
[[C₈H₁₇O-(CH₂-CH₂O)₂]₂(MeO)Si(CH₂)₃]-SH,
   [[C₈H₁₇O-(CH₂-CH₂O)₃]₂(MeO)Si(CH₂)₃]-SH,
   [[C₈H₁₇O-(CH₂-CH₂O)₄]₂(MeO)Si(CH₂)₃]-SH,
   [[C₈H₁₇O-(CH₂-CH₂O)₅]₂(MeO)Si(CH₂)₃]-SH,
   [[C₈H₁₇O-(CH₂-CH₂O)₆]₂(MeO)Si(CH₂)₃]-SH,
[[C₉H₁₉O-(CH₂-CH₂O)₂]₂(MeO)Si(CH₂)₃]-SH,
   [[C₉H₁₉O-(CH₂-CH₂O)₃]₂(MeO)Si(CH₂)₃]-SH,
   [[C₉H₁₉O-(CH₂-CH₂O)₄]₂(MeO)Si(CH₂)₃]-SH,
   [[C₉H₁₉O-(CH₂-CH₂O)₅]₂(MeO)Si(CH₂)₃]-SH,
   [[C₉H₁₉O-(CH₂-CH₂O)₆]₂(MeO)Si(CH₂)₃]-SH,
[[C₁₀H₂₁O-(CH₂-CH₂O)₂]₂(MeO)Si(CH₂)₃]-SH,
   [[C₁₀H₂₁O-(CH₂-CH₂O)₃]₂(MeO)Si(CH₂)₃]-SH,
   [[C₁₀H₂₁O-(CH₂-CH₂O)₄]₂(MeO)Si(CH₂)₃]-SH,
   [[C₁₀H₂₁O-(CH₂-CH₂O)₅]₂(MeO)Si(CH₂)₃]-SH,
   [[C₁₀H₂₁O-(CH₂-CH₂O)₆]₂(MeO)Si(CH₂)₃]-SH,
[[C₁₁H₂₃O-(CH₂-CH₂O)₂]₂(MeO)Si(CH₂)₃]-SH,
   [[C₁₁H₂₃O-(CH₂-CH₂O)₃]₂(MeO)Si(CH₂)₃]-SH,
   [[C₁₁H₂₃O-(CH₂-CH₂O)₄]₂(MeO)Si(CH₂)₃]-SH,
   [[C₁₁H₂₃O-(CH₂-CH₂O)₅]₂(MeO)Si(CH₂)₃]-SH,
   [[C₁₁H₂₃O-(CH₂-CH₂O)₆]₂(MeO)Si(CH₂)₃]-SH,
[[C₁₂H₂₅O-(CH₂-CH₂O)₂]₂(MeO)Si(CH₂)₃]-SH,
   [[C₁₂H₂₅O-(CH₂-CH₂O)₃]₂(MeO)Si(CH₂)₃]-SH,
   [[C₁₂H₂₅O-(CH₂-CH₂O)₄]₂(MeO)Si(CH₂)₃]-SH,
   [[C₁₂H₂₅O-(CH₂-CH₂O)₅]₂(MeO)Si(CH₂)₃]-SH,
   [[C₁₂H₂₅O-(CH₂-CH₂O)₆]₂(MeO)Si(CH₂)₃]-SH,
[[C₁₃H₂₇O-(CH₂-CH₂O)₂]₂(MeO)Si(CH₂)₃]-SH,
   [[C₁₃H₂₇O-(CH₂-CH₂O)₃]₂(MeO)Si(CH₂)₃]-SH,
   [[C₁₃H₂₇O-(CH₂-CH₂O)₄]₂(MeO)Si(CH₂)₃]-SH,
   [[C₁₃H₂₇O-(CH₂-CH₂O)₅]₂(MeO)Si(CH₂)₃]-SH,
   [[C₁₃H₂₇O-(CH₂-CH₂O)₆]₂(MeO)Si(CH₂)₃]-SH,
[[C₁₄H₂₉O-(CH₂-CH₂O)₂]₂(MeO)Si(CH₂)₃]-SH,
   [[C₁₄H₂₉O-(CH₂-CH₂O)₃]₂(MeO)Si(CH₂)₃]-SH,
   [[C₁₄H₂₉O-(CH₂-CH₂O)₄]₂(MeO)Si(CH₂)₃]-SH,
   [[C₁₄H₂₉O-(CH₂-CH₂O)₅]₂(MeO)Si(CH₂)₃]-SH,
   [[C₁₄H₂₉O-(CH₂-CH₂O)₆]₂(MeO)Si(CH₂)₃]-SH,
[[C₁₆H₃₃O-(CH₂-CH₂O)₂]₂(MeO)Si(CH₂)₃]-SH,
   [[C₁₆H₃₃O-(CH₂-CH₂O)₃]₂(MeO)Si(CH₂)₃]-SH,
   [[C₁₆H₃₃O-(CH₂-CH₂O)₄]₂(MeO)Si(CH₂)₃]-SH,
   [[C₁₆H₃₃O-(CH₂-CH₂O)₅]₂(MeO)Si(CH₂)₃]-SH,
   [[C₁₆H₃₃O-(CH₂-CH₂O)₆]₂(MeO)Si(CH₂)₃]-SH,
[[C₁₈H₃₇O-(CH₂-CH₂O)₂]₂(MeO)Si(CH₂)₃]-SH,
   [[C₁₈H₃₇O-(CH₂-CH₂O)₃]₂(MeO)Si(CH₂)₃]-SH,
   [[C₁₈H₃₇O-(CH₂-CH₂O)₄]₂(MeO)Si(CH₂)₃]-SH,
   [[C₁₈H₃₇O-(CH₂-CH₂O)₅]₂(MeO)Si(CH₂)₃]-SH,
   [[C₁₈H₃₇O-(CH₂-CH₂O)₆]₂(MeO)Si(CH₂)₃]-SH,
[[C₃H₇O-(CH₂-CH₂O)₂](EtO)₂Si(CH₂)₃]-SH,
   [[C₃H₇O-(CH₂-CH₂O)₃](EtO)₂Si(CH₂)₃]-SH,
   [[C₃H₇O-(CH₂-CH₂O)₄](EtO)₂Si(CH₂)₃]-SH,
   [[C₃H₇O-(CH₂-CH₂O)₅](EtO)₂Si(CH₂)₃]-SH,
   [[C₃H₇O-(CH₂-CH₂O)₆](EtO)₂Si(CH₂)₃]-SH,
[[C₄H₉O-(CH₂-CH₂O)₂](EtO)₂Si(CH₂)₂]-SH,
   [[C₄H₉O-(CH₂-CH₂O)₃](EtO)₂Si(CH₂)₃]-SH,
   [[C₄H₉O-(CH₂-CH₂O)₄](EtO)₂Si(CH₂)₃]-SH,
   [[C₄H₉O-(CH₂-CH₂O)₅](EtO)₂Si(CH₂)₃]-SH,
   [[C₄H₉O-(CH₂-CH₂O)₆](EtO)₂Si(CH₂)₃]-SH,
[[C₅H₁₁O-(CH₂-CH₂O)₂](EtO)₂Si(CH₂)₃]-SH,
   [[C₅H₁₁O-(CH₂-CH₂O)₃](EtO)₂Si(CH₂)₃]-SH,
   [[C₅H₁₁O-(CH₂-CH₂O)₄](EtO)₂Si(CH₂)₃]-SH,
   [[C₅H₁₁O-(CH₂-CH₂O)₅](EtO)₂Si(CH₂)₃]-SH,
   [[C₅H₁₁O-(CH₂-CH₂O)₆](EtO)₂Si(CH₂)₃]-SH,
[[C₆H₁₃O-(CH₂-CH₂O)₂](EtO)₂Si(CH₂)₃]-SH,
   [[C₆H₁₃O-(CH₂-CH₂O)₃](EtO)₂Si(CH₂)₃]-SH,
   [[C₆H₁₃O-(CH₂-CH₂O)₄](EtO)₂Si(CH₂)₃]-SH,
   [[C₆H₁₃O-(CH₂-CH₂O)₅](EtO)₂Si(CH₂)₃]-SH,
   [[C₆H₁₃O-(CH₂-CH₂O)₆](EtO)₂Si(CH₂)₃]-SH,
[[C₇H₁₅O-(CH₂-CH₂O)₂](EtO)₂Si(CH₂)₃]-SH,
   [[C₇H₁₅O-(CH₂-CH₂O)₃](EtO)₂Si(CH₂)₃]-SH,
   [[C₇H₁₅O-(CH₂-CH₂O)₄](EtO)₂Si(CH₂)₃]-SH,
   [[C₇H₁₅O-(CH₂-CH₂O)₅](EtO)₂Si(CH₂)₃]-SH,
   [[C₇H₁₅O-(CH₂-CH₂O)₆](EtO)₂Si(CH₂)₃]-SH,
[[C₈H₁₇O-(CH₂-CH₂O)₂](EtO)₂Si(CH₂)₃]-SH,
   [[C₈H₁₇O-(CH₂-CH₂O)₃](EtO)₂Si(CH₂)₃]-SH,
   [[C₈H₁₇O-(CH₂-CH₂O)₄](EtO)₂Si(CH₂)₃]-SH,
   [[C₈H₁₇O-(CH₂-CH₂O)₅](EtO)₂Si(CH₂)₃]-SH,
   [[C₈H₁₇O-(CH₂-CH₂O)₆](EtO)₂Si(CH₂)₃]-SH,
[[C₉H₁₉O-(CH₂-CH₂O)₂](EtO)₂Si(CH₂)₃]-SH,
   [[C₉H₁₉O-(CH₂-CH₂O)₃](EtO)₂Si(CH₂)₃]-SH,
   [[C₉H₁₉O-(CH₂-CH₂O)₄](EtO)₂Si(CH₂)₃]-SH,
   [[C₉H₁₉O-(CH₂-CH₂O)₅](EtO)₂Si(CH₂)₃]-SH,
   [[C₉H₁₉O-(CH₂-CH₂O)₆](EtO)₂Si(CH₂)₃]-SH,
[[C₁₀H₂₁O-(CH₂-CH₂O)₂](EtO)₂Si(CH₂)₃]-SH,
   [[C₁₀H₂₁O-(CH₂-CH₂O)₃](EtO)₂Si(CH₂)₃]-SH,
   [C₁₀H₂₁O-(CH₂-CH₂O)₄](EtO)₂Si(CH₂)₃]-SH,
   [[C₁₀H₂₁O-(CH₂-CH₂O)₅](EtO)₂Si(CH₂)₃]-SH,
   [[C₁₀H₂₁O-(CH₂-CH₂O)₆](EtO)₂Si(CH₂)₃]-SH,
[[C₁₁H₂₃O-(CH₂-CH₂O)₂](EtO)₂Si(CH₂)₃]-SH,
   [[C₁₁H₂₃O-(CH₂-CH₂O)₃](EtO)₂Si(CH₂)₃]-SH,
   [[C₁₁H₂₃O-(CH₂-CH₂O)₄](EtO)₂Si(CH₂)₃]-SH,
   [[C₁₁H₂₃O-(CH₂-CH₂O)₅](EtO)₂Si(CH₂)₃]-SH,
   [[C₁₁H₂₃O-(CH₂-CH₂O)₆](EtO)₂Si(CH₂)₃]-SH,
[[C₁₂H₂₅O-(CH₂-CH₂O)₂](EtO)₂Si(CH₂)₃]-SH,
   [[C₁₂H₂₅O-(CH₂-CH₂O)₃](EtO)₂Si(CH₂)₃]-SH,
   [[C₁₂H₂₅O-(CH₂-CH₂O)₄](EtO)₂Si(CH₂)₃]-SH,
   [[C₁₂H₂₅O-(CH₂-CH₂O)₅](EtO)₂Si(CH₂)₃]-SH,
   [[C₁₂H₂₅O-(CH₂-CH₂O)₆](EtO)₂Si(CH₂)₃]-SH,
[[C₁₃H₂₇O-(CH₂-CH₂O)₂](EtO)₂Si(CH₂)₃]-SH,
   [[C₁₃H₂₇O-(CH₂-CH₂O)₃](EtO)₂Si(CH₂)₃]-SH,

   [[C₁₃H₂₇O-(CH₂-CH₂O)₄](EtO)₂Si(CH₂)₃]-SH,
   [[C₁₃H₂₇O-(CH₂-CH₂O)₅](EtO)₂Si(CH₂)₃]-SH,
   [[C₁₃H₂₇O-(CH₂-CH₂O)₆](EtO)₂Si(CH₂)₃]-SH,
[[C₁₄H₂₉O-(CH₂-CH₂O)₂](EtO)₂Si(CH₂)₃]-SH,
   [[C₁₄H₂₉O-(CH₂-CH₂O)₃](EtO)₂Si(CH₂)₃]-SH,
   [[C₁₄H₂₉O-(CH₂-CH₂O)₄](EtO)₂Si(CH₂)₃]-SH,
   [[C₁₄H₂₉O-(CH₂-CH₂O)₅](EtO)₂Si(CH₂)₃]-SH,
   [[C₁₄H₂₉O-(CH₂-CH₂O)₆](EtO)₂Si(CH₂)₃]-SH,
[[C₁₆H₃₃O-(CH₂-CH₂O)₂](EtO)₂Si(CH₂)₃]-SH,
   [[C₁₆H₃₃O-(CH₂-CH₂O)₃](EtO)₂Si(CH₂)₃]-SH,
   [[C₁₆H₃₃O-(CH₂-CH₂O)₄](EtO)₂Si(CH₂)₃]-SH,
   [[C₁₆H₃₃O-(CH₂-CH₂O)₅](EtO)₂Si(CH₂)₃]-SH,
   [[C₁₆H₃₃O-(CH₂-CH₂O)₆](EtO)₂Si(CH₂)₃]-SH,
[[C₁₇H₃₅O-(CH₂-CH₂O)₂](EtO)₂Si(CH₂)₃]-SH,
   [[C₁₇H₃₅O-(CH₂-CH₂O)₃](EtO)₂Si(CH₂)₃]-SH,
   [[C₁₇H₃₅O-(CH₂-CH₂O)₄](EtO)₂Si(CH₂)₃]-SH,
   [[C₁₇H₃₅O-(CH₂-CH₂O)₅](EtO)₂Si(CH₂)₃]-SH,
   [[C₁₇H₃₅O-(CH₂-CH₂O)₆](EtO)₂Si(CH₂)₃]-SH,
[[C₁₈H₃₇O-(CH₂-CH₂O)₂](EtO)₂Si(CH₂)₃]-SH,
   [[C₁₈H₃₇O-(CH₂-CH₂O)₃](EtO)₂Si(CH₂)₃]-SH,
   [[C₁₈H₃₇O-(CH₂-CH₂O)₄](EtO)₂Si(CH₂)₃]-SH,
   [[C₁₈H₃₇O-(CH₂-CH₂O)₅](EtO)₂Si(CH₂)₃]-SH,
   [[C₁₈H₃₇O-(CH₂-CH₂O)₆](EtO)₂Si(CH₂)₃]-SH,
[[C₃H₇O-(CH₂-CH₂O)₂]₂(EtO)Si(CH₂)₃]-SH,
   [[C₃H₇O-(CH₂-CH₂O)₃]₂(EtO)Si(CH₂)₃]-SH,
   [[C₃H₇O-(CH₂-CH₂O)₄]₂(EtO)Si (CH₂)₃]-SH,
   [[C₃H₇O-(CH₂-CH₂O)₅]₂(EtO)Si (CH₂)₃]-SH,
   [[C₃H₇O-(CH₂-CH₂O)₆]₂(EtO)Si (CH₂)₃]-SH,
[[C₄H₉O-(CH₂-CH₂O)₂]₂(EtO)Si (CH₂)₃]-SH,
   [[C₄H₉O-(CH₂-CH₂O)₃]₂(EtO)Si (CH₂)₃]-SH,
   [[C₄H₉O-(CH₂-CH₂O)₄]₂(EtO)Si (CH₂)₃]-SH,
   [[C₄H₉O-(CH₂-CH₂O)₅]₂(EtO)Si (CH₂)₃]-SH,
   [[C₄H₉O-(CH₂-CH₂O)₆]₂(EtO)Si (CH₂)₃]-SH,
[[C₅H₁₁O-(CH₂-CH₂O)₂]₂(EtO)Si (CH₂)₃]-SH, [[C₅H₁₁O-(CH₂-CH₂O)₃]₂(EtO)Si (CH₂)₃]-SH,

   [[C₅H₁₁O-(CH₂-CH₂O)₄]₂(EtO)Si (CH₂)₃]-SH,
   [[C₅H₁₁O-(CH₂-CH₂O)₅]₂(EtO)Si (CH₂)₃]-SH,
   [[C₅H₁₁O-(CH₂-CH₂O)₆]₂(EtO)Si (CH₂)₃]-SH,
[[C₆H₁₃O-(CH₂-CH₂O)₂]₂(EtO)Si (CH₂)₃]-SH,
   [[C₆H₁₃O-(CH₂-CH₂O)₃]₂(EtO)Si(CH₂)₃]-SH,
   [[C₆H₁₃O-(CH₂-CH₂O)₄]₂(EtO)Si(CH₂)₃]-SH,
   [[C₆H₁₃O-(CH₂-CH₂O)₅]₂(EtO)Si (CH₂)₃]-SH,
   [[C₆H₁₃O-(CH₂-CH₂O)₆] ₂(EtO)Si (CH₂)₃]-SH,
[[C₇H₁₅O-(CH₂-CH₂O)₂]₂(EtO)Si (CH₂)₃]-SH,
   [[C₇H₁₅O-(CH₂-CH₂O)₃]₂(EtO)Si (CH₂)₃]-SH,
   [[C₇H₁₅O-(CH₂-CH₂O)₄]₂(EtO)Si (CH₂)₃]-SH,
   [[C₇H₁₅O-(CH₂-CH₂O)₅]₂(EtO)Si (CH₂)₃]-SH,
   [[C₇H₁₅O-(CH₂-CH₂O)₆]₂(EtO)Si (CH₂)₃]-SH,
[[C₈H₁₇O-(CH₂-CH₂O)₂]₂(EtO)Si (CH₂)₃]-SH,
   [[C₈H₁₇O-(CH₂-CH₂O)₃]₂(EtO)Si (CH₂)₃]-SH,
   [[C₈H₁₇O-(CH₂-CH₂O)₄]₂(EtO)Si (CH₂)₃]-SH,
   [[C₈H₁₇O-(CH₂-CH₂O)₅]₂(EtO)Si (CH₂)₃]-SH,
   [[C₈H₁₇O-(CH₂-CH₂O)₆]₂(EtO)Si (CH₂)₃]-SH,
[[C₉H₁₉O-(CH₂-CH₂O)₂]₂(EtO)Si (CH₂)₃]-SH,
   [[C₉H₁₉O-(CH₂-CH₂O)₃]₂(EtO)Si (CH₂)₃]-SH,
   [[C₉H₁₉O-(CH₂-CH₂O)₄]₂(EtO)Si (CH₂)₃]-SH,
   [[C₉H₁₉O-(CH₂-CH₂O)₅]₂(EtO)Si (CH₂)₃]-SH,
   [[C₉H₁₉O-(CH₂-CH₂O)₆]₂(EtO)Si (CH₂)₃]-SH,
[[C₁₀H₂₁O-(CH₂-CH₂O)₂]₂(EtO)Si (CH₂)₃]-SH,
   [[C₁₀H₂₁O-(CH₂-CH₂O)₃]₂(EtO)Si (CH₂)₃]-SH,
   [[C₁₀H₂₁O-(CH₂-CH₂O)₄]₂(EtO)Si (CH₂)₃]-SH,
   [[C₁₀H₂₁O-(CH₂-CH₂O)₅]₂(EtO)Si (CH₂)₃]-SH,
   [[C₁₀H₂₁O-(CH₂-CH₂O)₆]₂(EtO)Si (CH₂)₃]-SH,
[[C₁₁H₂₃O-(CH₂-CH₂O)₂]₂(EtO)Si (CH₂)₃]-SH,
   [[C₁₁H₂₃O-(CH₂-CH₂O)₃]₂(EtO)Si (CH₂)₃]-SH,
   [[C₁₁H₂₃O-(CH₂-CH₂O)₄]₂(EtO)Si (CH₂)₃]-SH,
   [[C₁₁H₂₃O-(CH₂-CH₂O)₅]₂(EtO)Si (CH₂)₃]-SH,
   [[C₁₁H₂₃O-(CH₂-CH₂O)₆]₂(EtO)Si (CH₂)₃]-SH,
[[C₁₂H₂₅O-(CH₂-CH₂O)₂]₂(EtO)Si (CH₂)₃]-SH,
   [[C₁₂H₂₅O-(CH₂-CH₂O)₃]₂(EtO)Si (CH₂)₃]-SH,
   [[C₁₂H₂₅O-(CH₂-CH₂O)₄]₂(EtO)Si (CH₂)₃]-SH,
   [[C₁₂H₂₅O-(CH₂-CH₂O)₅]₂(EtO)Si (CH₂)₃]-SH,
   [[C₁₂H₂₅O-(CH₂-CH₂O)₆]₂(EtO)Si (CH₂)₃]-SH,
[[C₁₃H₂₇O-(CH₂-CH₂O)₂]₂(EtO)Si (CH₂)₃]-SH,
   [[C₁₃H₂₇O-(CH₂-CH₂O)₃]₂(EtO)Si (CH₂)₃]-SH,
   [[C₁₃H₂₇O-(CH₂-CH₂O)₄]₂(EtO)Si (CH₂)₃]-SH,
   [[C₁₃H₂₇O-(CH₂-CH₂O)₅]₂(EtO)Si (CH₂)₃]-SH,
   [[C₁₃H₂₇O-(CH₂-CH₂O)₆]₂(EtO)Si (CH₂)₃]-SH,
[[C₁₄H₂₉O-(CH₂-CH₂O)₂]₂(EtO)Si (CH₂)₃]-SH,
   [[C₁₄H₂₉O-(CH₂-CH₂O)₃]₂(EtO)Si (CH₂)₃]-SH,
   [[C₁₄H₂₉O-(CH₂-CH₂O)₄]₂(EtO)Si (CH₂)₃]-SH,
   [[C₁₄H₂₉O-(CH₂-CH₂O)₅]₂(EtO)Si (CH₂)₃]-SH,
   [[C₁₄H₂₉O-(CH₂-CH₂O)₆]₂(EtO)Si (CH₂)₃]-SH,
[[C₁₆H₃₃O-(CH₂-CH₂O)₂]₂(EtO)Si (CH₂)₃]-SH,
   [[C₁₆H₃₃O-(CH₂-CH₂O)₃]₂(EtO)Si (CH₂)₃]-SH,
   [[C₁₆H₃₃O-(CH₂-CH₂O)₄]₂(EtO)Si (CH₂)₃]-SH,
   [[C₁₆H₃₃O-(CH₂-CH₂O)₅]₂(EtO)Si (CH₂)₃]-SH,
   [[C₁₆H₃₃O-(CH₂-CH₂O)₆]₂(EtO)Si (CH₂)₃]-SH,
[[C₁₇H₃₅O-(CH₂-CH₂O)₂]₂(EtO)Si (CH₂)₃]-SH,
   [[C₁₇H₃₅O-(CH₂-CH₂O)₃]₂(EtO)Si (CH₂)₃]-SH,
   [[C₁₇H₃₅O-(CH₂-CH₂O)₄]₂(EtO)Si (CH₂)₃]-SH,
   [[C₁₇H₃₅O-(CH₂-CH₂O)₅]₂(EtO)Si (CH₂)₃]-SH,
   [[C₁₇H₃₅O-(CH₂-CH₂O)₆]₂(EtO)Si (CH₂)₃]-SH,
[[C₁₈H₃₇O-(CH₂-CH₂O)₂]₂(EtO)Si (CH₂)₃]-SH,
   [[C₁₈H₃₇O-(CH₂-CH₂O)₃]₂(EtO)Si (CH₂)₃]-SH,
   [[C₁₈H₃₇O-(CH₂-CH₂O)₄]₂(EtO)Si (CH₂)₃]-SH,
   [[C₁₈H₃₇O-(CH₂-CH₂O)₅]₂(EtO)Si (CH₂)₃]-SH,
   [[C₁₈H₃₇O-(CH₂-CH₂O)₆]₂(EtO)Si (CH₂)₃]-SH,
[[C₁₀H₂₁O-(CH₂-CH₂O)₂]₃Si(CH₂)₃]-SH,
   [[C₁₀H₂₁O-(CH₂-CH₂O)₃]₃Si(CH₂)₃]-SH,
   [[C₁₀H₂₁O-(CH₂-CH₂O)₄]₃Si(CH₂)₃]-SH,
   [[C₁₀H₂₁O-(CH₂-CH₂O)₅]₃Si(CH₂)₃]-SH,
   [[C₁₀H₂₁O-(CH₂-CH₂O)₆]₃Si(CH₂)₃]-SH,
[[C₁₂H₂₅O-(CH₂-CH₂O)₂]₃Si(CH₂)₃]-SH,
   [[C₁₂H₂₅O-(CH₂-CH₂O)₃]₃Si(CH₂)₃]-SH,
   [[C₁₂H₂₅O-(CH₂-CH₂O)₄]₃Si(CH₂)₃]-SH,
   [[C₁₂H₂₅O-(CH₂-CH₂O)₅]₃Si(CH₂)₃]-SH,
   [[C₁₂H₂₅O-(CH₂-CH₂O)₆]₃Si(CH₂)₃]-SH,
[[C₁₃H₂₇O-(CH₂-CH₂O)₂]₃Si(CH₂)₃]-SH,
   [[C₁₃H₂₇O-(CH₂-CH₂O)₃]₃Si(CH₂)₃]-SH,
   [[C₁₃H₂₇O-(CH₂-CH₂O)₄]₃Si(CH₂)₃]-SH,
   [[C₁₃H₂₇O-(CH₂-CH₂O)₅]₃Si(CH₂)₃]-SH,
   [[C₁₃H₂₇O-(CH₂-CH₂O)₆]₃Si(CH₂)₃]-SH,
[[C₁₄H₂₉O-(CH₂-CH₂O)₂]₃Si(CH₂)₃]-SH,
   [[C₁₄H₂₉O-(CH₂-CH₂O)₃]₃Si(CH₂)₃]-SH,
   [[C₁₄H₂₉O-(CH₂-CH₂O)₄]₃Si(CH₂)₃]-SH,
   [[C₁₄H₂₉O-(CH₂-CH₂O)₅]₃Si(CH₂)₃]-SH,
   [[C₁₄H₂₉O-(CH₂-CH₂O)₆]₃Si(CH₂)₃]-SH,
[[C₁₅H₃₁O-(CH₂-CH₂O)₂]₃Si(CH₂)₃]-SH,
   [[C₁₅H₃₁O-(CH₂-CH₂O)₃]₃Si(CH₂)₃]-SH,
   [[C₁₅H₃₁O-(CH₂-CH₂O)₄]₃Si(CH₂)₃]-SH,
   [[C₁₅H₃₁O-(CH₂-CH₂O)₅]₃Si(CH₂)₃]-SH,
   [[C₁₅H₃₁O-(CH₂-CH₂O)₆]₃Si(CH₂)₃]-SH,
[[C₁₆H₃₃O-(CH₂-CH₂O)₂]₃Si(CH₂)₃]-SH,
   [[C₁₆H₃₃O-(CH₂-CH₂O)₃]₃Si(CH₂)₃]-SH,
   [[C₁₆H₃₃O-(CH₂-CH₂O)₄]₃Si(CH₂)₃]-SH,
   [[C₁₆H₃₃O-(CH₂-CH₂O)₅]₃Si(CH₂)₃]-SH,
   [[C₁₆H₃₃O-(CH₂-CH₂O)₆]₃Si(CH₂)₃]-SH,
[[C₁₈H₃₇O-(CH₂-CH₂O)₂]₃Si(CH₂)₃]-SH,
   [[C₁₈H₃₇O-(CH₂-CH₂O)₃]₃Si(CH₂)₃]-SH,
   [[C₁₈H₃₇O-(CH₂-CH₂O)₄]₃Si(CH₂)₃]-SH oder
   [[C₁₈H₃₇O-(CH₂-CH₂O)₅]₃Si(CH₂)₃]-SH,
   [[C₁₈H₃₇O-(CH₂-CH₂O)₆]₃Si(CH₂)₃]-SH,
wobei die Alkylreste unverzweigt oder verzweigt sein können.

Verbindungen der Formel II mit Alk = C₃H₇, C₄H₉, C₅H₁₁, C₆H₁₃, C₇H₁₅, C₈H₁₇, C₉H₁₉, C₁₀H₂₁, C₁₁H₂₃, C₁₂H₂₅, C₁₃H₂₇, C₁₄H₂₉, C₁₅H₃₁, C₁₆H₃₃, C₁₇H₃₅ oder C₁₈H₃₇ können sein:
[[Alk-O-(CH₂-CH(CH₃)O-)₂](MeO)₂Si(CH₂)₃]-SH,
   [[Alk-O-(CH₂-CH(CH₃)O-)₃](MeO)₂Si(CH₂)₃]-SH,
   [[Alk-O-(CH₂-CH(CH₃)O-)₄](MeO)₂Si(CH₂)₃]-SH,
   [[Alk-O-(CH₂-CH(CH₃)O-)₅](MeO)₂Si(CH₂)₃]-SH,
   [[Alk-O-(CH₂-CH(CH₃)O-)₆](MeO)₂Si(CH₂)₃]-SH,
[[Alk-0- (CH₂-CH(CH₃)O-)₂]₂(MeO)Si (CH₂)₃]-SH,
   [[Alk-0- (CH₂-CH(CH₃)O-)₃]₂(MeO)Si (CH₂)₃]-SH,
   [[Alk-0- (CH₂-CH(CH₃)O-)₄]₂(MeO)Si (CH₂)₃]-SH,
   [[Alk-O-(CH₂-CH(CH₃)O-)₅]₂(MeO)Si (CH₂)₃]-SH,
   [[Alk-O-(CH₂-CH(CH₃)O-)₆]₂(MeO)Si (CH₂)₃]-SH,
[[Alk-O-(CH₂-CH(CH₃)O-)₂](Me)(MeO)Si (CH₂)₃]-SH,
   [[Alk-O-(CH₂-CH(CH₃)O-)₃](Me)(MeO)Si (CH₂)₃]-SH,
   [[Alk-O-(CH₂-CH(CH₃)O-)₄](Me)(MeO)Si (CH₂)₃]-SH,
   [[Alk-O-(CH₂-CH(CH₃)O-)₅](Me)(MeO)Si (CH₂)₃]-SH,
   [[Alk-O-(CH₂-CH(CH₃)O-)₆](Me)(MeO)Si (CH₂)₃]-SH,
[[Alk-O-(CH₂-CH(CH₃)O-)₂](EtO)₂Si(CH₂)₃]-SH,
   [[Alk-O-(CH₂-CH(CH₃)O-)₃](EtO)₂Si(CH₂)₃]-SH,
   [[Alk-O-(CH₂-CH(CH₃)O-)₄](EtO)₂Si(CH₂)₃]-SH,
   [[Alk-O-(CH₂-CH(CH₃)O-)₅](EtO)₂Si(CH₂)₃]-SH,
   [[Alk-O-(CH₂-CH(CH₃)O-)₆](EtO)₂Si(CH₂)₃]-SH,
[[Alk-O-(CH₂-CH(CH₃)O-)₂]₂(EtO)Si (CH₂)₃]-SH,
   [[Alk-O-(CH₂-CH(CH₃)O-)₃]₂(EtO)Si (CH₂)₃]-SH,
   [[Alk-O-(CH₂-CH(CH₃)O-)₄]₂(EtO)Si (CH₂)₃]-SH,
   [[Alk-O-(CH₂-CH(CH₃)O-)₅]₂(EtO)Si (CH₂)₃]-SH,
   [[Alk-O-(CH₂-CH(CH₃)O-)₆]₂(EtO)Si (CH₂)₃]-SH,
[[Alk-O-(CH₂-CH(CH₃)O-)₂](Me)(EtO)Si (CH₂)₃]-SH,
   [[Alk-O-(CH₂-CH(CH₃)O-)₃](Me)(EtO)Si (CH₂)₃]-SH,
   [[Alk-O-(CH₂-CH(CH₃)O-)₄](Me)(EtO)Si (CH₂)₃]-SH,
   [[Alk-O-(CH₂-CH(CH₃)O-)₅](Me)(EtO)Si (CH₂)₃]-SH,
   [[Alk-O-(CH₂-CH(CH₃)O-)₆](Me)(EtO)Si (CH₂)₃]-SH,
[[Alk-O-(CH₂-CH(CH₃)O-)₂]₂(Me)Si(CH₂)₃]-SH,
   [[Alk-O-(CH₂-CH(CH₃)O-)₃]₂(Me)Si(CH₂)₃]-SH,
   [[Alk-O-(CH₂-CH(CH₃)O-)₄]₂(Me)Si(CH₂)₃]-SH,
   [[Alk-O-(CH₂-CH(CH₃)O-)₅]₂(Me)Si(CH₂)₃]-SH,
   [[Alk-O-(CH₂-CH(CH₃)O-)₆]₂(Me)Si(CH₂)₃]-SH,
[[Alk-O-(CH₂-CH(CH₃)O-)₂](Me)₂Si(CH₂)₂]-SH,
   [[Alk-O-(CH₂-CH(CH₃)O-)₃](Me)₂Si(CH₂)₃]-SH,
   [[Alk-O-(CH₂-CH(CH₃)O-)₄](Me)₂Si(CH₂)₃]-SH,
   [[Alk-O-(CH₂-CH(CH₃)O-)₅](Me)₂Si(CH₂)₃]-SH oder
[[Alk-O-(CH₂-CH(CH₃)O-)₆](Me) ₂Si (CH₂)₃]-SH,
wobei die Gruppen Alk unverzweigt oder verzweigt sein können.

Die erfindungsgemäßen Mischungen können zusätzlich 0,01-50 Gew.-%, bevorzugt 0,05-40 Gew.-%, besonders bevorzugt 0,1-25 Gew.-%, ganz besonders bevorzugt 0,5-10 Gew.-%, außerordentlich bevorzugt 2-8 Gew.-%, silanolgruppenhaltige, polysulfidische Organo(alkylpolyethersilane), bezogen auf das Gesamtgewicht der silanolgruppenhaltigen und silanolgruppenfreien (Mercaptoorganyl)alkylpolyethersilane, enthalten.

Die erfindungsgemäßen Mischungen können zusätzlich 0,1-50 Gew.-%, 0,5-50 Gew.-%, bevorzugt 1-50 Gew.-%, besonders bevorzugt 1-35 Gew.-%, ganz besonders bevorzugt 3-25 Gew.-%, außerordentlich bevorzugt 5-25 Gew.-%, silanolgruppenfreie, polysulfidische Organo(alkylpolyethersilane), bezogen auf das Gesamtgewicht der silanolgruppenhaltigen und silanolgruppenfreien (Mercaptoorganyl)alkylpolyethersilane, enthalten.

Die erfindungsgemäßen Mischungen können zusätzlich 0,1-50 Gew.-%, bevorzugt 1-45 Gew.-%, besonders bevorzugt 3-40 Gew.-%, ganz besonders bevorzugt 5-30 Gew.-%, außerordentlich bevorzugt 8-25 Gew.-%, Alkylpolyetheralkohole, bezogen auf das Gesamtgewicht der silanolgruppenhaltigen und silanolgruppenfreien (Mercaptoorganyl)alkylpolyethersilane, enthalten.

Silanolgruppenhaltige, polysulfidische Organo(alkylpolyethersilane) können Verbindungen der allgemeinen Formel III

[(X)(X')(X")Si-R^{I}]-Sₘ-[R^{I}-Si(X)(X')(X')] III

sein, wobei X, X', X" und R^{I} unabhängig voneinander sind und die oben genannte Bedeutung haben und m im Mittel 1,5-8, verzugsweise 2-4, besonders bevorzugt 2-3,5, ist.

Silanolgruppenfreie, polysulfidische Organo(alkylpolyethersilane) können Verbindungen der allgemeinen Formel IV

[(X)(X"')(X"'Si-R^{I}]-Sₘ-[R¹-Si(X)(X"')(X"')] IV

sein, wobei m, X, X"' und R^{I} unabhängig voneinander sind und die oben genannten Bedeutungen haben.

Alkylpolyetheralkohole können Verbindungen der allgemeinen Formel V

HO- ((CR^{II}₂)_{w}-O-)ᵥ Alk V

sein, wobei R^{II}, w, v und Alk die oben genannten Bedeutungen haben.

Bevorzugte Verbindungen der allgemeinen Formel III können sein:
[[C₃H₇O-(CH₂-CH₂O)₂](Me)(HO)Si (CH₂)₃]-Sₘ-[(CH₂)₃Si(OMe)(Me) [(OCH₂-CH₂)₃-OC₃H₇]],
   [[C₃H₇O-(CH₂-CH₂O)₃](Me)(HO)Si (CH₂)₃]-Sₘ-[(CH₂)₃Si(OMe)(Me) [(OCH₂-CH₂)₃-OC₃H₇]],
   [C₃H₇O-(CH₂-CH₂O)₄](Me)(HO)Si(CH₂)₃]-Sₘ-[(CH₂)₃Si(OMe)(Me) [(OCH₂-CH₂)₃-OC₃H₇]],
   [C₃H₇O-(CH₂-CH₂O)₅](Me)(HO)Si(CH₂)₃]-Sₘ-[(CH₂)₃Si(OMe)(Me) [(OCH₂-CH₂)₃-OC₃H₇]],
   [[C₃H₇O-(CH₂-CH₂O)₆](Me)(HO)Si (CH₂)₃]-Sₘ-[(CH₂)₃Si(OMe)(Me) [(OCH₂-CH₂)₃-OC₃H₇]],
[[C₄H₉O-(CH₂-CH₂O)₂](Me)(HO)Si (CH₂)₃]-Sₘ-[(CH₂)₃Si(OMe)(Me) [(OCH₂-CH₂)₃-OC₄H₉]],
   [C₄H₉O-(CH₂-CH₂O)₃](Me)(HO)Si (CH₂)₃]-Sₘ-[(CH₂)₃Si(OMe)(Me) [(OCH₂-CH₂)₃-OC₄H₉]],
   [[C₄H₉O-(CH₂-CH₂O)₄](Me)(HO)Si (CH₂)₃]-Sₘ-[(CH₂)₃Si(OMe)(Me) [(OCH₂-CH₂)₃-OC₄H₉]],
   [[C₄H₉O-(CH₂-CH₂O)₅](Me)(HO)Si (CH₂)₃]-Sₘ-[(CH₂)₃Si(OMe)(Me) [(OCH₂-CH₂)₃-OC₄H₉]],
   [C₄H₉O-(CH₂-CH₂O)₆](Me)(HO)Si (CH₂)₃]-Sₘ-[(CH₂)₃Si(OMe)(Me) [(OCH₂-CH₂)₃-OC₄H₉]],
[[C₅H₁₁O-(CH₂-CH₂O)₂](Me)(HO)Si (CH₂)₃] -Sₘ-[(CH₂)₃Si(OMe)(Me)[(OCH₂-CH₂)₃-OC₅H₁₁]],
   [[C₅H₁₁O-(CH₂-CH₂O)₃](Me)(HO)Si(CH₂)₃]-Sₘ-[(CH₂)₃Si(OMe)(Me)[(OCH₂-CH₂)₃-OC₅H₁₁]],
   [[C₅H₁₁O-(CH₂-CH₂O)₄](Me)(HO)Si(CH₂)₃]-Sₘ-[(CH₂)₃Si(OMe)(Me)[(OCH₂-CH₂)₃-OC₅H₁₁]],
   [[C₅H₁₁O-(CH₂-CH₂O)₅](Me)(HO)Si(CH₂)₃]-Sₘ-[(CH₂)₃Si(OMe)(Me)[(OCH₂-CH₂)₃-OC₅H₁₁]],
   [[C₅H₁₁O-(CH₂-CH₂O)₆](Me)(HO)Si (CH₂)₃]-Sₘ-[(CH₂)₃Si(OMe)(Me) [(OCH₂-CH₂)₃-OC₅H₁₁]],
[[C₆H₁₃O-(CH₂-CH₂O)₂](Me)(HO)Si (CH₂)₃]-Sₘ-[(CH₂)₃Si(OMe)(Me) [(OCH₂-CH₂)₃-OC₆H₁₃]],
   [[C₆H₁₃O-(CH₂-CH₂O)₃](Me) (HO)Si (CH₂)₃]-Sₘ-[(CH₂)₃Si(OMe)(Me) [(OCH₂-CH₂)₃-OC₆H₁₃]],
   [[C₆H₁₃O-(CH₂-CH₂O)₄](Me) (HO)Si (CH₂)₃]-Sₘ-[(CH₂)₃Si(OMe)(Me) [(OCH₂-CH₂)₃-OC₆H₁₃]],
   [[C₆H₁₃O-(CH₂-CH₂O)₅](Me)(HO)Si(CH₂)₃]-Sₘ-[(CH₂)₃Si(OMe)(Me)[(OCH₂-CH₂)₃-OC₆H₁₃]],
   [[C₆H₁₃O-(CH₂-CH₂O)₆](Me) (HO)Si(CH₂)₃]-Sₘ-[(CH₂)₃Si(OMe)(Me) [(OCH₂-CH₂)₃-OC₆H₁₃]],
[[C₇H₁₅O-(CH₂-CH₂O)₂](Me) (HO)Si (CH₂)₃]-Sₘ-[(CH₂)₃Si(OMe)(Me)[(OCH₂-CH₂)3-OC₇H₁₅]],
   [[C₇H₁₅O-(CH₂-CH₂O)₃](Me)(HO)Si(CH₂)₃]-Sₘ-[(CH₂)₃Si(OMe)(Me)[(OCH₂-CH₂)₃-OC₇H₁₅]],
   [[C₇H₁₅O-(CH₂-CH₂O)₄](Me)(HO)Si(CH₂)₃]-Sₘ-[(CH₂)₃Si(OMe)(Me)[(OCH₂-CH₂)3-OC₇H₁₅]],
   [[C₇H₁₅O-(CH₂-CH₂O)₅](Me)(HO)Si(CH₂)₃]-Sₘ-[(CH₂)₃Si(OMe)(Me)[(OCH₂-CH₂)₃-OC₇H₁₅]],
   [[C₇H₁₅O-(CH₂-CH₂O)₆](Me)(HO)Si(CH₂)₃]-Sₘ-[(CH₂)₃Si(OMe)(Me)[(OCH₂-CH₂)₃-OC₇H₁₅]],
[[C₈H₁₇O-(CH₂-CH₂O)₂](Me)(HO)Si(CH₂)₃]-Sₘ-[(CH₂)₃Si(OMe)(Me)[(OCH₂-CH₂)₃-OC₈H₁₇]],
   [[C₈H₁₇O-(CH₂-CH₂O)₃](Me)(HO)Si(CH₂)₃]-Sₘ-[(CH₂)₃Si(OMe)(Me)[(OCH₂-CH₂)₃-OC₈H₁₇]],
   [[C₈H₁₇O-(CH₂-CH₂O)₄](Me)(HO)Si(CH₂)₃]-Sₘ-[(CH₂)₃Si(OMe)(Me)[(OCH₂-CH₂)₃-OC₈H₁₇]],
   [[C₈H₁₇O-(CH₂-CH₂O)₅](Me) (HO)Si (CH₂)₃]-Sₘ-[(CH₂)₃Si(OMe)(Me)[(OCH₂-CH₂)₃-OC₈H₁₇]],
   [[C₈H₁₇O-(CH₂-CH₂O)₆](Me)(HO)Si(CH₂)₃]-Sₘ-[(CH₂)₃Si(OMe)(Me)[(OCH₂-CH₂)₃-OC₈H₁₇]],
[[C₉H₁₉O-(CH₂-CH₂O)₂](Me)(HO)Si(CH₂)₃]-Sₘ-[(CH₂)₃Si(OMe)(Me)[(OCH₂-CH₂)₃-OC₉H₁₉]],
   [[C₉H₁₉O-(CH₂-CH₂O)₃](Me)(HO)Si(CH₂)₃]-Sₘ-[(CH₂)₃Si(OMe)(Me)[(OCH₂-CH₂)₃-OC₉H₁₉]],
   [[C₉H₁₉O-(CH₂-CH₂O)₄](Me)(HO)Si (CH₂)₃]-Sₘ-[(CH₂)₃Si(OMe)(Me) [(OCH₂-CH₂)₃-OC₉H₁₉]],
   [[C₉H₁₉O-(CH₂-CH₂O)₅](Me)(HO)Si (CH₂)₃]-Sₘ-[(CH₂)₃Si(OMe)(Me) [(OCH₂-CH₂)₃-OC₉H₁₉]],
   [[C₉H₁₉O-(CH₂-CH₂O)₆](Me)(HO)Si (CH₂)₃]-Sₘ-[(CH₂)₃Si(OMe)(Me) [(OCH₂-CH₂)₃-OC₉H₁₉]],
[[C₁₀H₂₁O-(CH₂-CH₂O)₂](Me) (HO)Si (CH₂)₃]-Sₘ-[(CH₂)₃Si(OMe)(Me)[(OCH₂-CH₂)₃-OC₁₀H₂₁]],
   [[C₁₀H₂₁O-(CH₂-CH₂O)₃](Me)(HO)Si(CH₂)₃]-Sₘ-[(CH₂)₃Si(OMe)(Me)[(OCH₂-CH₂)₃-OC₁₀H₂₁]],
   [[C₁₀H₂₁O-(CH₂-CH₂O)₄](Me)(HO)Si (CH₂)₃]-Sₘ-[(CH₂)₃Si(OMe)(Me)[(OCH₂-CH₂)₃-OC₁₀H₂₁]],
   [C₁₀H₂₁O-(CH₂-CH₂O)₅](Me) (HO)Si (CH₂)₃]-Sₘ-[(CH₂)₃Si(OMe)(Me)[(OCH₂-CH₂)₃-OC₁₀H₂₁]],
   [C₁₀H₂₁O-(CH₂-CH₂O)₆](Me) (HO)Si (CH₂)₃]-Sₘ-[(CH₂)₃Si(OMe)(Me)[(OCH₂-CH₂)₃-OC₁₀H₂₁]],
[[C₁₁H₂₃O-(CH₂-CH₂O)₂](Me)(HO)Si (CH₂)₃]-Sₘ-[(CH₂)₃Si(OMe)(Me)[(OCH₂-CH₂)₃-OC₁₁H₂₃]],
   [[C₁₁H₂₃O-(CH₂-CH₂O)₃](Me) (HO)Si (CH₂)₃]-Sₘ-[(CH₂)₃Si(OMe)(Me)[(OCH₂-CH₂)₃-OC₁₁H₂₃]],
   [[C₁₁H₂₃O-(CH₂-CH₂O)₄](Me)(HO)Si(CH₂)₃]-Sₘ-[(CH₂)₃Si(OMe)(Me) [(OCH₂-CH₂)₃-OC₁₁H₂₃]],
   [[C₁₁H₂₃O-(CH₂-CH₂O)₅](Me)(HO)Si (CH₂)₃]-Sₘ-[(CH₂)₃Si(OMe)(Me) [(OCH₂-CH₂)₃-OC₁₁H₂₃]],
   [[C₁₁H₂₃O-(CH₂-CH₂O)₆](Me) (HO)Si (CH₂)₃]-Sₘ-[(CH₂)₃Si(OMe)(Me) [(OCH₂-CH₂)₃-OC₁₁H₂₃]],
[[C₁₂H₂₅O-(CH₂-CH₂O)₂](Me)(HO)Si (CH₂)₃]-Sₘ-[(CH₂)₃Si(OMe)(Me)[(OCH₂-CH₂)₃-OC₁₂H₂₅]],
   [[C₁₂H₂₅O-(CH₂-CH₂O)₃](Me)(HO)Si (CH₂)₃]-Sₘ-[(CH₂)₃Si(OMe)(Me)[(OCH₂-CH₂)₃-OC₁₂H₂₅]],
   [[C₁₂H₂₅O-(CH₂-CH₂O)₄](Me)(HO)Si(CH₂)₃]-Sₘ-[(CH₂)₃Si(OMe)(Me)[(OCH₂-CH₂)3-OC₁₂H₂₅]],
   [[C₁₂H₂₅O-(CH₂-CH₂O)₅](Me)(HO)Si(CH₂)₃]-Sₘ-[(CH₂)₃Si(OMe)(Me)[(OCH₂-CH₂)₃-OC₁₂H₂₅]],
   [[C₁₂H₂₅O-(CH₂-CH₂O)₆](Me) (HO)Si (CH₂)₃]-Sₘ-[(CH₂)₃Si(OMe)(Me) [(OCH₂-CH₂)₃-OC₁₂H₂₅]],
[[C₁₃H₂₇O-(CH₂-CH₂O)₂](Me)(HO)Si (CH₂)₃]-Sₘ-[(CH₂)₃Si(OMe)(Me) [(OCH₂-CH₂)₃-OC₁₃H₂₇]],
   [[C₁₃H₂₇O-(CH₂-CH₂O)₃](Me)(HO)Si (CH₂)₃]-Sₘ-[(CH₂)₃Si(OMe)(Me) [(OCH₂-CH₂)₃-OC₁₃H₂₇]],
   [[C₁₃H₂₇O-(CH₂-CH₂O)₄](Me) (HO)Si (CH₂)₃]-Sₘ-[(CH₂)₃Si(OMe)(Me) [(OCH₂-CH₂)₃-OC₁₃H₂₇]],
   [[C₁₃H₂₇O-(CH₂-CH₂O)₅](Me)(HO)Si (CH₂)₃]-Sₘ-[(CH₂)₃Si(OMe)(Me) [(OCH₂-CH₂)₃-OC₁₃H₂₇]],
   [[C₁₃H₂₇O-(CH₂-CH₂O)₆](Me) (HO)Si (CH₂)₃]-Sₘ-[(CH₂)₃Si(OMe)(Me) [(OCH₂-CH₂)₃-OC₁₃H₂₇]],
[[C₁₄H₂₉O-(CH₂-CH₂O)₂](Me)(HO)Si (CH₂)₃]-Sₙ-[(CH₂)₃Si(OMe)(Me) [(OCH₂-CH₂)₃-OC₁₄H₂₉]],
   [[C₁₄H₂₉O-(CH₂-CH₂O)₃](Me)(HO)Si (CH₂)₃]-Sₘ-[(CH₂)₃Si(OMe)(Me)[(OCH₂-CH₂)₃-OC₁₄H₂₉]],
   [[C₁₄H₂₉O-(CH₂-CH₂O)₄](Me)(HO)Si (CH₂)₃]-Sₘ-[(CH₂)₃Si(OMe)(Me) [(OCH₂-CH₂)₃-OC₁₄H₂₉]],
   [[C₁₄H₂₉O-(CH₂-CH₂O)₅](Me)(HO)Si(CH₂)₃]-Sₘ-[(CH₂)₃Si(OMe)(Me)[(OCH₂-CH₂)₃-OC₁₄H₂₉]],
   [[C₁₄H₂₉O-(CH₂-CH₂O)₆](Me) (HO)Si (CH₂)₃]-Sₘ-[(CH₂)₃Si(OMe)(Me)[(OCH₂-CH₂)₃-OC₁₄H₂₉]],
[[C₁₅H₃₁O-(CH₂-CH₂O)₂](Me)(HO)Si(CH₂)₃]-Sₘ-[(CH₂)₃Si(OMe)(Me)[(OCH₂-CH₂)₃-OC₁₅H₃₁]],
   [[C₁₅H₃₁O-3(CH₂-CH₂O)₃](Me) (HO)Si(CH₂)₃]-Sₘ-[(CH₂)₃Si(OMe)(Me)[(OCH₂-CH₂)₃-OC₁₅H₃₁]],
   [[C₁₅H₃₁O-(CH₂-CH₂O)₄](Me)(HO)Si(CH₂)₃]-Sₘ-[(CH₂)₃Si(OMe)(Me)[(OCH₂-CH₂)₃-OC₁₅H₃₁]],
   [[C₁₅H₃₁O-(CH₂-CH₂O)₅](Me)(HO)Si(CH₂)₃]-Sₘ-[(CH₂)₃Si(OMe)(Me)[(OCH₂-CH₂)₃-OC₁₅H₃₁]],
   [[C₁₅H₃₁O-(CH₂-CH₂O)₆](Me)(HO)Si(CH₂)₃]-Sₘ-[(CH₂)₃Si(OMe)(Me)[(OCH₂-CH₂)₃-OC₁₅H₃₁]],
[[C₁₆H₃₃O-(CH₂-CH₂O)₂](Me)(HO)Si(CH₂)₃]-Sₘ-[(CH₂)₃Si(OMe)(Me)[(OCH₂-CH₂)₃-OC₁₀H₃₃]],
   [[C₁₆H₃₃O-(CH₂-CH₂O)₃](Me)(HO)Si(CH₂)₃]-Sₘ-[(CH₂)₃Si(OMe)(Me)[(OCH₂-CH₂)₃-OC₁₆H₃₃]],
   [[C₁₆H₃₃O-(CH₂-CH₂O)₄](Me)(HO)Si(CH₂)₃]-Sₘ-[(CH₂)₃Si(OMe)(Me)[(OCH₂-CH₂)₃-OC₁₆H₃₃]],
   [[C₁₆H₃₃O-(CH₂-CH₂O)₅](Me)(HO)Si(CH₂)₃]-Sₘ-[(CH₂)₃Si(OMe)(Me)[(OCH₂-CH₂)₃-OC₁₆H₃₃]],
   [[C₁₆H₃₃O-(CH₂-CH₂O)₆](Me)(HO)Si(CH₂)₃]-Sₘ-[(CH₂)₃Si(OMe)(Me)[(OCH₂-CH₂)₃-OC₁₆H₃₃]],
[[C₁₇H₃₅O-(CH₂-CH₂O)₂](Me)(HO)Si(CH₂)₃]-Sₘ-[(CH₂)₃Si(OMe)(Me)[(OCH₂-CH₂)₃-OC₁₇H₃₅]],
   [[C₁₇H₃₅O-(CH₂-CH₂O)₃](Me)(HO)Si(CH₂)₃]-Sₘ-[(CH₂)₃Si(OMe)(Me)[(OCH₂-CH₂)₃-OC₁₇H₃₅],
   [[C₁₇H₃₅O-(CH₂-CH₂O)₄](Me)(HO)Si(CH₂)₂]-Sₘ-[(CH₂)₃Si(OMe)(Me)[(OCH₂-CH₂)₃-OC₁₇H₃₅]],
   [[C₁₇H₃₅O-(CH₂-CH₂O)₅](Me)(HO)Si(CH₂)₃]-Sₘ-[(CH₂)₃Si(OMe)(Me)[(OCH₂-CH₂)₃-OC₁₇H₃₅]],
   [[C₁₇H₃₅O-(CH₂-CH₂O)₆](Me)(HO)Si(CH₂)₃]-Sₘ-[(CH₂)₃Si(OMe)(Me)[(OCH₂-CH₂)₃-OC₁₇H₃₅]],
[[C₁₈H₃₇O-(CH₂-CH₂O)₂](Me)(HO)Si(CH₂)₃]-Sₘ-[(CH₂)₃Si(OMe)(Me)[(OCH₂-CH₂)₃-OC₁₈H₃₇]],
   [[C₁₈H₃₇O-(CH₂-CH₂O)₃](Me) (HO)Si (CH₂)₃]-Sₘ-[(CH₂)₃Si(OMe)(Me) [(OCH₂-CH₂)₃-OC₁₈H₃₇]],
   [[C₁₈H₃₇O-(CH₂-CH₂O)₄](Me) (HO)Si (CH₂)₃]-Sₘ-[(CH₂)₃Si(OMe)(Me) [(OCH₂-CH₂)₃-OC₁₈H₃₇]],
   [[C₁₈H₃₇O-(CH₂-CH₂O)₅](Me) (HO)Si (CH₂)₃]-Sₘ-[(CH₂)₃Si(OMe)(Me) [(OCH₂-CH₂)₃-OC₁₈H₃₇]],
[[C₃H₇O-(CH₂-CH₂O)₂](MeO)(HO)Si (CH₂)₃]-Sₘ-[(CH₂)₃Si(OMe)₂[(OCH₂-CH₂)₃-OC₃H₇]],
   [[C₃H₇O-(CH₂-CH₂O)₃](MeO)(HO)Si(CH₂)₃]-Sₘ-[(CH₂)₃Si(OMe)₂[(OCH₂-CH₂)₃-OC₃H₇]],
   [[C₃H₇O-(CH₂-CH₂O)₄](MeO)(HO)Si(CH₂)₃]-Sₘ-[(CH₂)₃Si(OMe)₂[(OCH₂-CH₂)₃-OC₃H₇]],
   [[C₃H₇O-(CH₂-CH₂O)₅](MeO)(HO)Si (CH₂)₃]-Sₘ-[(CH₂)₃Si(OMe)₂[(OCH₂-CH₂)3-OC₃H₇]],
   [[C₃H₇O-(CH₂-CH₂O)₆](MeO)(HO)Si(CH₂)₃]-Sₘ-[(CH₂)₃Si(OMe)₂[(OCH₂-CH₂)₃-OC₃H₇]],
[[C₄H₉O-(CH₂-CH₂O)₂](MeO)(HO)Si (CH₂)₃]-Sₘ-[(CH₂)₃Si(OMe)₂[(OCH₂-CH₂)₃-OC₄H₉]],
   [[C₄H₉O-(CH₂-CH₂O)₃](MeO)(HO)Si (CH₂)₃]-Sₘ-[(CH₂)₃Si(OMe)₂[(OCH₂-CH₂)3-OC₄H₉]],
   [[C₄H₉O-(CH₂-CH₂O)₄](MeO)(HO)Si (CH₂)₃]-Sₘ-[(CH₂)₃Si(OMe)₂[(OCH₂-CH₂)3-OC₄H₉]],
   [[C₄H₉O-(CH₂-CH₂O)₅](MeO)(HO)Si (CH₂)₃]-Sₘ-[(CH₂)₃Si(OMe)₂[(OCH₂-CH₂)₃-OC₄H₉]],
   [[C₄H₉O-(CH₂-CH₂O)₆](MeO)(HO)Si (CH₂)₃]-Sₘ-[(CH₂)₃Si(OMe)₂[(OCH₂-CH₂)₃-OC₄H₉]],
[[C₅H₁₁O-(CH₂-CH₂O)₂](MeO)(HO)Si(CH₂)₃]-Sₘ-[(CH₂)₃Si(OMe)₂[(OCH₂-CH₂)₃-OC₅H₁₁]],
   [[C₅H₁₁O-(CH₂-CH₂O)₃](MeO)(HO)Si(CH₂)₃]-Sₘ-[(CH₂)₃Si(OMe)₂[(OCH₂-CH₂)₃-OC₅H₁₁]],
   [[C₅H₁₁O-(CH₂-CH₂O)₄](MeO)(HO)Si(CH₂)₃]-Sₘ-[(CH₂)₃Si(OMe)₂[(OCH₂-CH₂)₃-OC₅H₁₁]],
   [[C₅H₁₁O-(CH₂-CH₂O)₅](MeO)(HO)Si(CH₂)₃]-Sₘ-[(CH₂)₃Si(OMe)₂[(OCH₂-CH₂)₃-OC₅H₁₁]],
   [[C₅H₁₁O-(CH₂-CH₂O)₆](MeO)(HO)Si(CH₂)₃]-Sₘ-[(CH₂)₃Si(OMe)₂[(OCH₂-CH₂)₃-OC₅H₁₁]],
[C₆H₁₃O-(CH₂-CH₂O)₂](MeO)(HO)Si (CH₂)₃]-Sₘ-[(CH₂)₃Si(OMe)₂[(OCH₂-CH₂)₃-OC₆H₁₃]],
   [[C₆H₁₃O-(CH₂-CH₂O)₃](MeO)(HO)Si(CH₂)₃]-Sₘ-[(CH₂)₃Si(OMe)₂[(OCH₂-CH₂)₃-OC₆H₁₃]],
   [[C₆H₁₃O-(CH₂-CH₂O)₄](MeO)(HO)Si(CH₂)₃]-Sₘ-[(CH₂)₃Si(OMe)₂[(OCH₂-CH₂)₃-OC₆H₁₃]],
   [[C₆H₁₃O-(CH₂-CH₂O)₅](MeO)(HO)Si(CH₂)₃]-Sₘ-[(CH₂)₃Si(OMe)₂[(OCH₂-CH₂)₃-OC₆H₁₃]],
   [[C₆H₁₃O-(CH₂-CH₂O)₆](MeO)(HO)Si(CH₂)₃]-Sₘ-[(CH₂)₃Si(OMe)₂[(OCH₂-CH₂)₃-OC₆H₁₃]],
[[C₇H₁₅O-(CH₂-CH₂O)₂](MeO)(HO)Si(CH₂)₃]-Sₘ-[(CH₂)₃Si(OMe)₂[(OCH₂-CH₂)₃-OC₇H₁₅]],
   [[C₇H₁₅O-(CH₂-CH₂O)₃](MeO)(HO)Si(CH₂)₃]-Sₘ-[(CH₂)₃Si(OMe) ₂[(OCH₂-CH₂)₃-OC₇H₁₅]],
   [[C₇H₁₅O-(CH₂-CH₂O)₄](MeO)(HO)Si(CH₂)₃]-Sₘ-[(CH₂)₃Si(OMe)₂[(OCH₂-CH₂)₃-OC₇H₁₅]],
   [[C₇H₁₅O-(CH₂-CH₂O)₅](MeO)(HO)Si(CH₂)₃]-Sₘ-[(CH₂)₃Si(OMe)₂[(OCH₂-CH₂)₃-OC₇H₁₅]],
   [[C₇H₁₅O-(CH₂-CH₂O)₆](MeO)(HO)Si(CH₂)₃]-Sₘ-[(CH₂)₃Si(OMe)₂[(OCH₂-CH₂)₃-OC₇H₁₅]],
[[C₈H₁₇O-(CH₂-CH₂O)₂](MeO)(HO)Si(CH₂)₃]-Sₘ-[(CH₂)₃Si(OMe)₂[(OCH₂-CH₂)₃-OC₈H₁₇]],
   [[C₈H₁₇O-(CH₂-CH₂O)₃](MeO)(HO)Si(CH₂)₃]-Sₘ-[(CH₂)₃Si(OMe)₂[(OCH₂-CH₂)₃-OC₈H₁₇]],
   [[C₈H₁₇O-(CH₂-CH₂O)₄](MeO)(HO)Si(CH₂)₃]-Sₘ-[(CH₂)₃Si(OMe)₂[(OCH₂-CH₂)₃-OC₈H₁₇]],
   [[C₈H₁₇O-(CH₂-CH₂O)₅](MeO)(HO)Si(CH₂)₃]-Sₘ-[(CH₂)₃Si(OMe)₂[(OCH₂-CH₂)₃-OC₈H₁₇]],
   [[C₈H₁₇O-(CH₂-CH₂O)₆](MeO)(HO)Si(CH₂)₃]-Sₘ-[(CH₂)₃Si(OMe)₂[(OCH₂-CH₂)₃-OC₈H₁₇]],
[[C₉H₁₉O-(CH₂-CH₂O)₂](MeO)(HO)Si(CH₂)₃]-Sₘ-[(CH₂)₃Si(OMe)₂[(OCH₂-CH₂)₃-OC₉H₁₉]],
   [[C₉H₁₉O-(CH₂-CH₂O)₃](MeO)(HO)Si (CH₂)₃]-Sₘ-[(CH₂)₃Si(OMe)₂[(OCH₂-CH₂)₃-OC₉H₁₉]],
   [[C₉H₁₉O-(CH₂-CH₂O)₄](MeO)(HO)Si(CH₂)₃]-Sₘ-[(CH₂)₃Si(OMe)₂[(OCH₂-CH₂)₃-OC₉H₁₉]],
   [[C₉H₁₉O-(CH₂-CH₂O)₅](MeO)(HO)Si(CH₂)₃]-Sₘ-[(CH₂)₃Si(OMe)₂[(OCH₂-CH₂)₃-OC₉H₁₉]],
   [[C₉H₁₉O-(CH₂-CH₂O)₆](MeO)(HO)Si (CH₂)₃]-Sₘ-[(CH₂)₃Si(OMe)₂[(OCH₂-CH₂)₃-OC₉H₁₉]],
[[C₁₀H₂₁O-(CH₂-CH₂O)₂](MeO)(HO)Si (CH₂)₃]-Sₘ-[(CH₂)₃Si(OMe)₂[(OCH₂-CH₂)₃-OC₁₀H₂₁]],
   [[C₁₀H₂₁O-(CH₂-CH₂O)₃](MeO)(HO)Si(CH₂)₃]-Sₘ-[(CH₂)₃Si(OMe)₂[(OCH₂-CH₂)₃-OC₁₀H₂₁]],
   [[C₁₀H₂₁O-(CH₂-CH₂O)₄](MeO)(HO)Si(CH₂)₃]-Sₘ-[(CH₂)₃Si(OMe)₂[(OCH₂-CH₂)₃-OC₁₀H₂₁]],
   [[C₁₀H₂₁O-(CH₂-CH₂O)₅](MeO)(HO)Si(CH₂)₃]-Sₘ-[(CH₂)₃Si(OMe)₂[(OCH₂-CH₂)₃-OC₁₀H₂₁]],
   [[C₁₀H₂₁O-(CH₂-CH₂O)₆](MeO)(HO)Si(CH₂)₃]-Sₘ-[(CH₂)₃Si(OMe)₂[(OCH₂-CH₂)₃-OC₁₀H₂₁]],
[[C₁₁H₂₃O-(CH₂-CH₂O)₂](MeO)(HO)Si(CH₂)₃]-Sₘ-[(CH₂)₃Si(OMe)₂[(OCH₂-CH₂)₃-OC₁₁H₂₃]],
   [[C₁₁H₂₃O-(CH₂-CH₂O)₃](MeO)(HO)Si(CH₂)₃]-Sₘ-[(CH₂)₃Si(OMe)₂[(OCH₂-CH₂)₃-OC₁₁H₂₃]],
   [[C₁₁H₂₃O-(CH₂-CH₂O)₄](MeO)(HO)Si(CH₂)₃]-Sₘ-[(CH₂)₃Si(OMe)₂[(OCH₂-CH₂)3-OC₁₁-H₂₃]],
   [[C₁₁H₂₃O-(CH₂-CH₂O)₅](MeO)(HO)Si(CH₂)₃]-Sₘ-[(CH₂)₃Si(OMe)₂[(OCH₂-CH₂)₃-OC₁₁-H₂₃]],
   [[C₁₁H₂₃O-(CH₂-CH₂O)₆](MeO)(HO)Si(CH₂)₃]-Sₘ-[(CH₂)₃Si(OMe)₂[(OCH₂-CH₂)₃-OC₁₁-H₂₃]],
[[C₁₂H₂₅O-(CH₂-CH₂O)₂](MeO)(HO)Si(CH₂)₃]-Sₘ-[(CH₂)₃Si(OMe)₂[(OCH₂-CH₂)₃-OC₁₂H₂₅]],
   [[C₁₂H₂₅O-(CH₂-CH₂O)₃](MeO)(HO)Si(CH₂)₃]-Sₘ-[(CH₂)₃Si(OMe)₂[(OCH₂-CH₂)₃-OC₁₂H₂₅]],
   [[C₁₂H₂₅O-(CH₂-CH₂O)₄](MeO)(HO)Si(CH₂)₃]-Sₘ-[(CH₂)₃Si(OMe)₂[(OCH₂-CH₂)₃-OC₁₂H₂₅]],
   [[C₁₂H₂₅O-(CH₂-CH₂O)₅](MeO)(HO)Si(CH₂)₃]-Sₘ-[(CH₂)₃Si(OMe)₂[(OCH₂-CH₂)₃-OC₂₂H₂₅]],
   [[C₁₂H₂₅O-(CH₂-CH₂O)₆](MeO)(HO)Si(CH₂)₃]-Sₘ-[(CH₂)₃Si(OMe)₂[(OCH₂-CH₂)₃-OC₁₂H₂₅]],
[[C₁₃H₂₇O-(CH₂-CH₂O)₂](MeO)(HO)Si(CH₂)₃]-Sₘ-[(CH₂)₃Si(OMe)₂[(OCH₂-CH₂)₃-OC₁₃H₂₇]],
   [[C₁₃H₂₇O-(CH₂-CH₂O)₃](MeO)(HO)Si(CH₂)₃]-Sₘ-[(CH₂)₃Si(OMe)₂[(OCH₂-CH₂)₃-OC₁₃H₂₇]],
   [[C₁₃H₂₇O-(CH₂-CH₂O)₄](MeO)(HO)Si(CH₂)₃]-Sₘ-[(CH₂)₃Si(OMe)₂[(OCH₂-CH₂)₃-OC₁₃H₂₇]],
   [[C₁₃H₂₇O-(CH₂-CH₂O)₅](MeO)(HO)Si(CH₂)₃]-Sₘ-[(CH₂)₃Si(OMe)₂[(OCH₂-CH₂)₃-OC₁₃H₂₇]],
   [[C₁₃H₂₇O-(CH₂-CH₂O)₆](MeO)(HO)Si(CH₂)₃]-Sₘ-[(CH₂)₃Si(OMe)₂[(OCH₂-CH₂)₃-OC₁₃H₂₇]],
[[C₁₄H₂₉O-(CH₂-CH₂O)₂](MeO)(HO)Si(CH₂)₃]-Sₘ-[(CH₂)₃Si(OMe)₂[(OCH₂-CH₂)₃-OC₁₄H₂₉]],
   [[C₁₄H₂₉O-(CH₂-CH₂O)₃](MeO)(HO)Si(CH₂)₃]-Sₘ-[(CH₂)₃Si(OMe)₂[(OCH₂-CH₂)₃-OC₂₄H₂₉]],
   [[C₁₄H₂₉O-(CH₂-CH₂O)₄](MeO)(HO)Si(CH₂)₃]-Sₘ-[(CH₂)₃Si(OMe)₂[(OCH₂-CH₂)₃-OC₁₄H₂₉]],
   [[C₁₄H₂₉O-(CH₂-CH₂O)₅](MeO)(HO)Si(CH₂)₃]-Sₘ-[(CH₂)₃Si(OMe)₂[(OCH₂-CH₂)₃-OC₁₄H₂₉]],
   [[C₁₄H₂₉O-(CH₂-CH₂O)₆](MeO)(HO)Si(CH₂)₃]-Sₘ-[(CH₂)₃Si(OMe)₂[(OCH₂-CH₂)₃-OC₁₄H₂₉]],
[[C₁₅H₃₁O-(CH₂-CH₂O)₂](MeO)(HO)Si(CH₂)₃]-Sₘ-[(CH₂)₃Si(OMe)₂[(OCH₂-CH₂)₂-OC₁₅H₃₁]],
   [[C₁₅H₃₁O-(CH₂-CH₂O)₃](MeO)(HO)Si(CH₂)₃]-Sₘ-[(CH₂)₃Si(OMe)₂[(OCH₂-CH₂)₃-OC₁₅H₃₁]],
   [[C₁₅H₃₁-O-(CH₂-CH₂O)₄](MeO)(HO)Si(CH₂)₃]-Sₘ-[(CH₂)₃Si(OMe)₂[(OCH₂-CH₂)₄-OC₁₅H₃₁]],
   [[C₁₅H₃₁O-(CH₂-CH₂O)₅](MeO)(HO)Si (CH₂)₃]-Sₘ-[(CH₂)₃Si(OMe)₂[(OCH₂-CH₂)₅-OC₂₅H₃₁]],
   [[C₁₅H₃₁O-(CH₂-CH₂O)₆] (MeO)(HO)Si(CH₂)₃]-Sₘ-[(CH₂)₃Si(OMe)₂[(OCH₂-CH₂)₆-OC₁₅H₃₁]],
[[C₁₆H₃₃O-(CH₂-CH₂O)₂](MeO)(HO)Si (CH₂)₃]-Sₘ-[(CH₂)₃Si(OMe)₂[(OCH₂-CH₂)₂-OC₁₆H₃₃]],
   [[C₁₆H₃₃O-(CH₂-CH₂O)₃](MeO)(HO)Si(CH₂)₃]-Sₘ-[(CH₂)₃Si(OMe)₂[(OCH₂-CH₂)₃-OC₁₆H₃₃]],
   [[C₁₆H₃₃O-(CH₂-CH₂O)₄](MeO)(HO)Si(CH₂)₃]-Sₘ-[(CH₂)₃Si(OMe)₂[(OCH₂-CH₂)₄-OC₁₆H₃₃]],
   [[C₁₆H₃₃O-(CH₂-CH₂O)₅](MeO)(HO)Si(CH₂)₃]-Sₘ-[(CH₂)₃Si(OMe)₂[(OCH₂-CH₂)₅-OC₁₆H₃₃]],
   [[C₁₆H₃₃O-(CH₂-CH₂O)₆](MeO)(HO)Si(CH₂)₃]-Sₘ-[(CH₂)₃Si(OMe)₂[(OCH₂-CH₂)₆-OC₁₆H₃₃]],
[[C₁₇H₃₅O-(CH₂-CH₂O)₂](MeO)(HO)Si(CH₂)₃]-Sₘ-[(CH₂)₃Si(OMe)₂[(OCH₂-CH₂)₂-OC₁₇H₃₅]],
   [[C₁₇H₃₅O-(CH₂-CH₂O)₃](MeO)(HO)Si (CH₂)₃]-Sₘ-[(CH₂)₃Si(OMe)₂[(OCH₂-CH₂)₃-OC₁₇H₃₅]],
   [[C₁₇H₃₅O-(CH₂-CH₂O)₄](MeO)(HO)Si(CH₂)₃]-Sₘ-[(CH₂)₃Si(OMe)₂[(OCH₂-CH₂)₄-OC₂₇H₃₅]],
   [[C₁₇H₃₅O-(CH₂-CH₂O)₅](MeO)(HO)Si(CH₂)₃]-Sₘ-[(CH₂)₃Si(OMe)₂[(OCH₂-CH₂)₅-OC₁₇H₃₅]],
   [[C₁₇H₃₅O-(CH₂-CH₂O)₆](MeO)(HO)Si(CH₂)₃]-Sₘ-[(CH₂)₃Si(OMe)₂[(OCH₂-CH₂)₆-OC₁₇H₃₅]],
[[C₁₈H₃₇O-(CH₂-CH₂O)₂](MeO)(HO)Si(CH₂)₃]-Sₘ-[(CH₂)₃Si(OMe)₂[(OCH₂-CH₂)₂-OC₁₈H₃₇]],
   [[C₁₈H₃₇O-(CH₂-CH₂O)₃](MeO)(HO)Si (CH₂)₃]-Sₘ-[(CH₂)₃Si(OMe)₂[(OCH₂-CH₂)₃-OC₁₈H₃₇]],
   [[C₁₈H₃₇O-(CH₂-CH₂O)₄](MeO)(HO)Si(CH₂)₃]-Sₘ-[(CH₂)₃Si(OMe)₂[(OCH₂-CH₂)₄-OC₁₈H₃₇]],
   [[C₁₈H₃₇O-(CH₂-CH₂O)₅](MeO)(HO)Si (CH₂)₃]-Sₘ-[(CH₂)₃Si(OMe)₂[(OCH₂-CH₂)₅-OC₁₈H₃₇]],
   [[C₁₈H₃₇O-(CH₂-CH₂O)₆](MeO)(HO)Si(CH₂)₃]-Sₘ-[(CH₂)₃Si(OMe)₂[(OCH₂-CH₂)₆-OC₂₈H₃₇]],
[[C₃H₇O-(CH₂-CH₂O)₂](EtO)(HO)Si(CH₂)₃]-Sₘ-[(CH₂)₃Si(OEt)₂[(OCH₂-CH₂)₂-OC₃H₇]],
   [[C₃H₇O-(CH₂-CH₂O)₃](EtO)(HO)Si(CH₂)₃]-Sₘ-[(CH₂)₃Si(OEt)₂[(OCH₂-CH₂)₃-OC₃H₇]],
   [[C₃H₇O-(CH₂-CH₂O)₄](EtO)(HO)Si(CH₂)₃]-Sₘ-[(CH₂)₃Si(OEt)₂[(OCH₂-CH₂)₄-OC₃H₇]],
   [[C₃H₇O-(CH₂-CH₂O)₅](EtO)(HO)Si(CH₂)₃]-Sₘ-[(CH₂)₃Si(OEt)₂[(OCH₂-CH₂)₅-OC₃H₇]],
   [[C₃H₇O-(CH₂-CH₂O)₆](EtO)(HO)Si(CH₂)₃]-Sₘ-[(CH₂)₃Si(OEt)₂[(OCH₂-CH₂)₆-OC₃H₇]],
[[C₄H₉O-(CH₂-CH₂O)₂](EtO)(HO)Si(CH₂)₃]-Sₘ-[(CH₂)₃Si(OEt)₂[(OCH₂-CH₂)₂-OC₄H₉]],
   [[C₄H₉O-(CH₂-CH₂O)₃](EtO)(HO)Si(CH₂)₃]-Sₘ-[(CH₂)₃Si(OEt)₂[(OCH₂-CH₂)₃-OC₄H₉]],
   [[C₄H₉O-(CH₂-CH₂O)₄](EtO)(HO)Si(CH₂)₃]-Sₘ-[(CH₂)₃Si(OEt)₂[(OCH₂-CH₂)₄-OC₄H₉]],
   [[C₄H₉O-(CH₂-CH₂O)₅](EtO)(HO)Si(CH₂)₃]-Sₘ-[(CH₂)₃Si(OEt)₂[(OCH₂-CH₂)₅-OC₄H₉]],
   [[C₄H₉O-(CH₂-CH₂O)₆](EtO)(HO)Si(CH₂)₃]-Sₘ-[(CH₂)₃Si(OEt)₂[(OCH₂-CH₂)₆-OC₄H₉]],
[[C₅H₁₁O-(CH₂-CH₂O)₂](EtO)(HO)Si(CH₂)₃]-Sₘ-[(CH₂)₃Si(OEt)₂[(OCH₂-CH₂)₂-OC₅H₁₁]],
   [[C₅H₁₁O-(CH₂-CH₂O)₃](EtO)(HO)Si(CH₂)₃]-Sₘ-[(CH₂)₃Si(OEt)₂[(OCH₂-CH₂)₃-OC₅H₁₁]],
   [[C₅H₁₁O-(CH₂-CH₂O)₄](EtO)(HO)Si(CH₂)₃]-Sₘ-[(CH₂)₃Si(OEt)₂[(OCH₂-CH₂)₄-OC₅H₁₁]],
   [[C₅H₁₁O-(CH₂-CH₂O)₅](EtO)(HO)Si(CH₂)₃]-Sₘ-[(CH₂)₃Si(OEt)₂[(OCH₂-CH₂)₅-OC₅H₁₁]],
   [[C₅H₁₁O-(CH₂-CH₂O)₆](EtO)(HO)Si(CH₂)₃]-Sₘ-[(CH₂)₃Si(OEt)₂[(OCH₂-CH₂)₆-OC₅H₁₁]],
[[C₆H₁₃O-(CH₂-CH₂O)₂](EtO)(HO)Si(CH₂)₃]-Sₘ-[(CH₂)₃Si(OEt)₂[(OCH₂-CH₂)₂-OC₆H₁₃]],
   [[C₆H₁₃O-(CH₂-CH₂O)₃](EtO)(HO)Si(CH₂)₃]-Sₘ-[(CH₂)₃Si(OEt)₂[(OCH₂-CH₂)₃-OC₆H₁₃]],
   [[C₆H₁₃O-(CH₂-CH₂O)₄](EtO)(HO)Si(CH₂)₃]-Sₘ-[(CH₂)₃Si(OEt)₂[(OCH₂-CH₂)₄-OC₆H₁₃]],
   [[C₆H₁₃O-(CH₂-CH₂O)₅](EtO)(HO)Si(CH₂)₃]-Sₘ-[(CH₂)₃Si(OEt)₂[(OCH₂-CH₂)₅-OC₆H₁₃]],
   [[C₆H₁₃O-(CH₂-CH₂O)₆](EtO)(HO)Si(CH₂)₃]-Sₘ-[(CH₂)₃Si(OEt)₂[(OCH₂-CH₂)₆-OC₆H₁₃]],
[[C-₇H₁₅O-(CH₂-CH₂O)₂](EtO)(HO)Si(CH₂)₃]-Sₘ-[(CH₂)₃Si(OEt)₂[(OCH₂-CH₂)₂-OC₇H₁₅]],
   [[C₇H₁₅O-(CH₂-CH₂O)₃](EtO)(HO)Si(CH₂)₃]-Sₘ-[(CH₂)₃Si(OEt)₂[(OCH₂-CH₂)₃-OC₇H₁₅]],
   [[C₇H₁₅O-(CH₂-CH₂O)₄](EtO)(HO)Si(CH₂)₃]-Sₘ-[(CH₂)₃Si(OEt)₂[(OCH₂-CH₂)₄-OC₇H₁₅]],
   [[C₇H₁₅O-(CH₂-CH₂O)₅](EtO)(HO)Si(CH₂)₃]-Sₘ-[(CH₂)₃Si(OEt)₂[(OCH₂-CH₂)₅-OC₇H₁₅]],
   [[C₇H₁₅O-(CH₂-CH₂O)₆](EtO)(HO)Si(CH₂)₃]-Sₘ-[(CH₂)₃Si(OEt)₂[(OCH₂-CH₂)₆-OC₇H₁₅]],
[[C₈H₁₇O-(CH₂-CH₂O)₂](EtO)(HO)Si(CH₂)₃]-Sₘ-[(CH₂)₃Si(OEt)₂[(OCH₂-CH₂)₂-OC₈H₁₇]],
   [[C₈H₁₇O-(CH₂-CH₂O)₃](EtO)(HO)Si(CH₂)₃]-Sₘ-[(CH₂)₃Si(OEt)₂[(OCH₂-CH₂)₃-OC₈H₁₇]],
   [[C₈H₁₇O-(CH₂-CH₂O)₄](EtO)(HO)Si(CH₂)₃]-Sₘ-[(CH₂)₃Si(OEt)₂[(OCH₂-CH₂)₄-OC₈H₁₇]],
   [[C₈H₁₇O-(CH₂-CH₂O)₅](EtO)(HO)Si(CH₂)₃]-Sₘ-[(CH₂)₃Si(OEt)₂[(OCH₂-CH₂)₅-OC₈H₁₇]],
   [[C₈H₁₇O-(CH₂-CH₂O)₆](EtO)(HO)Si(CH₂)₃]-Sₘ-[(CH₂)₃Si(OEt)₂[(OCH₂-CH₂)₆-OC₈H₁₇]],
[[C₉H₁₉O-(CH₂-CH₂O)₂](EtO)(HO)Si(CH₂)₃]-Sₘ-[(CH₂)₃Si(OEt)₂[(OCH₂-CH₂)₂-OC₉H₁₉]],
   [[C₉H₁₉O-(CH₂-CH₂O)₃](EtO)(HO)Si(CH₂)₃]-Sₘ-[(CH₂)₃Si(OEt)₂[(OCH₂-CH₂)₃-OC₉H₁₉]],
   [[C₉H₁₉O-(CH₂-CH₂O)₄](EtO)(HO)Si(CH₂)₃]-Sₘ-[(CH₂)₃Si(OEt)₂[(OCH₂-CH₂)₄-OC₉H₁₉]],
   [[C₉H₁₉O-(CH₂-CH₂O)₅](EtO)(HO)Si(CH₂)₃]-Sₘ-[(CH₂)₃Si(OEt)₂[(OCH₂-CH₂)₅-OC₉H₁₉]],
   [[C₉H₁₉O-(CH₂-CH₂O)₆](EtO)(HO)Si(CH₂)₃]-Sₘ-[(CH₂)₃Si(OEt)₂[(OCH₂-CH₂)₆-OC₉H₁₉]],
[[C₁₀H₂₁O-(CH₂-CH₂O)₂](EtO)(HO)Si(CH₂)₃]-Sₘ-[(CH₂)₃Si(OEt)₂[(OCH₂-CH₂)₂-OC₁₀H₂₁]],
   [[C₁₀H₂₁O-(CH₂-CH₂O)₃](EtO)(HO)Si(CH₂)₃]-Sₘ-[(CH₂)₃Si(OEt)₂[(OCH₂-CH₂)₃-OC₁₀H₂₁]],
   [[C₁₀H₂₁O-(CH₂-CH₂O)₄](EtO)(HO)Si(CH₂)₃]-Sₘ-[(CH₂)₃Si(OEt)₂[(OCH₂-CH₂)₄-OC₁₀H₂₁]],
   [[C₁₀H₂₁O-(CH₂-CH₂O)₅](EtO)(HO)Si(CH₂)₃]-Sₘ-[(CH₂)₃Si(OEt)₂[(OCH₂-CH₂)₅-OC₁₀H₂₁]],
   [[C₁₀H₂₁O-(CH₂-CH₂O)₆](EtO)(HO)Si(CH₂)₃]-Sₘ-[(CH₂)₃Si(OEt)₂[(OCH₂-CH₂)₆-OC₁₀H₂₁]],
[[C₁₁H₂₃O-(CH₂-CH₂O)₂](EtO)(HO)Si(CH₂)₃]-Sₘ-[(CH₂)₃Si(OEt)₂[(OCH₂-CH₂)₂-OC₁₁H₂₃]],
   [[C₁₁H₂₃O-(CH₂-CH₂O)₃](EtO)(HO)Si(CH₂)₃]-Sₘ-[(CH₂)₃Si(OEt)₂[(OCH₂-CH₂)₃-OC₁₁H₂₃]],
   [[C₁₁H₂₃O-(CH₂-CH₂O)₄](EtO)(HO)Si(CH₂)₃]-Sₘ-[(CH₂)₃Si(OEt)₂[(OCH₂-CH₂)₄-OC₁₁H₂₃]],
   [[C₁₁H₂₃O-(CH₂-CH₂O)₅](EtO)(HO)Si(CH₂)₃]-Sₘ-[(CH₂)₃Si(OEt)₂[(OCH₂-CH₂)₅-OC₁₁H₂₃]],
   [[C₁₁H₂₃O-(CH₂-CH₂O)₆](EtO)(HO)Si(CH₂)₃]-Sₘ-[(CH₂)₃Si(OEt)₂[(OCH₂-CH₂)₆-OC₁₁H₂₃]],
[[C₁₂H₂₅O-(CH₂-CH₂O)₂](EtO)(HO)Si(CH₂)₃]-Sₘ-[(CH₂)₃Si(OEt)₂[(OCH₂-CH₂)₂-OC₁₂H₂₅]],
   [[C₁₂H₂₅O-(CH₂-CH₂O)₃](EtO)(HO)Si(CH₂)₃]-Sₘ-[(CH₂)₃Si(OEt)₂[(OCH₂-CH₂)₃-OC₁₂H₂₅]],
   [[C₁₂H₂₅O-(CH₂-CH₂O)₄](EtO)(HO)Si(CH₂)₃]-Sₘ-[(CH₂)₃Si(OEt)₂[(OCH₂-CH₂)₄-OC₁₂H₂₅]],
   [[C₁₂H₂₅O-(CH₂-CH₂O)₅](EtO)(HO)Si(CH₂)₃]-Sₘ-[(CH₂)₃Si(OEt)₂[(OCH₂-CH₂)₅-OC₁₂H₂₅]],
   [[C₁₂H₂₅O-(CH₂-CH₂O)₆](EtO)(HO)Si(CH₂)₃]-Sₘ-[(CH₂)₃Si(OEt)₂[(OCH₂-CH₂)₆-OC₁₂H₂₅]],
[[C₁₃H₂₇O-(CH₂-CH₂O)₂](EtO)(HO)Si(CH₂)₃]-Sₘ-[(CH₂)₃Si(OEt)₂[(OCH₂-CH₂)₂-OC₁₃H₂₇]],
   [[C₁₃H₂₇O-(CH₂-CH₂O)₃](EtO)(HO)Si(CH₂)₃]-Sₘ-[(CH₂)₃Si(OEt)₂[(OCH₂-CH₂)₃-OC₁₃H₂₇]],
   [[C₁₃H₂₇O-(CH₂-CH₂O)₄](EtO)(HO)Si(CH₂)₃]-Sₘ-[(CH₂)₃Si(OEt)₂[(OCH₂-CH₂)₄-OC₁₃H₂₇]],
   [[C₁₃H₂₇O-(CH₂-CH₂O)₅](EtO)(HO)Si(CH₂)₃]-Sₘ-[(CH₂)₃Si(OEt)₂[(OCH₂-CH₂)₅-OC₁₃H₂₇]],
   [[C₁₃H₂₇O-(CH₂-CH₂O)₆](EtO)(HO)Si(CH₂)₃]-Sₘ-[(CH₂)₃Si(OEt)₂[(OCH₂-CH₂)₆-OC₁₃H₂₇]],
[[C₁₄H₂₉O-(CH₂-CH₂O)₂](EtO)(HO)Si(CH₂)₃]-Sₘ-[(CH₂)₃Si(OEt)₂[(OCH₂-CH₂)₂-OC₁₄H₂₉]],
   [[C₁₄H₂₉O-(CH₂-CH₂O)₃](EtO)(HO)Si(CH₂)₃]-Sₘ-[(CH₂)₃Si(OEt)₂[(OCH₂-CH₂)₃-OC₁₄H₂₉]],
   [[C₁₄H₂₉O-(CH₂-CH₂O)₄](EtO)(HO)Si(CH₂)₃]-Sₘ-[(CH₂)₃Si(OEt)₂[(OCH₂-CH₂)₄-OC₁₄H₂₉]],
   [[C₁₄H₂₉O-(CH₂-CH₂O)₅](EtO)(HO)Si(CH₂)₃]-Sₘ-[(CH₂)₃Si(OEt)₂[(OCH₂-CH₂)₅-OC₁₄H₂₉]],
   [[C₁₄H₂₉O-(CH₂-CH₂O)₆](EtO)(HO)Si(CH₂)₃]-Sₘ-[(CH₂)₃Si(OEt)₂[(OCH₂-CH₂)₆-OC₁₄H₂₉]],
[[C₁₅H₃₁O-(CH₂-CH₂O)₂](EtO)(HO)Si(CH₂)₃]-Sₘ-[(CH₂)₃Si(OEt)₂[(OCH₂-CH₂)₂-OC₁₅H₃₁]],
   [[C₁₅H₃₁O-(CH₂-CH₂O)₃](EtO)(HO)Si(CH₂)₃]-Sₘ-[(CH₂)₃Si(OEt)₂[(OCH₂-CH₂)₃-OC₂₅H₃₁]],
   [[C₁₅H₃₁O-(CH₂-CH₂O)₄](EtO)(HO)Si(CH₂)₃]-Sₘ-[(CH₂)₃Si(OEt)₂[(OCH₂-CH₂)₄-OC₂₅H₃₁]],
   [[C₁₅H₃₁O-(CH₂-CH₂O)₅](EtO)(HO)Si(CH₂)₃]-Sₘ-[(CH₂)₃Si(OEt)₂[(OCH₂-CH₂)₅-OC₁₅H₃₁]],
   [[C₁₅H₃₁O-(CH₂-CH₂O)₆](EtO)(HO)Si(CH₂)₃]-Sₘ-[(CH₂)₃Si(OEt)₂[(OCH₂-CH₂)₆-OC₁₅H₃₁]],
[[C₁₆H₃₃O-(CH₂-CH₂O)₂](EtO)(HO)Si(CH₂)₃]-Sₘ-[(CH₂)₃Si(OEt)₂[(OCH₂-CH₂)₂-OC₁₆H₃₃]],
   [[C₁₆H₃₃O-(CH₂-CH₂O)₃](EtO)(HO)Si(CH₂)₃]-Sₘ-[(CH₂)₃Si(OEt)₂[(OCH₂-CH₂)₃-OC₁₆H₃₃]],
   [[C₁₆H₃₃O-(CH₂-CH₂O)₄](EtO)(HO)Si(CH₂)₃]-Sₘ-[(CH₂)₃Si(OEt)₂[(OCH₂-CH₂)₄-OC₁₆H₃₃]],
   [[C₁₆H₃₃O-(CH₂-CH₂O)₅](EtO)(HO)Si(CH₂)₃]-Sₘ-[(CH₂)₃Si(OEt)₂[(OCH₂-CH₂)₅-OC₁₆H₃₃]],
   [[C₁₆H₃₃O-(CH₂-CH₂O)₆](EtO)(HO)Si (CH₂)₃]-Sₘ-[(CH₂)₃Si(OEt)₂[(OCH₂-CH₂)₆-OC₁₆H₃₃]],
[[C₁₇H₃₅O-(CH₂-CH₂O)₂](EtO)(HO)Si (CH₂)₃]-Sₘ-[(CH₂)₃Si(OEt)₂[(OCH₂-CH₂)₂-OC₁₇H₃₅]],
   [[C₁₇H₃₅O-(CH₂-CH₂O)₃](EtO)(HO)Si (CH₂)₃]-Sₘ-[(CH₂)₃Si(OEt)₂[(OCH₂-CH₂)₃-OC₁₇H₃₅]],
   [[C₁₇H₃₅O-(CH₂-CH₂O)₄](EtO)(HO)Si (CH₂)₃]-Sₘ-[(CH₂)₃Si(OEt)₂[(OCH₂-CH₂)₄-OC₁₇H₃₅]],
   [[C₁₇H₃₅O-(CH₂-CH₂O)₅](EtO)(HO)Si (CH₂)₃]-Sₘ-[(CH₂)₃Si(OEt)₂[(OCH₂-CH₂)₅-OC₁₇H₃₅]],
   [[C₁₇H₃₅O-(CH₂-CH₂O)₆](EtO)(HO)Si (CH₂)₃]-Sₘ-[(CH₂)₃Si(OEt)₂[(OCH₂-CH₂)₆-OC₁₇H₃₅]],
[[C₁₈H₃₇O-(CH₂-CH₂O)₂](EtO)(HO)Si (CH₂)₃]-Sₘ-[(CH₂)₃Si(OEt)₂[(OCH₂-CH₂)₂-OC₁₈H₃₇]],
   [[C₁₈H₃₇O-(CH₂-CH₂O)₃](EtO)(HO)Si (CH₂)₃]-Sₘ-[(CH₂)₃Si(OEt)₂[(OCH₂-CH₂)₃-OC₁₈H₃₇]],
   [[C₁₈H₃₇O-(CH₂-CH₂O)₄](EtO)(HO)Si (CH₂)₃]-Sₘ-[(CH₂)₃Si(OEt)₂[(OCH₂-CH₂)₄-OC₁₈H₃₇]],
   [[C₁₈H₃₇O-(CH₂-CH₂O)₅](EtO)(HO)Si (CH₂)₃]-Sₘ-[(CH₂)₃Si(OEt)₂[(OCH₂-CH₂)₅-OC₁₈H₃₇]] oder
   [[C₁₈H₃₇O-(CH₂-CH₂O)₆](EtO)(HO)Si (CH₂)₃]-Sₘ-[(CH₂)₃Si(OEt)₂[(OCH₂-CH₂)₆-OC₁₈H₃₇]],
[[C₃H₇O-(CH₂-CH₂O)₂]₂(HO)Si (CH₂)₃]-Sₘ-[(CH₂)₃Si(OEt)[(OCH₂-CH₂)₂-OC₃H₇]₂],
   [[C₃H₇O-(CH₂-CH₂O)₃]₂(HO)Si (CH₂)₃]-Sₘ- [(CH₂)₃Si(OEt)[(OCH₂-CH₂)₃-OC₃H₇]₂],
   [[C₃H₇O-(CH₂-CH₂O)₄]₂(HO)Si(CH₂)₃]-Sₘ-[(CH₂)₃Si(OEt)[(OCH₂-CH₂)₄-OC₃H₇]₂],
   [[C₃H₇O-(CH₂-CH₂O)₅]₂(HO)Si (CH₂)₃]-Sₘ-[(CH₂)₃Si(OEt)[(OCH₂-CH₂)₅-OC₃H₇]₂],
   [[C₃H₇O-(CH₂-CH₂O)₆]₂(HO)Si(CH₂)₃]-Sₘ-[(CH₂)₃Si(OEt)[(OCH₂-CH₂)₆-OC₃H₇]₂],
[[C₄H₉O-(CH₂-CH₂O)₂]₂(HO)Si (CH₂)₃]-Sₘ-[(CH₂)₃Si(OEt)[(OCH₂-CH₂)₂-OC₄H₉]₂],
   [[C₄H₉O-(CH₂-CH₂O)₃]₂(HO)Si(CH₂)₃]-Sₘ-[(CH₂)₃Si(OEt)[(OCH₂-CH₂)₃-OC₄H₉]₂],
   [[C₄H₉O-(CH₂-CH₂O)₄]₂(HO)Si(CH₂)₃]-Sₘ-[(CH₂)₃Si(OEt) [(OCH₂-CH₂)₄-CO₄H₉]₂],
   [[C₄H₉O-(CH₂-CH₂O)₅]₂(HO)Si (CH₂)₃]-Sₘ-[(CH₂)₃Si(OEt) [(OCH₂-CH₂)₅-OC₄H₉]₂],
   [[C₄H₉O-(CH₂-CH₂O)₆]₂(HO)Si (CH₂)₃]-Sₘ-[(CH₂)₃Si(OEt) [(OCH₂-CH₂)₆-OC₄H₉]₂].
[[C₅H₁₁O-(CH₂-CH₂O)₂]₂(HO)Si (CH₂)₃]-Sₘ-[(CH₂)₃Si(OEt)[(OCH₂-CH₂)₂-OC₅H₁₁]₂],
   [[C₅H₁₁O-(CH₂-CH₂O)₃]₂(HO)Si (CH₂)₃]-Sₘ-[(CH₂)₃Si(OEt)[(OCH₂-CH₂)₃-OC₅H₁₁]₂],
   [[C₅H₁₁O-(CH₂-CH₂O)₄]₂(HO)Si (CH₂)₃]-Sₘ-[(CH₂)₃Si(OEt)[(OCH₂-CH₂)₄-OC₅H₁₁]₂],
   [[C₅H₁₁O-(CH₂-CH₂O)₅]₂(HO)Si (CH₂)₃]-Sₘ-[(CH₂)₃Si(OEt)[(OCH₂-CH₂)₅-OC₅H₁₁]₂],
   [[C₅H₁₁O-(CH₂-CH₂O)₆]₂(HO)Si(CH₂)₃]-Sₘ-[(CH₂)₃Si(OEt)[(OCH₂-CH₂)₆-OC₅H₁₁]₂],
[[C₆H₁₃O-(CH₂-CH₂O)₂]₂(HO)Si (CH₂)₃]-Sₘ-[(CH₂)₃Si(OEt)[(OCH₂-CH₂)₂-OC₆H₁₃]₂],
   [[C₆H₁₃O-(CH₂-CH₂O)₃]₂(HO)Si(CH₂)₃]-Sₘ-[(CH₂)₃Si(OEt)[(OCH₂-CH₂)₃-OC₆H₁₃]₂],
   [[C₆H₁₃O-(CH₂-CH₂O)₄]₂(HO)Si(CH₂)₃]-Sₘ-[(CH₂)₃Si(OEt)[(OCH₂-CH₂)₄-OC₆H₁₃]₂],
   [[C₆H₁₃O-(CH₂-CH₂O)₅]₂(HO)Si (CH₂)₃]-Sₘ-[(CH₂)₃Si)(OEt) [(OCH₂-CH₂)₅-OC₆H₁₃]₂],
   [[C₆H₁₃O-(CH₂-CH₂O)₆]₂(HO)Si (CH₂)₃]-Sₘ-[(CH₂)₃Si(OEt)[(OCH₂-CH₂)₆-OC₆H₁₃]₂],
[[C₇H₁₅O-(CH₂-CH₂O)₂]₂(HO)Si (CH₂)₃]-Sₘ-[(CH₂)₃Si(OEt)[(OCH₂-CH₂)₂-OC₇H₁₅]₂],
   [[C₇H₁₅O-(CH₂-CH₂O)₃]2(HO)Si(CH₂)₃]-Sₘ-[(CH₂)₃Si(OEt)[(OCH₂-CH₂)₃-OC₇H₁₅]₂],
   [[C₇H₁₅O-(CH₂-CH₂O)₄]₂(HO)Si(CH₂)₃]-Sₘ-[(CH₂)₃Si(OEt)[(OCH₂-CH₂)₄-OC-₇H₁₅]₂],
   [[C₇H₁₅O-(CH₂-CH₂O)₅]₂(HO)Si(CH₂)₃]-Sₘ-[(CH₂)₃Si(OEt)[(OCH₂-CH₂)₅-OC₇H₁₅]]₂],
   [[C₇H₁₅O-(CH₂-CH₂O)₆]₂(HO)Si(CH₂)₃]-Sₘ-[(CH₂)₃Si(OEt)[(OCH₂-CH₂)₆-OC₇H₁₅]₂],
[[C₈H₁₇O-(CH₂-CH₂O)₂]₂(HO)Si(CH₂)₃]-Sₘ-[(CH₂)₃Si(OEt)[(OCH₂-CH₂)₂-OC₈H₁₇]₂],
   [[C₈H₁₇O-(CH₂-CH₂O)₃]₂(HO)Si(CH₂)₃]-Sₘ-[(CH₂)₃Si(OEt)[(OCH₂-CH₂)₃-OC₈H₁₇]₂],
   [[C₈H₁₇O-(CH₂-CH₂O)₄]₂(HO)Si(CH₂)₃]-Sₘ-[(CH₂)₃Si(OEt)[(OCH₂-CH₂)₄-OC₈H₁₇]]₂],
   [[C₈H₁₇O- (CH₂-CH₂O)₅]₂(HO)Si(CH₂)₃]-Sₘ-[(CH₂)₃Si(OEt)[(OCH₂-CH₂)₅-OC₈H₁₇]₂],
   [[C₈H₁₇O-(CH₂-CH₂O)₆]₂(HO)Si(CH₂)₃]-Sₘ-[(CH₂)₃Si(OEt)[(OCH₂-CH₂)₆-OC₈H₁₇]₂],
[[C₉H₁₉O-(CH₂-CH₂O)₂]₂(HO)Si(CH₂)₃]-Sₘ-[(CH₂)₃Si(OEt)[(OCH₂-CH₂)₂-OC₉H₁₉]₂],
   [[C₉H₁₉O-(CH₂-CH₂O)₃]₂(HO)Si(CH₂)₃]-Sₘ-[(CH₂)₃Si(OEt)[(OCH₂-CH₂)₃-OC₉H₁₉]₂],
   [[C₉H₁₉O-(CH₂-CH₂O)₄]₂(HO)Si(CH₂)₃]-Sₘ-[(CH₂)₃Si(OEt)[(OCH₂-CH₂)₄-OC₉H₁₉]₂],
   [[C₉H₁₉O-(CH₂-CH₂O)₅]₂(HO)Si(CH₂)₃]-Sₘ-[(CH₂)₃Si(OEt)[(OCH₂-CH₂)₅-OC₉H₁₉]₂],
   [[C₉H₁₉O-(CH₂-CH₂O)₆]₂(HO)Si(CH₂)₃]-Sₘ-[(CH₂)₃Si(OEt)[(OCH₂-CH₂)₆-OC₉H₁₉]₂],
[[C₁₀H₂₁O-(CH₂-CH₂O)₂]₂(HO)Si(CH₂)₃]-Sₘ-[(CH₂)₃Si(OEt)[(OCH₂-CH₂)₂-OC₁₀H₂₁]₂],
   [[C₁₀H₂₁O-(CH₂-CH₂O)₃]₂(HO)Si(CH₂)₃]-Sₘ-[(CH₂)₃Si(OEt)[(OCH₂-CH₂)₃-OC₁₀H₂₁]₂],
   [[C₁₀H₂₁O-(CH₂-CH₂O)₄]₂(HO)Si(CH₂)₃]-Sₘ-[(CH₂)₃Si(OEt)[(OCH₂-CH₂)₄-OC₁₀H₂₁]₂],
   [[C₁₀H₂₁O-(CH₂-CH₂O)₅]₂(HO)Si(CH₂)₃]-Sₘ-[(CH₂)₃Si(OEt)[(OCH₂-CH₂)₅-OC₁₀H₂₁]₂],
   [[C₁₀H₂₁O-(CH₂-CH₂O)₆]₂(HO)Si(CH₂)₃]-Sₘ-[(CH₂)₃Si(OEt)[(OCH₂-CH₂)6-OC₁₀H₂₁]₂],
[[C₁₁H₂₃O- (CH₂-CH₂O)₂]₂(HO)Si(CH₂)₃]-Sₘ-[(CH₂)₃Si(OEt)[(OCH₂-CH₂)₂-OC₁₁H₂₃]₂],
   [[C₁₁H₂₃O- (CH₂-CH₂O)₃]₂(HO)Si(CH₂)₃]-Sₘ-[(CH₂)₃Si(OEt)[(OCH₂-CH₂)3-OC₁₁H₂₃]₂],
   [[C₁₁H₂₃O- (CH₂-CH₂O)₄]₂(HO)Si(CH₂)₃]-Sₘ-[(CH₂)₃Si(OEt)[(OCH₂-CH₂)₄-OC₁₁H₂₃ ]₂],
   [[C₁₁H₂₃O-(CH₂-CH₂O)₅]₂(HO)Si(CH₂)₃]-Sₘ-[(CH₂)₃Si(OEt)[(OCH₂-CH₂)₅-OC₁₁H₂₃]]₂],
   [[C₁₁H₁₃O- (CH₂-CH₂O)₆]₂(HO)Si(CH₂)₃]-Sₘ-[(CH₂)₃Si(OEt)[(OCH₂-CH₂)₆-OC₁₁H₂₃]₂].
[[C₁₂H₂₅O-(CH₂-CH₂O)₂]₂(HO)Si(CH₂)₃]-Sₘ-[(CH₂)₃Si(OEt)[(OCH₂-CH₂)₂-OC₁₂H₂₅]₂],
   [[C₁₂H₂₅O-(CH₂-CH₂O)₃]₂(HO)Si(CH₂)₃]-Sₘ-[(CH₂)₃Si(OEt)[(OCH₂-CH₂)₃-OC₁₂H₂₅]₂],
   [[C₁₂H₂₅O- (CH₂-CH₂O)₄]₂(HO)Si(CH₂)₃]-Sₘ-[(CH₂)₃Si(OEt)[(OCH₂-CH₂)₄-OC₁₂H₂₅]₂] ,
   [[C₁₂H₂₅O- (CH₂-CH₂O)₅]₂(HO)Si(CH₂)₃]-Sₘ-[(CH₂)₃Si(OEt)[(OCH₂-CH₂)₅-OC₁₂H₂₅]₂],
   [[C₁₂H₂₅O- (CH₂-CH₂O)₆]₂(HO)Si(CH₂)₃]-Sₘ-[(CH₂)₃Si(OEt)[(OCH₂-CH₂)₆-OC₁₂H₂₅]₂],
[[C₁₃H₂₇O-(CH₂-CH₂O)₂]₂(HO)Si(CH₂)₃]-Sₘ-[(CH₂)₃Si(OEt)[(OCH₂-CH₂)₂-OC₁₃H₂₇]]₂],
   [[C₁₃H₂₇O-(CH₂-CH₂O)₃]₂(HO)Si(CH₂)₃]-Sₘ-[(CH₂)₃Si(OEt)[(OCH₂-CH₂)₃-OC₁₃H₂₇]₂],
   [[C₁₃H₂₇O-(CH₂-CH₂O)₄]₂(HO)Si(CH₂)₃]-Sₘ-[(CH₂)₃Si(OEt)[(OCH₂-CH₂)₄-OC₁₃H₂₇]₂],
   [[C₁₃H₂₇O-(CH₂-CH₂O)₅]₂(HO)Si(CH₂)₃]-Sₘ-[(CH₂)₃Si(OEt)[(OCH₂-CH₂)₅-OC₁₃H₂₇]₂],
   [[C₁₃H₂₇O-(CH₂-CH₂O)₆]₂(HO)Si(CH₂)₃]-Sₘ-[(CH₂)₃Si(OEt)[(OCH₂-CH₂)₆-OC₁₃H₂₇]₂],
[[C₁₄H₂₉O-(CH₂-CH₂O)₂]₂(HO)Si(CH₂)₃]-Sₘ-[(CH₂)₃Si(OEt)[(OCH₂-CH₂)₂-OC₁₄H₂₉]₂],
   [[C₁₄H₂₉O-(CH₂-CH₂O)₃]₂(HO)Si(CH₂)₃]-Sₘ-[(CH₂)₃Si(OEt)[(OCH₂-CH₂)₃-OC₁₄H₂₉]₂],
   [[C₁₄H₂₉O- (CH₂-CH₂O)₄]₂(HO)Si(CH₂)₃]-Sₘ-[(CH₂)₃Si(OEt)[(OCH₂-CH₂)₄-OC₁₄H₂₉]₂],
   [[C₁₄H₂₉O- (CH₂-CH₂O)₅]₂(HO)Si(CH₂)₃]-Sₘ-[(CH₂)₃Si(OEt)[(OCH₂-CH₂)₅-OC₁₄H₂₉]₂],
   [[C₁₄H₂₉O- (CH₂-CH₂O)₆]₂(HO)Si(CH₂)₃]-Sₘ-[(CH₂)₃Si(OEt)[(OCH₂-CH₂)₆-OC₁₄H₂₉]₂],
[[C₁₅H₃₁O-(CH₂-CH₂O)₂]₂(HO)Si(CH₂)₃]-Sₘ-[(CH₂)₃Si(OEt)[(OCH₂-CH₂)₂-OC₁₅H₃₁]₂],
   [[C₁₅H₃₁O-(CH₂-CH₂O)₃]₂(HO)Si(CH₂)₃]-Sₘ-[(CH₂)₃Si(OEt)[(OCH₂-CH₂)₃-OC₁₅H₃₁]₂],
   [[C₁₅H₃₁O-(CH₂-CH₂O)₄]₂(HO)Si(CH₂)₃]-Sₘ-[(CH₂)₃Si(OEt)[(OCH₂-CH₂)₄-OC₁₅H₃₁]₂],
   [[C₁₅H₃₁O-(CH₂-CH₂O)₅]₂(HO)Si(CH₂)₃]-Sₘ-[(CH₂)₃Si(OEt)[(OCH₂-CH₂)₅-OC₁₅H₃₁]₂],
   [[C₁₅H₃₁O-(CH₂-CH₂O)₆]₂(HO)Si(CH₂)₃]-Sₘ-[(CH₂)₃Si(OEt)[(OCH₂-CH₂)₆-OC₁₅H₃₁]₂],
[[C₁₆H₃₃O- (CH₂-CH₂O)₂]₂(HO)Si(CH₂)₃]-Sₘ-[(CH₂)₃Si(OEt)[(OCH₂-CH₂)₂-OC₁₆H₃₃]₂],
   [[C₁₆H₃₃O- (CH₂-CH₂O)₃]₂(HO)Si(CH₂)₃]-Sₘ-[(CH₂)₃Si(OEt)[(OCH₂-CH₂)₃-OC₁₆H₃₃]₂],
   [[C₁₆H₃₃O- (CH₂-CH₂O)₄]₂(HO)Si(CH₂)₃]-Sₘ-[(CH₂)₃Si(OEt)[(OCH₂-CH₂)₄-OC₁₆H₃₃]₂],
   [[C₁₆H₃₃O-(CH₂-CH₂O)₅]₂(HO)Si(CH₂)₃]-Sₘ-[(CH₂)₃Si(OEt)[(OCH₂-CH₂)₅-OC₁₆H₃₃]₂],
   [[C₁₆H₃₃O- (CH₂-CH₂O)₆]₂(HO)Si(CH₂)₃]-Sₘ-[(CH₂)₃Si(OEt)[(OCH₂-CH₂)6-OC₁₆H₃₃]₂],
[[C₁₇H₃₅O- (CH₂-CH₂O)₂]₂(HO)Si(CH₂)₃]-Sₘ-[(CH₂)₃Si(OEt)[(OCH₂-CH₂)₂-OC₁₇H₃₅]₂],
   [[C₁₇H₃₅O-(CH₂-CH₂O)₃]₂(HO)Si(CH₂)₃]-Sₘ-[(CH₂)₃Si(OEt)[(OCH₂-CH₂)₃-OC₁₇H₃₅]₂],
   [[C₁₇H₃₅O-(CH₂-CH₂O)₄]₂(HO)Si(CH₂)₃]-Sₘ-[(CH₂)₃Si(OEt)[(OCH₂-CH₂)-OC₁₇H₃₅]₂],
   [[C₁₇H₃₅O-(CH₂-CH₂O)₅]₂(HO)Si(CH₂)₃]-Sₘ-[(CH₂)₃Si(OEt)[(OCH₂-CH₂)₅-OC₁₇H₃₅]₂],
   [[C₁₇H₃₅O-(CH₂-CH₂O)₆]₂(HO)Si(CH₂)₃]-Sₘ-[(CH₂)₃Si(OEt) [(OCH₂-CH₂)₆-OC₁₇H₃₅]₂],
[[C₁₈H₃₇O-(CH₂-CH₂O)₂]₂(HO)Si(CH₂)₃]-Sₘ-[(CH₂)₃Si(OEt)[(OCH₂-CH₂)₂-OC₁₈H₃₇]₂],
   [[C₁₈H₃₇O-(CH₂-CH₂O)₃]₂(HO)Si(CH₂)₃]-Sₘ-[(CH₂)₃Si(OEt)[(OCH₂-CH₂)₃-OC₁₈H₃₇]₂],
   [[C₁₈H₃₇O-(CH₂-CH₂O)₄]₂(HO)Si(CH₂)₃]-Sₘ-[(CH₂)₃Si(OEt)[(OCH₂-CH₂)₄-OC₁₈H₃₇]₂],
   [[C₁₈H₃₇O-(CH₂-CH₂O)₅]₂(HO)Si(CH₂)₃]-Sₘ-[(CH₂)₃Si(OEt)[(OCH₂-CH₂)₅-OC₁₈H₃₇]₂] oder
   [[C₁₈H₃₇O-(CH₂-CH₂O)₆]₂(HO)Si(CH₂)₃]-Sₘ-[(CH₂)₃Si(OEt)[(OCH₂-CH₂)₆-OC₁₈H₃₇]₂], wobei die Alkylreste unverzweigt oder verzweigt sein können.

Bevorzugte Verbindungen der allgemeinen Formel IV können sein:
[[C₃H₇O-(CH₂-CH₂O)₂](Me)(MeO)Si(CH₂)₃]₂Sₘ,
   [[C₃H₇O-(CH₂-CH₂O)₃](Me)(MeO)Si(CH₂)₃]₂Sₘ,
   [[C₃H₇O-(CH₂-CH₂O)₄](Me)(MeO)Si(CH₂)₃]₂Sₘ,
   [[C₃H₇O-(CH₂-CH₂O)₅](Me)(MeO)Si(CH₂)₃]₂Sₘ,
   [[C₃H₇O-(CH₂-CH₂O)₆](Me)(MeO)Si(CH₂)₃]₂Sₘ,
[[C₄H₉O-(CH₂-CH₂O)₂](Me)(MeO)Si(CH₂)₃]₂Sₘ,
   [[C₄H₉O-(CH₂-CH₂O)₃](Me)(MeO)Si(CH₂)₃]₂Sₘ,
   [[C₄H₉O-(CH₂-CH₂O)₄](Me)(MeO)Si(CH₂)₃]₂Sₘ,
   [[C₄H₉O-(CH₂-CH₂O)₅](Me)(MeO)Si(CH₂)₃]₂Sₘ,
   [[C₄H₉O-(CH₂-CH₂O)₆](Me)(MeO)Si(CH₂)₃]₂Sₘ,
[[C₅H₁₁O-(CH₂-CH₂O)₂](Me)(MeO)Si(CH₂)₃]₂Sₘ,
   [[C₅H₁₁O-(CH₂-CH₂O)₃](Me)(MeO)Si(CH₂)₃]₂Sₘ,
   [[C₅H₁₁O-(CH₂-CH₂O)₄](Me)(MeO)Si(CH₂)₃]₂Sₘ,
   [[C₅H₁₁O-(CH₂-CH₂O)₅](Me)(MeO)Si(CH₂)₃]₂Sₘ,
   [[C₅H₁₁O-(CH₂-CH₂O)₆](Me)(MeO)Si(CH₂)₃]₂Sₘ,
[[C₆H₁₃O-(CH₂-CH₂O)₂](Me)(MeO)Si(CH₂)₃]₂Sₘ,
   [[C₆H₁₃O-(CH₂-CH₂O)₃](Me)(MeO)Si(CH₂)₃]₂Sₘ,
   [[C₆H₁₃O-(CH₂-CH₂O)₄](Me)(MeO)Si (CH₂)₃]₂Sₘ,
   [[C₆H₁₃O-(CH₂-CH₂O)₅](Me)(MeO)Si(CH₂)₃]₂Sₘ,
   [[C₆H₁₃O-(CH₂-CH₂O)₆](Me)(MeO)Si(CH₂)₃]₂Sₘ,
[[C₇H₁₅O-(CH₂-CH₂O)₂](Me)(MeO)Si(CH₂)₃]₂Sₘ,
   [[C₇H₁₅O-(CH₂-CH₂O)₃](Me)(MeO)Si(CH₂)₃]₂Sₘ,
   [[C₇H₁₅O-(CH₂-CH₂O)₄](Me)(MeO)Si(CH₂)₃]₂Sₘ,
   [[C₇H₁₅O-(CH₂-CH₂O)₅](Me)(MeO)Si(CH₂)₃]₂Sₘ,
   [[C₇H₁₅O-(CH₂-CH₂O)₆](Me)(MeO)Si(CH₂)₃]₂Sₘ,
[[C₈H₁₇O-(CH₂-CH₂O)₂](Me)(MeO)Si(CH₂)₃]₂Sₘ,
   [[C₈H₁₇O-(CH₂-CH₁O)₃](Me)(MeO)Si(CH₂)₃]₂Sₘ,
   [[C₈H₁₇O-(CH₂-CH₂O)₄](Me)(MeO)Si(CH₂)₃]₂Sₘ,
   [[C₈H₁₇O-(CH₂-CH₂O)₅](Me)(MeO)Si(CH₂)₃]₂Sₘ,
   [[C₈H₁₇O-(CH₂-CH₂O)₆](Me)(MeO)Si(CH₂)₃]₂Sₘ,
[C₉H₁₉O-(CH₂-CH₂O)₂](Me)(MeO)Si(CH₂)₃]₂Sₘ,
   [[C₉H₁₉O-(CH₂-CH₁O)₃](Me)(MeO)Si(CH₂)₃]₂Sₘ,
   [C₉H₁₉O-(CH₂-CH₂O)₄](Me)(MeO)Si(CH₂)₃]₂Sₘ,
   [[C₉H₁₉O-(CH₂-CH₂O)₅](Me)(MeO)Si(CH₂)₃]₂Sₘ,
   [C₉H₁₉O-(CH₂-CH₂O)₆](Me)(MeO)Si(CH₂)₃]₂Sₘ,
[C₁₀H₂₁O-(CH₂-CH₂O)₂](Me)(MeO)Si(CH₂)₃]₂Sₘ,
   [C₁₀H₂₁O-(CH₂-CH₂O)₃](Me)(MeO)Si(CH₂)₃]₂Sₘ,
   [[C₁₀H₂₁O-(CH₂-CH₂O)₄](Me)(MeO)Si(CH₂)₃]₂Sₘ,
   [[C₁₀H₂₁O-(CH₂-CH₂O)₅](Me)(MeO)Si(CH₂)₃]₂Sₘ,
   [[C₁₀H₂₁O-(CH₂-CH₂O)₆](Me)(MeO)Si(CH₂)₃]₂Sₘ,
[[C₁₁H₂₃O-(CH₂-CH₂O)₂](Me)(MeO)Si(CH₂)₃]₂Sₘ,
   [[C₁₁H₂₃O-(CH₂-CH₂O)₃](Me)(MeO)Si(CH₂)₃]₂Sₘ,
   [[C₁₁H₂₃O-(CH₂-CH₂O)₄](Me)(MeO)Si(CH₂)₃]₂Sₘ,
   [[C₁₁H₂₃O-(CH₂-CH₂O)₅](Me)(MeO)Si(CH₂)₃]₂Sₘ,
   [[C₁₁H₂₃O-(CH₂-CH₂O)₆](Me)(MeO)Si(CH₂)₃]₂Sₘ,
[[C₁₂H₂₅O-(CH₂-CH₂O)₂](Me)(MeO)Si(CH₂)₃]₂Sₘ,
   [[C₁₂H₂₅O-(CH₂-CH₂O)₃](Me)(MeO)Si(CH₂)₃]₂Sₘ,
   [[C₁₂H₂₅O-(CH₂-CH₂O)₄](Me)(MeO)Si(CH₂)₃]₂Sₘ,
   [[C₁₂H₂₅O-(CH₂-CH₂O)₅](Me)(MeO)Si(CH₂)₃]₂Sₘ,
   [[C₁₂H₂₅O-(CH₂-CH₂O)₆](Me)(MeO)Si(CH₂)₃]₂Sₙ,
[[C₁₃H₂₇O-(CH₂-CH₂O)₂](Me)(MeO)Si(CH₂)₃]₂Sₙ,
   [[C₁₃H₂₇O-(CH₂-CH₂O)₃](Me)(MeO)Si(CH₂)₃]₂Sₙ,
   [[C₁₃H₂₇O-(CH₂-CH₂O)₄](Me)(MeO)Si(CH₂)₃]₂Sₘ,
   [[C₁₃H₂₇O-(CH₂-CH₂O)₅](Me)(MeO)Si(CH₂)₃]₂Sₘ,
   [[C₁₃H₂₇O-(CH₂-CH₂O)₆](Me)(MeO)Si(CH₂)₃]₂Sₙ,
[[C₁₄H₂₉O-(CH₂-CH₂O)₂](Me)(MeO)Si(CH₂)₃]₂Sₘ,
   [[C₁₄H₂₉O-(CH₂-CH₂O)₃](Me)(MeO)Si(CH₂)₃]₂Sₘ,
   [[C₁₄H₂₉O-(CH₂-CH₂O)₄](Me)(MeO)Si(CH₂)₃]₂Sₘ,
   [[C₁₄H₂₉O-(CH₂-CH₂O)₅](Me)(MeO)Si(CH₂)₃]₂Sₘ,
   [[C₁₄H₂₉O-(CH₂-CH₂O)₆](Me)(MeO)Si(CH₂)₃]₂Sₘ,
[[C₁₅H₃₁O-(CH₂-CH₂O)₂](Me)(MeO)Si(CH₂)₃]₂Sₘ,
   [[C₁₅H₃₁O-(CH₂-CH₂O)₃](Me)(MeO)Si(CH₂)₃]₂Sₘ,
   [[C₁₅H₃₁O-(CH₂-CH₂O)₄](Me)(MeO)Si(CH₂)₃]₂Sₘ,
   [[C₁₅H₃₁O-(CH₂-CH₂O)₅](Me)(MeO)Si(CH₂)₃]₂Sₘ,
   [[C₁₅H₃₁O-(CH₂-CH₂O)₆](Me)(MeO)Si(CH₂)₃]₂Sₘ,
[[C₁₆H₃₃O-(CH₂-CH₂O)₂](Me)(MeO)Si(CH₂)₃]₂Sₘ,
   [[C₁₆H₃₃O-(CH₂-CH₂O)₃](Me)(MeO)Si(CH₂)₃]₂Sₘ,
   [[C₁₆H₃₃O-(CH₂-CH₂O)₄](Me)(MeO)Si(CH₂)₃]₂Sₘ,
   [[C₁₆H₃₃O-(CH₂-CH₂O)₅](Me)(MeO)Si(CH₂)₃]₂Sₘ,
   [[C₁₆H₃₃O-(CH₂-CH₂O)₆](Me)(MeO)Si(CH₂)₃]₂Sₘ,
[[C₁₇H₃₅O-(CH₂-CH₂O)₂](Me)(MeO)Si(CH₂)₃]₂Sₘ,
   [[C₁₇H₃₅O-(CH₂-CH₂O)₃](Me)(MeO)Si(CH₂)₃]₂Sₘ,
   [[C₁₇H₃₅O-(CH₂-CH₂O)₄](Me)(MeO)Si(CH₂)₃]₂Sₘ,
   [[C₁₇H₃₅O-(CH₂-CH₂O)₅](Me)(MeO)Si(CH₂)₃]₂Sₘ,
   [[C₁₇H₃₅O-(CH₂-CH₂O)₆](Me)(MeO)Si(CH₂)₃]₂Sₘ,
[[C₁₈H₃₇O-(CH₂-CH₂O)₂](Me)(MeO)Si(CH₂)₃]₂Sₘ,
   [[C₁₈H₃₇O-(CH₂-CH₂O)₃](Me)(MeO)Si(CH₂)₃]₂Sₘ,
   [[C₁₈H₃₇O-(CH₂-CH₂O)₄](Me)(MeO)Si(CH₂)₃]₂Sₘ,
   [[C₁₈H₃₇O-(CH₂-CH₂O)₅](Me)(MeO)Si(CH₂)₃]₂Sₘ,
[[C₃H₇O-(CH₂-CH₂O)₂](Me)(EtO)Si(CH₂)₃]₂Sₘ,
   [[C₃H₇O-(CH₂-CH₂O)₃](Me)(EtO) Si(CH₂)₃]₂Sₘ,
   [[C₃H₇O-(CH₂-CH₂O)₄](Me)(EtO) Si(CH₂)₃]₂Sₘ,
   [[C₃H₇O-(CH₂-CH₂O)₅](Me)(EtO) Si(CH₂)₃]₂Sₘ,
   [[C₃H₇O-(CH₂-CH₂O)₆](Me)(EtO) Si(CH₂)₃]₂Sₘ,
[[C₄H₉O-(CH₂-CH₂O)₂](Me)(EtO) Si(CH₂)₃]₂Sₘ,
   [[C₄H₉O-(CH₂-CH₂O)₃](Me)(EtO) Si(CH₂)₃]₂Sₘ,
   [[C₄H₉O-(CH₂-CH₂O)₄](Me)(EtO) Si(CH₂)₃]₂Sₘ,
   [[C₄H₉O-(CH₂-CH₂O)₅](Me)(EtO) Si(CH₂)₃]₂Sₘ,
   [[C₄H₉O-(CH₂-CH₂O)₆](Me)(EtO)Si(CH₂)₃]₂Sₘ,
[[C₅H₁₁O-(CH₂-CH₂O)₂](Me) (EtO) Si(CH₂)₃]₂Sₘ,
   [[C₅H₁₁O-(CH₂-CH₂O)₃](Me)(EtO) Si(CH₂)₃]₂Sₘ,
   [[C₅H₁₁O-(CH₂-CH₂O)₄](Me)(EtO)Si(CH₂)₃]₂Sₘ,
   [[C₅H₁₁O-(CH₂-CH₂O)₅](Me) (EtO) Si(CH₂)₃]₂Sₘ,
   [[C₅H₁₁O-(CH₂-CH₂O)₆](Me) (EtO) Si(CH₂)₃]₂Sₘ,
[[C₆H₁₃O-(CH₂-CH₂O)₂](Me)(EtO) Si(CH₂)₃]₂Sₘ,
   [[C₆H₁₃O-(CH₂-CH₂O)₃](Me) (EtO) Si(CH₂)₃]₂Sₘ,
   [[C₆H₁₃O-(CH₂-CH₂O)₄](Me) (EtO) Si(CH₂)₃]₂Sₘ,
   [[C₆H₁₃O-(CH₂-CH₂O)₅](Me)(EtO) Si(CH₂)₃]₂Sₘ,
   [[C₆H₁₃O-(CH₂-CH₂O)₆](Me)(EtO) Si(CH₂)₃]₂Sₘ,
[[C₇H₁₅O-(CH₂-CH₂O)₂](Me)(EtO) Si(CH₂)₃]₂Sₘ,
   [[C₇H₁₅O-(CH₂-CH₂O)₃](Me)(EtO) Si(CH₂)₃]₂Sₘ,
   [[C₇H₁₅O**-**(CH₂-CH₂O)₄](Me) (EtO) Si(CH₂)₃]₂Sₘ,
   [[C₇H₁₅O-(CH₂-CH₂O)₅](Me)(EtO) Si(CH₂)₃]₂Sₘ,
   [[C₇H₁₅O-(CH₂-CH₂O)₆](Me)(EtO) Si(CH₂)₃]₂Sₘ,
[[C₈H₁₇O-(CH₂-CH₂O)₂](Me)(EtO)Si(CH₂)₃]₂Sₘ,
   [[C₈H₁₇O-(CH₂-CH₁O)₃](Me)(EtO) Si(CH₂)₃]₂Sₘ,
   [[C₈H₁₇O-(CH₂-CH₂O)₄](Me)(EtO)Si(CH₂)₃]₂Sₘ,
   [[C₈H₁₇O-(CH₂-CH₂O)₅](Me)(EtO) Si(CH₂)₃]₂Sₘ,
   [[C₈H₁₇O-(CH₂-CH₂O)₆](Me)(EtO)Si(CH₂)₃]₂Sₘ,
[[C₉H₁₉O-(CH₂-CH₂O)₂](Me)(EtO) Si(CH₂)₃]₂Sₘ,
   [[C₉H₁₉O-(CH₂-CH₂O)₃](Me)(EtO)Si(CH₂)₃]₂Sₘ,
   [[C₉H₁₉O-(CH₂-CH₂O)₄](Me)(EtO) Si(CH₂)₃]₂Sₘ,
   [[C₉H₁₉O-(CH₂-CH₂O)₅](Me)(EtO)Si(CH₂)₃]₂Sₘ,
   [[C₉H₁₉O-(CH₂-CH₂O)₆](Me)(EtO) Si(CH₂)₃]₂Sₘ,
[[C₁₀H₂₁O-(CH₂-CH₂O)₂](Me)(EtO)Si(CH₂)₃]₂Sₘ,
   [[C₁₀H₂₁O-(CH₂-CH₂O)₃](Me)(EtO)Si(CH₂)₃]₂Sₘ,
   [[C₁₀H₂₁O-(CH₂-CH₂O)₄](Me)(EtO)Si(CH₂)₃]₂Sₘ,
   [[C₁₀H₂₁O-(CH₂-CH₂O)₅](Me)(EtO)Si(CH₂)₃]₂Sₘ,
   [[C₁₀H₂₁O-(CH₂-CH₂O)₆](Me)(EtO)Si(CH₂)₃]₂Sₘ,
[[C₁₁H₂₃O-(CH₂-CH₂O)₂](Me)(EtO)Si(CH₂)₃]₂Sₘ,
   [[C₁₁H₂₃O-(CH₂-CH₂O)₃](Me)(EtO)Si(CH₂)₃]₂Sₘ,
   [[C₁₁H₂₃O-(CH₂-CH₂O)₄](Me)(EtO)Si(CH₂)₃]₂Sₘ,
   [[C₁₁H₂₃O-(CH₂-CH₂)₅](Me)(EtO)Si(CH₂)₃]₂Sₘ,
   [[C₁₁H₂₃O-(CH₂-CH₂O)₆](Me)(EtO)Si(CH₂)₃]₂Sₘ,
[[C₁₂H₂₅O-(CH₂-CH₂O)₂](Me) (EtO)Si(CH₂)₃]₂Sₘ,
   [[C₁₂H₂₅O-(CH₂-CH₂O)₃](Me) (EtO)Si(CH₂)₃]₂Sₘ,
   [[C₁₂H₂₅O-(CH₂-CH₂O)₄](Me)(EtO)Si(CH₂)₃]₂Sₘ,
   [[C₁₂H₂₅O-(CH₂-CH₂O)₅](Me)(EtO)Si(CH₂)₃]₂Sₘ,
   [[C₁₂H₂₅O-(CH₂-CH₂O)₆](Me)(EtO)Si(CH₂)₃]₂Sₘ,
[[C₁₃H₂₇O-(CH₂-CH₂O)₂](Me)(EtO)Si(CH₂)₃]₂Sₘ,
   [[C₁₃H₂₇O-(CH₂-CH₂O)₃](Me)(EtO)Si(CH₂)₃]₂Sₘ,
   [[C₁₃H₂₇O-(CH₂-CH₂O)₄](Me)(EtO)Si(CH₂)₃]₂Sₘ,
   [[C₁₃H₂₇O-(CH₂-CH₂O)₅](Me)(EtO)Si(CH₂)₃]₂Sₘ,
   [[C₁₃H₂₇O-(CH₂-CH₂O)₆](Me)(EtO)Si(CH₂)₃]₂Sₘ,
[[C₁₄H₂₉O-(CH₂-CH₂O)₂](Me)(EtO)Si(CH₂)₃]₂Sₘ,
   [[C₁₄H₂₉O-(CH₂-CH₂O)₃](Me)(EtO)Si(CH₂)₃]₂Sₘ,
   [[C₁₄H₂₉O-(CH₂-CH₂O)₄](Me)(EtO)Si(CH₂)₃]₂Sₘ,
   [[C₁₄H₂₉O-(CH₂-CH₂O)₅](Me)(EtO)Si(CH₂)₃]₂Sₘ,
   [[C₁₄H₂₉O-(CH₂-CH₂O)₆](Me)(EtO)Si(CH₂)₃]₂Sₘ,
[[C₁₅H₃₁O-(CH₂-CH₂O)₂](Me)(EtO)Si(CH₂)₃]₂Sₘ,
   [[C₁₅H₃₁O-(CH₂-CH₂O)₃](Me)(EtO)Si(CH₂)₃]₂Sₘ,
   [[C₁₅H₃₁O-(CH₂-CH₂O)₄](Me)(EtO)Si(CH₂)₃]₂Sₘ,
   [[C₁₅H₃₁O-(CH₂-CH₂O)₅](Me)(EtO)Si(CH₂)₃]₂Sₘ,
   [[C₁₅H₃₁O-(CH₂-CH₂O)₆](Me)(EtO)Si(CH₂)₃]₂Sₘ,
[[C₁₆H₃₃O-(CH₂-CH₂O)₂](Me)(EtO)Si(CH₂)₃]₂Sₘ,
   [C₁₆H₃₃O-(CH₂-CH₂O)₃](Me)(EtO)Si(CH₂)₃]₂Sₘ,
   [C₁₆H₃₃O-(CH₂-CH₂O)₄](Me)(EtO)Si(CH₂)₃]₂Sₘ,
   [[C₁₆H₃₃O-(CH₂-CH₂O)₅](Me)(EtO)Si(CH₂)₃]₂Sₘ,
   [[C₁₆H₃₃O-(CH₂-CH₂O)₆](Me)(EtO)Si(CH₂)₃]₂Sₘ,
[[C₁₇H₃₅O-(CH₂-CH₂O)₂](Me)(EtO)Si(CH₂)₃]₂Sₘ,
   [[C₁₇H₃₅O-(CH₂-CH₂O)₃](Me)(EtO)Si(CH₂)₃]₂Sₘ,
   [[C₁₇H₃₅O-(CH₂-CH₂O)₄](Me)(EtO)Si(CH₂)₃]₂Sₘ,
   [[C₁₇H₃₅O-(CH₂-CH₂O)₅](Me)(EtO)Si(CH₂)₃]₂Sₘ,
   [[C₁₇H₃₅O-(CH₂-CH₂O)₆](Me)(EtO)Si(CH₂)₃]₂Sₘ,
[[C₁₈H₃₇O-(CH₂-CH₂O)₂](Me)(EtO)Si(CH₂)₃]₂Sₘ,
   [[C₁₈H₃₇O-(CH₂-CH₂O)₃](Me)(EtO)Si(CH₂)₃]₂Sₘ,
   [[C₁₈H₃₇O-(CH₂-CH₂O)₄](Me)(EtO)Si(CH₂)₃]₂Sₘ,
   [[C₁₈H₃₇O-(CH₂-CH₂O)₅](Me)(EtO)Si(CH₂)₃]₂Sₘ,
   [[C₁₈H₃₇O-(CH₂-CH₂O)₆](Me)(EtO)Si(CH₂)₃]₂Sₘ,
[[C₃H₇O-(CH₂-CH₂O)₂](MeO)₂Si(CH₂)₃]₂Sₘ,
   [[C₃H₇O-(CH₂-CH₂O)₃](MeO)₂Si(CH₂)₃]₂Sₘ,
   [[C₃H₇O-(CH₂-CH₂O)₄](MeO)₂Si(CH₂)₃]₂Sₘ,
   [[C₃H₇O-(CH₂-CH₂O)₅](MeO)₂Si(CH₂)₃]₂Sₘ,
   [[C₃H₇O-(CH₂-CH₂O)₆](MeO)₂Si(CH₂)₃]₂Sₘ,
[[C₄H₉O-(CH₂-CH₂O)₂](MeO)₂Si(CH₂)₃]₂Sₘ,
   [[C₄H₉O-(CH₂-CH₂O)₃](MeO)₂Si(CH₂)₃]₂Sₘ,
   [[C₄H₉O-(CH₂-CH₂O)₄](MeO)₂Si(CH₂)₃]₂Sₘ,
   [[C₄H₉O-(CH₂-CH₂O)₅](MeO)₂Si(CH₂)₃]₂Sₘ,
   [[C₄H₉O-(CH₂-CH₂O)₆](MeO)₂Si(CH₂)₃]₂Sₘ,
[[C₅H₁₁O-(CH₂-CH₂O)₂](MeO)₂Si(CH₂)₃]₂Sₘ,
   [[C₅H₁₁O-(CH₂-CH₂O)₃](MeO)₂Si(CH₂)₃]₂Sₘ,
   [[C₅H₁₁O-(CH₂-CH₂O)₄](MeO)₂Si(CH₂)₃]₂Sₘ,
   [[C₅H₁₁O-(CH₂-CH₂O)₅](MeO)₂Si(CH₂)₃]₂Sₘ,
   [[C₅H₁₁O-(CH₂-CH₂O)₆](MeO)₂Si(CH₂)₃]₂Sₘ,
[[C₆H₁₃O-(CH₂-CH₂O)₂](MeO)₂Si(CH₂)₃]₂Sₘ,
   [[C₆H₁₃O-(CH₂-CH₂O)₃](MeO)₂Si(CH₂)₃]₂Sₘ,
   [[C₆H₁₃O-(CH₂-CH₂O)₄](MeO)₂Si(CH₂)₃]₂Sₘ,
   [[C₆H₁₃O-(CH₂-CH₂O)₅](MeO)₂Si(CH₂)₃]₂Sₘ,
   [[C₆H₁₃O-(CH₂-CH₂O)₆](MeO)₂Si(CH₂)₃]₂Sₘ,
[[C₇H₁₅O-(CH₂-CH₂O)₂](MeO)₂Si(CH₂)₃]₂Sₘ,
   [[C₇H₁₅O-(CH₂-CH₂O)₃](MeO)₂Si(CH₂)₃]₂Sₘ,
   [[C₇H₁₅O-(CH₂-CH₂O)₄](MeO)₂Si(CH₂)₃]₂Sₘ,
   [[C₇H₁₅O-(CH₂-CH₂O)₅](MeO)₂Si(CH₂)₃]₂Sₘ,
   [[C₇H₁₅O-(CH₂-CH₂O)₆](MeO)₂Si(CH₂)₃]₂Sₘ,
[[C₈H₁₇O-(CH₂-CH₂O)₂](MeO)₂Si(CH₂)₃]₂Sₘ,
   [[C₈H₁₇O-(CH₂-CH₂O)₃](MeO)₂Si(CH₂)₃]₂Sₘ,
   [[C₈H₁₇O-(CH₂-CH₂O)₄](MeO)₂Si(CH₂)₃]₂Sₘ,
   [[C₈H₁₇O-(CH₂-CH₂O)₅](MeO)₂Si(CH₂)₃]₂Sₘ,
   [[C₈H₁₇O-(CH₂-CH₂O)₆](MeO)₂Si(CH₂)₃]₂Sₘ,
[[C₉H₁₉O-(CH₂-CH₂O)₂](MeO)₂Si(CH₂)₃]₂Sₘ,
   [[C₉H₁₉O-(CH₂-CH₂O)₃](MeO)₂Si(CH₂)₃]₂Sₘ,
   [[C₉H₁₉O-(CH₂-CH₂O)₄](MeO)₂Si(CH₂)₃]₂Sₘ,
   [[C₉H₁₉O-(CH₂-CH₂O)₅](MeO)₂Si(CH₂)₃]₂Sₘ,
   [[C₉H₁₉O-(CH₂-CH₂O)₆](MeO)₂Si(CH₂)₃]₂Sₘ,
[[C₁₀H₂₁O-(CH₂-CH₂O)₂](MeO)₂Si(CH₂)₃]₂Sₘ,
   [[C₁₀H₂₁O-(CH₂-CH₂O)₃](MeO)₂Si(CH₂)₃]₂Sₘ,
   [[C₁₀H₂₁O-(CH₂-CH₂O)₄](MeO)₂Si(CH₂)₃]₂Sₘ,
   [[C₁₀H₂₁O-(CH₂-CH₂O)₅](MeO)₂Si(CH₂)₃]₂Sₘ,
   [[C₁₀H₂₁O-(CH₂-CH₂O)₆](MeO)₂Si(CH₂)₃]₂Sₘ,
[[C₁₁H₂₃O-(CH₂-CH₂O)₂](MeO)₂Si(CH₂)₃]₂Sₘ,
   [C₁₁H₂₃O-(CH₂-CH₂O)₃](MeO)₂Si(CH₂)₃]₂Sₘ,
   [C₁₁H₂₃O-(CH₂-CH₂O)₄](MeO)₂Si(CH₂)₃]₂Sₘ,
   [[CₘH₂₃O-(CH₂-CH₂O)₅](MeO)₂Si(CH₂)₃]₂Sₘ,
   [[C₁₁H₂₃O-(CH₂-CH₂O)₆](MeO)₂Si(CH₂)₃]₂Sₘ,
[[C₁₂H₂₅O-(CH₂-CH₂O)₂](MeO)₂Si(CH₂)₃]₂Sₘ,
   [[C₁₂H₂₅O-(CH₂-CH₂O)₃](MeO)₂Si(CH₂)₃]₂Sₘ,
   [[C₁₂H₂₅O-(CH₂-CH₂O)₄](MeO)₂Si(CH₂)₃]₂Sₘ,
   [[C₁₂H₂₅O-(CH₂-CH₂O)₅](MeO)₂Si(CH₂)₃]₂Sₘ,
   [[C₁₂H₂₅O-(CH₂-CH₂O)₆](MeO)₂Si(CH₂)₃]₂Sₘ,
[[C₁₃H₂₇O-(CH₂-CH₂O)₂](MeO)₂Si(CH₂)₃]₂Sₘ,
   [[C₁₃H₂₇O-(CH₂-CH₂O)₃](MeO)₂Si(CH₂)₃]₂Sₘ,
   [[C₁₃H₂₇O-(CH₂-CH₂O)₄](MeO)₂Si(CH₂)₃]₂Sₘ,
   [[C₁₃H₂₇O-(CH₂-CH₂O)₅](MeO)₂Si(CH₂)₃]₂Sₘ,
   [[C₁₃H₂₇O-(CH₂-CH₂O)₆](MeO)₂Si(CH₂)₃]₂Sₘ,
[[C₁₉H₂₉O-(CH₂-CH₂O)₂](MeO)₂Si(CH₂)₃]₂Sₘ,
   [[C₁₄H₂₉O-(CH₂-CH₂O)₃](MeO)₂Si(CH₂)₃]₂Sₘ,
   [[C₁₉H₂₄O-(CH₂-CH₂O)₄](MeO)₂Si(CH₂)₃]₂Sₘ,
   [[C₁₉H₂₉O-(CH₂-CH₂O)₅](MeO)₂Si(CH₂)₃]₂Sₘ,
   [[C₁₉H₂₉O-(CH₂-CH₂O)₆](MeO)₂Si(CH₂)₃]₂Sₘ,
[[C₁₆H₃₃O-(CH₂-CH₂O)₂](MeO)₂Si(CH₂)₃]₂Sₘ,
   [[C₁₆H₃₃O-(CH₂-CH₂O)₃](MeO)₂Si(CH₂)₃]₂Sₘ,
   [[C₁₆H₃₃O-(CH₂-CH₂O)₄](MeO)₂Si(CH₂)₃]₂Sₘ,
   [[C₁₆H₃₃O-(CH₂-CH₂O)₅](MeO)₂Si(CH₂)₃]₂Sₘ,
   [[C₁₆H₃₃O-(CH₂-CH₂O)₆](MeO)₂Si(CH₂)₃]₂Sₘ,
[[C₁₈H₃₇O-(CH₂-CH₂O)₂](MeO)₂Si(CH₂)₃]₂Sₘ,
   [[C₁₈H₃₇O-(CH₂-CH₂O)₃](MeO)₂Si(CH₂)₃]₂Sₘ,
   [[C₁₈H₃₇O-(CH₂-CH₂O)₄](MeO)₂Si(CH₂)₃]₂Sₘ,
   [[C₁₈H₃₇O-(CH₂-CH₂O)₅](MeO)₂Si(CH₂)₃]₂Sₘ,
   [[C₁₈H₃₇O-(CH₂-CH₂O)₆](MeO)₂Si(CH₂)₃]₂Sₘ,
[[C₃H₇O-(CH₂-CH₂O)₂]₂(MeO)Si(CH₂)₃]₂Sₘ,
   [[C₃H₇O-(CH₂-CH₂O)₃]₂(MeO)Si(CH₂)₃]₂Sₘ,
   [[C₃H₇O-(CH₂-CH₂O)₄]₂(MeO)Si(CH₂)₃]₂Sₙ,
   [[C₃H₇O-(CH₂-CH₂O)₅]₂(MeO)Si(CH₂)₃]₂Sₘ,
   [[C₃H₇O-(CH₂-CH₂O)₆]₂(MeO)Si(CH₂)₃]₂Sₘ,
[[C₄H₉O-(CH₂-CH₂O)₂]₂(MeO)Si(CH₂)₃]₂Sₘ,
   [[C₄H₉O-(CH₂-CH₂O)₃]₂(MeO)Si(CH₂)₃]₂Sₘ,
   [[C₄H₉O-(CH₂-CH₂O)₄]₂(MeO)Si(CH₂)₃]₂Sₘ,
   [[C₄H₉O-(CH₂-CH₂O)₅]₂(MeO)Si(CH₂)₃]₂Sₘ,
   [[C₄H₉O-(CH₂-CH₂O)₆]₂(MeO)Si(CH₂)₃]₂Sₘ,
[[C₅H₁₁O-(CH₂-CH₂O)₂]₂(MeO)Si(CH₂)₃]₂Sₘ,
   [[C₅H₁₁O-(CH₂-CH₂O)₃]₂(MeO)Si(CH₂)₃]₂Sₘ,
   [[C₅H₁₁O-(CH₂-CH₂O)₄]₂(MeO)Si(CH₂)₃]₂Sₘ,
   [[C₅H₁₁O-(CH₂-CH₂O)₅]₂(MeO)Si(CH₂)₃]₂Sₘ,
   [[C₅H₁₁O-(CH₂-CH₂O)₆]₂(MeO)Si(CH₂)₃]₂Sₘ,
[[C₆H₁₃O-(CH₂-CH₂O)₂]₂(MeO)Si(CH₂)₃]₂Sₘ,
   [[C₆H₁₃O-(CH₂-CH₂O)₃]₂(MeO)Si(CH₂)₃]₂Sm,
   [[C₆H₁₃O-(CH₂-CH₂O)₄]₂(MeO)Si(CH₂)₃]₂Sₘ,
   [[C₆H₁₃O-(CH₂-CH₂O)₅]₂(MeO)Si(CH₂)₃]₂Sₘ,
   [[C₆H₁₃O-(CH₂-CH₂O)₆]₂(MeO)Si(CH₂)₃]₂Sₘ,
[[C₇H₁₅O-(CH₂-CH₂O)₂]₂(MeO)Si(CH₂)₃]₂Sₘ,
   [[C₇H₁₅O-(CH₂-CH₂O)₃]₂(MeO)Si(CH₂)₃]₂Sₘ,
   [[C₇H₁₅O-(CH₂-CH₂O)₄]₂(MeO)Si(CH₂)₃]₂Sₘ,
   [C₇H₁₅O-(CH₂-CH₂O)₅]₂(MeO)Si(CH₂)₃]₂Sₘ,
   [[C₇H₁₅O-(CH₂-CH₂O)₆]₂(MeO)Si(CH₂)₃]₂Sₘ,
[C₈H₁₇O-(CH₂-CH₂O)₂]₂(MeO)Si(CH₂)₃]₂Sₘ,
   [[C₈H₁₇O-(CH₂-CH₂O)₃]₂(MeO)Si(CH₂)₃]₂Sₘ,
   [[C₈H₁₇O-(CH₂-CH₂O)₄]₂(MeO)Si(CH₂)₃]₂Sₘ,
   [[C₈H₁₇O-(CH₂-CH₂O)₅]₂(MeO)Si(CH₂)₃]₂Sₘ,
   [[C₈H₁₇O-(CH₂-CH₂O)₆]₂(MeO)Si(CH₂)₃]₂Sₘ,
[[C₉H₁₉O-(CH₂-CH₂O)₂]₂(MeO)Si(CH₂)₃]₂Sₘ,
   [[C₉H₁₉O-(CH₂-CH₂O)₃]₂(MeO)Si(CH₂)₃]₂Sₘ,
   [[C₉H₁₉O-(CH₂-CH₂O)₄]₂(MeO)Si(CH₂)₃]₂Sₘ,
   [[C₉H₁₉O-(CH₂-CH₂O)₅]₂(MeO)Si(CH₂)₃]₂Sₘ,
   [[C₉H₁₉O-(CH₂-CH₂O)₆]₂(MeO)Si(CH₂)₃]₂S_{m,}
[[C₁₀H₂₁-O-(CH₂-CH₂O)₂]₂(MeO)Si(CH₂)₃]₂Sₘ,
   [C₁₀H₂₁-O-(CH₂-CH₂O)₃]₂(MeO)Si(CH₂)₃]₂Sₘ,
   [[C₁₀H₂₁O-(CH₂-CH₂O)₄]₂(MeO)Si(CH₂)₃]₂Sₘ,
   [[C₁₀H₂₁O-(CH₂-CH₂O)₅]₂(MeO)Si(CH₂)₃]₂Sₘ,
   [[C₁₀H₂₁O-(CH₂-CH₂O)₆]₂(MeO)Si(CH₂)₃]₂Sₘ,
[[C₁₁H₂₃O-(CH₂-CH₂O)₂]₂(MeO)Si(CH₂)₃]₂Sm,
   [[C₁₁H₂₃O-(CH₂-CH₂O)₃]₂(MeO)Si(CH₂)₃]₂Sₘ,
   [[C₁₁H₂₃O-(CH₂-CH₂O)₄]₂(MeO)Si(CH₂)₃]₂Sₘ,
   [[C₁₁H₂₃O-(CH₂-CH₂O)₅]₂(MeO)Si(CH₂)₃]₂Sₘ,
   [[C₁₁H₂₃O-(CH₂-CH₂O)₆]₂(MeO)Si(CH₂)₃]₂S_{m,}
[[C₁₂H₂₅O-(CH₂-CH₂O)₂]₂(MeO)Si(CH₂)₃]₂Sₘ,
   [[C₁₂H₂₅O-(CH₂-CH₂O)₃]₂(MeO)Si(CH₂)₃]₂Sₘ,
   [[C₁₂H₂₅O-(CH₂-CH₂O)₄]₂(MeO)Si(CH₂)₃]₂Sₘ,
   [[C₁₂H₂₅O-(CH₂-CH₂O)₅]₂(MeO)Si(CH₂)₃]₂Sₘ,
   [[C₁₂H₂₅O-(CH₂-CH₂O)₆]₂(MeO)Si(CH₂)₃]₂S_{m,}
[[C₁₃H₂₇O-(CH₂-CH₂O)₂]₂(MeO)Si(CH₂)₃]₂Sₘ,
   [[C₁₃H₂₇O-(CH₂-CH₂O)₃]₂(MeO)Si(CH₂)₃]₂Sₘ,
   [[C₁₃H₂₇O-(CH₂-CH₂O)₄]₂(MeO)Si(CH₂)₃]₂Sₘ,
   [[C₁₃H₂₇O-(CH₂-CH₂O)₅]₂(MeO)Si(CH₂)₃]₂Sₘ,
   [[C₁₃H₂₇O-(CH₂-CH₂O)₆]₂(MeO)Si(CH₂)₃]₂Sₘ,
[[C₁₄H₂₉O-(CH₂-CH₂O)₂]₂(MeO)Si(CH₂)₃]₂Sₘ,
   [[C₁₄H₂₉O-(CH₂-CH₂O)₃]₂(MeO)Si(CH₂)₃]₂Sₘ,
   [[C₁₄H₂₉O-(CH₂-CH₂O)₄]₂(MeO)Si(CH₂)₃]₂Sₘ,
   [[C₁₄H₂₉O-(CH₂-CH₂O)₅]₂(MeO)Si(CH₂)₃]₂Sₘ,
   [[C₁₄H₂₉O-(CH₂-CH₂O)₆]₂(MeO)Si(CH₂)₃]₂S_{m,}
[[C₁₆H₃₃O-(CH₂-CH₂O)₂]₂(MeO)Si(CH₂)₃]₂S_{m,}
   [[C₁₆H₃₃O-(CH₂-CH₂O)₃]₂(MeO)Si(CH₂)₃]₂Sₘ,
   [[C₁₆H₃₃O-(CH₂-CH₂O)₄]₂(MeO)Si(CH₂)₃]₂Sₘ,
   [[C₁₆H₃₃O-(CH₂-CH₂O)₅]₂(MeO)Si(CH₂)₃]₂S_{m,}
   [[C₁₆H₃₃O-(CH₂-CH₂O)₆]₂(MeO)Si(CH₂)₃]₂S_{m,}
[[C₁₈H₃₇O-(CH₂-CH₂O)₂]₂(MeO)Si(CH₂)₃]₂Sₘ,
   [[C₁₈H₃₇O-(CH₂-CH₂O)₃]₂(MeO)Si(CH₂)₃]₂Sₘ,
   [[C₁₈H₃₇O-(CH₂-CH₂O)₄]₂(MeO)Si(CH₂)₃]₂Sₘ,
   [[C₁₈H₃₇O-(CH₂-CH₂O)₅]₂(MeO)Si(CH₂)₃]₂Sₘ,
   [[C₁₈H₃₇O-(CH₂-CH₂O)₆]₂(MeO)Si(CH₂)₃]₂Sₘ,
[[C₁₀H₂₁O-(CH₂-CH₂O)₂](EtO)₂Si(CH₂)₃]₂S_{m,}
   [[C₁₀H₂₁O-(CH₂-CH₂O)₃](EtO)₂Si(CH₂)₃]₂S_{m,}
   [[C₁₀H₂₁O-(CH₂-CH₂O)₄](EtO)₂Si(CH₂)₃]₂Sₘ,
   [[C₁₀H₂₁O-(CH₂-CH₂O)₅](EtO)₂Si(CH₂)₃]₂Sₘ,
   [[C₁₀H₂₁O-(CH₂-CH₂O)₆](EtO)₂Si(CH₂)₃]₂Sₘ,
[[C₁₁H₂₃O-(CH₂-CH₂O)₂](EtO)₂Si(CH₂)₃]₂Sₘ,
   [[C₁₁H₂₃O-(CH₂-CH₂O)₃](EtO)₂Si(CH₂)₃]₂Sₘ,
   [[C₁₁H₂₃O-(CH₂-CH₂O)₄](EtO)₂Si(CH₂)₃]₂S_{m,}
   [[C₁₁H₂₃O-(CH₂-CH₂O)₅](EtO)₂Si(CH₂)₃]₂Sₘ,
   [[C₁₁H₂₃O-(CH₂-CH₂O)₆](EtO)₂Si(CH₂)₃]₂Sₘ,
[[C₁₂H₂₅O-(CH₂-CH₂O)₂](EtO)₂Si(CH₂)₃]₂S_{m,}
   [[C₁₂H₂₅O-(CH₂-CH₂O)₃](EtO)₂Si(CH₂)₃]₂Sₘ,
   [[C₁₂H₂₅O-(CH₂-CH₂O)₄](EtO)₂Si(CH₂)₃]₂Sₘ,
   [[C₁₂H₂₅O-(CH₂-CH₂O)₅](EtO)₂Si(CH₂)₃]₂Sₘ,
   [[C₁₂H₂₅O-(CH₂-CH₂O)₆](EtO)₂Si(CH₂)₃]₂Sₘ,
[[C₁₃H₂₇O-(CH₂-CH₂O)₂](EtO)₂Si(CH₂)₃]₂Sₘ,
   [[C₁₃H₂₇O-(CH₂-CH₂O)₃](EtO)₂Si(CH₂)₃]₂Sₘ,
   [[C₁₃H₂₇O-(CH₂-CH₂O)₄](EtO)₂Si(CH₂)₃]₂Sₘ,
   [[C₁₃H₂₇O-(CH₂-CH₂O)₅](EtO)₂Si(CH₂)₃]₂Sₘ,
   [[C₁₃H₂₇O-(CH₂-CH₂O)₆](EtO)₂Si(CH₂)₃]₂Sₘ,
[[C₁₄H₂₉O-(CH₂-CH₂O)₂](EtO)₂Si(CH₂)₃]₂Sₘ,
   [[C₁₄H₂₉O-(CH₂-CH₂O)₃](EtO)₂Si(CH₂)₃]₂Sₘ,
   [[C₁₄H₂₉O-(CH₂-CH₂O)₄](EtO)₂Si(CH₂)₃]₂Sₘ,
   [[C₁₄H₂₉O-(CH₂-CH₂O)₅](EtO)₂Si(CH₂)₃]₂Sₘ,
   [[C₁₄H₂₉O-(CH₂-CH₂O)₆](EtO)₂Si(CH₂)₃]₂Sₘ,
[[C₁₆H₃₃O-(CH₂-CH₂O)₂](EtO)₂Si(CH₂)₃]₂Sₘ,
   [[C₁₆H₃₃O-(CH₂-CH₂O)₃](EtO)₂Si(CH₂)₃]₂Sₘ,
   [[C₁₆H₃₃O-(CH₂-CH₂O)₄](EtO)₂Si(CH₂)₃]₂Sₘ,
   [[C₁₆H₃₃O-(CH₂-CH₂O)₅](EtO)₂Si(CH₂)₃]₂Sₘ,
   [[C₁₆H₃₃O-(CH₂-CH₂O)₆](EtO)₂Si(CH₂)₃]₂Sₘ,
[[C₁₇H₃₅O-(CH₂-CH₂O)₂](EtO)₂Si(CH₂)₃]₂Sₘ,
   [[C₁₇H₃₅O-(CH₂-CH₂O)₃](EtO)₂Si(CH₂)₃]₂Sₘ,
   [[C₁₇H₃₅O-(CH₂-CH₂O)₄](EtO)₂Si(CH₂)₃]₂Sₘ,
   [[C₁₇H₃₅O-(CH₂-CH₂O)₅](EtO)₂Si(CH₂)₃]₂Sₘ,
   [[C₁₇H₃₅O-(CH₂-CH₂O)₆](EtO)₂Si(CH₂)₃]₂Sₘ,
[[C₁₈H₃₇O-(CH₂-CH₂O)₂](EtO)₂Si(CH₂)₃]₂Sₘ,
   [[C₁₈H₃₇O-(CH₂-CH₂O)₃](EtO)₂Si(CH₂)₃]₂Sₘ,
   [[C₁₈H₃₇O-(CH₂-CH₂O)₄](EtO)₂Si(CH₂)₃]₂Sₘ,
   [[C₁₈H₃₇O-(CH₂-CH₂O)₅](EtO)₂Si(CH₂)₃]₂Sₘ,
   [[C₁₈H₃₇O-(CH₂-CH₂O)₆](EtO)₂Si(CH₂)₃]₂Sₘ,
[[C₁₂H₂₅O-(CH₂-CH₂O)₂]₂(EtO)Si(CH₂)₃]₂Sₘ,
   [[C₁₂H₂₅O-(CH₂-CH₂O)₃]₂(EtO)Si(CH₂)₃]₂Sₘ,
   [[C₁₂H₂₅O-(CH₂-CH₂O)₄]₂(EtO)Si(CH₂)₃]₂Sₘ,
   [[C₁₂H₂₅O-(CH₂-CH₂O)₅]₂(EtO)Si(CH₂)₃]₂Sₘ,
   [[C₁₂H₂₅O-(CH₂-CH₂O)₆]₂(EtO)Si(CH₂)₃]₂Sₘ,
[[C₁₃H₂₇O-(CH₂-CH₂O)₂]₂(EtO)Si(CH₂)₃]₂Sₘ,
   [[C₁₃H₂₇O-(CH₂-CH₂O)₃]₂(EtO)Si(CH₂)₃]₂Sₘ,
   [[C₁₃H₂₇O-(CH₂-CH₂O)₄]₂(EtO)Si(CH₂)₃]₂Sₘ,
   [[C₁₃H₂₇O-(CH₂-CH₂O)₅]₂(EtO)Si(CH₂)₃]₂Sₘ,
   [[C₁₃H₂₇O-(CH₂-CH₂O)₆]₂(EtO)Si(CH₂)₃]₂Sₘ,
[[C₁₄H₂₉O-(CH₂-CH₂O)₂]₂(EtO)Si(CH₂)₃]₂Sₘ,
   [[C₁₄H₂₉O-(CH₂-CH₂O)₃]₂(EtO)Si(CH₂)₃]₂Sₘ,
   [[C₁₄H₂₉O-(CH₂-CH₂O)₄]₂(EtO)Si(CH₂)₃]₂Sm,
   [[C₁₄H₂₉O-(CH₂-CH₂O)₅]₂(EtO)Si(CH₂)₃]₂Sm,
   [[C₁₄H₂₉O-(CH₂-CH₂O)₆]₂(EtO)Si(CH₂)₃]₂Sm,
[[C₁₆H₃₃O-(CH₂-CH₂O)₂]₂(EtO)Si(CH₂)₃]₂Sₘ,
   [[C₁₆H₃₃O-(CH₂-CH₂O)₃]₂(EtO)Si(CH₂)₃]₂Sₘ,
   [[C₁₆H₁₃O-(CH₂-CH₂O)₄]₂(EtO)Si(CH₂)₃]₂Sₘ,
   [[C₁₆H₃₃O-(CH₂-CH₂O)₅]₂(EtO)Si(CH₂)₃]₂Sₘ,
   [[C₁₆H₃₃O-(CH₂-CH₂O)₆]₂(EtO)Si(CH₂)₃]₂Sₘ,
[[C₁₇H₃₅O-(CH₂-CH₂O)₂]₂(EtO)Si(CH₂)₃]₂Sₘ,
   [[C₁₇H₃₅O-(CH₂-CH₂O)₃]₂(EtO)Si(CH₂)₃]₂Sₘ,
   [[C₁₇H₃₅O-(CH₂-CH₂O)₄]₂(EtO)Si(CH₂)₃]₂Sₘ,
   [[C₁₇H₃₅O-(CH₂-CH₂O)₅]₂(EtO)Si(CH₂)₃]₂Sₘ,
   [[C₁₇H₃₅O-(CH₂-CH₂O)₆]₂(EtO)Si(CH₂)₃]₂Sₘ,
[[C₁₈H₃₇O-(CH₂-CH₂O)₂]₂(EtO)Si(CH₂)₃]₂Sₘ,
   [[C₁₈H₃₇O-(CH₂-CH₂O)₃]₂(EtO)Si(CH₂)₃]₂Sₘ,
   [[C₁₈H₃₇O-(CH₂-CH₂O)₄]₂(EtO)Si(CH₂)₃]₂Sₘ,
   [[C₁₈H₃₇O-(CH₂-CH₂O)₅]₂(EtO)Si(CH₂)₃]₂Sₘ,
   [[C₁₈H₃₇O-(CH₂-CH₂O)₆]₂(EtO)Si(CH₂)₃]₂Sₘ,
[[C₁₀H₂₁O-(CH₂-CH₂O)₂]₃Si(CH₂)₃]₂Sₘ,
   [[C₁₀H₂₁O-(CH₂-CH₂O)₃]₃Si(CH₂)₃]₂Sₘ,
   [[C₁₀H₂₁O-(CH₂-CH₂O)₄]₃Si(CH₂)₃]₂Sₘ,
   [[C₁₀H₂₁-O-(CH₂-CH₂O)₅]₃Si(CH₂)₃]₂Sₘ,
   [[C₁₀H₂₁O-(CH₂-CH₂O)₆]₃Si(CH₂)₃]₂Sₘ,
[[C₁₂H₂₅O-(CH₂-CH₂O)₂]₃Si(CH₂)₃]₂Sₘ,
   [[C₁₂H₂₅O-(CH₂-CH₂O)₃]₃Si(CH₂)₃]₂Sₘ,
   [[C₁₂H₂₅O-(CH₂-CH₂O)₄]₃Si(CH₂)₃]₂Sₘ,
   [[C₁₂H₂₅O-(CH₂-CH₂O)₅]₃Si(CH₂)₃]₂Sₘ,
   [[C₁₂H₂₅O-(CH₂-CH₂O)₆]₃Si(CH₂)₃]₂Sₘ,
[[C₁₃H₂₇O-(CH₂-CH₂O)₂]₃Si(CH₂)₃]₂Sₘ,
   [[C₁₃H₂₇O-(CH₂-CH₂O)₃]₃Si(CH₂)₃]₂Sₘ,
   [[C₁₃H₂₇O-(CH₂-CH₂O)₄]₃Si(CH₂)₃]₂Sₘ,
   [[C₁₃H₂₇O-(CH₂-CH₂O)₅]₃Si(CH₂)₃]₂Sₘ,
   [[C₁₃H₂₇O-(CH₂-CH₂O)₆]₃Si(CH₂)₃]₂Sₘ,
[[C₁₄H₂₉O-(CH₂-CH₂O)₂]₃Si(CH₂)₃]₂Sₘ,
   [[C₁₄H₂₉O-(CH₂-CH₂O)₃]₃Si(CH₂)₃]₂Sₘ,
   [[C₁₄H₂₉O-(CH₂-CH₂O)₄]₃Si(CH₂)₃]₂Sₘ,
   [[C₁₉H₂₉O-(CH₂-CH₂O)₅]₃Si(CH₂)]₂Sₘ,
   [[C₁₉H₂₉O-(CH₂-CH₂O)₆]₃Si(CH₂)₃]₂Sₘ,
[[C₁₅H₃₁O-(CH₂-CH₂O)₂]₃Si(CH₂)₃]₂Sₘ,
   [[C₁₅H₃₁O-(CH₂-CH₂O)₃]₃Si(CH₂)₃]₂Sₘ,
   [[C₁₅H₃₁O-(CH₂-CH₂O)₄]₃Si(CH₂)₃]₂Sₘ,
   [[C₁₅H₃₁O-(CH₂-CH₂O)₅]₃Si(CH₂)₃]₂Sₘ,
   [[C₁₅H₃₁O-(CH₂-CH₂O)₆]₃Si(CH₂)₃]₂Sₘ,
[[C₁₆H₃₃O-(CH₂-CH₂O)₂]₃Si(CH₂)₃]₂Sₘ,
   [[C₁₆H₃₃O-(CH₂-CH₂O)3]₃Si(CH₂)₃]₂Sₘ,
   [[C₁₆H₃₃O-(CH₂-CH₂O)₄]₃Si(CH₂)₃]₂Sₘ,
   [[C₁₆H₃₃O-(CH₂-CH₂O)₅]₃Si(CH₂)₃]₂Sₘ,
   [[C₁₆H₃₃O-(CH₂-CH₂O)₆]₃Si(CH₂)₃]₂Sₘ,
[[C₁₈H₃₇O-(CH₂-CH₂O)₂]₃Si(CH₂)₃]₂Sₘ,
   [[C₁₈H₃₇O-(CH₂-CH₂O)₃]₃Si(CH₂)3]₂Sₘ,
   [[C₁₈H₃₇O-(CH₂-CH₂O)₄]₃Si(CH₂)₃]₂Sₘ,
   [[C₁₈H₃₇O-(CH₂-CH₂O)₅]₃Si(CH₂)₃]₂Sₘ oder
   [[C₁₈H₃₇O-(CH₂-CH₂O) ₆]₃Si(CH₂)₃]₂Sₘ wobei die Alkylreste unverzweigt oder verzweigt sein können.

Verbindungen der Formel IV mit Alk = C₃H₇, C₄H₉, C₅H₁₁, C₆H₁₃, C₇H₁₅, C₈H₁₇, C₉H₁₉, C₁₀H₂₁, C₁₁H₂₃, C₁₂H₂₅, C₁₃H₂₇, C₁₄H₂₉, C₁₅H₃₁, C₁₆H₃₃, C₁₇₋H₃₅ oder C₁₈H₃₇ können sein:
[[Alk-O-(CH₂-CH(CH₃)0-) ₂](MeO)₂Si(CH₂)₃]₂Sₘ,
   [[Alk-O-(CH₂-CH(CH₃)0-) ₃](MeO)₂Si(CH₂)₃]₂Sₘ,
   [[Alk-O-(CH₂-CH(CH₃)0-) ₄](MeO)₂Si(CH₂)₃]₂Sₘ,
   [[Alk-O-(CH₂-CH(CH₃)0-) ₅](MeO)₂Si(CH₂)₃]₂Sₘ,
   [[Alk-O-(CH₂-CH(CH₃)0-) ₆](MeO)₂Si(CH₂)₃]₂Sₘ,
[[Alk-O-(CH₂-CH(CH₃)O-)₂]₂(MeO)Si(CH₂)₃]₂Sₘ,
   [[Alk-O-(CH₂-CH(CH₃)O-)₃]₂(MeO)Si(CH₂)₃]₂Sₘ,
   [[Alk-O-(CH₂-CH(CH₃)O-)₄]₂(MeO)Si(CH₂)₃]₂Sₘ,
   [[Alk-O-(CH₂-CH(CH₃)O-)₅]₂(MeO)Si(CH₂)₃]₂Sₘ,
   [[Alk-O-(CH₂-CH(CH₃)O-)₆]₂(MeO)Si(CH₂)₃]₂Sₘ,
[[Alk-O-(CH₂-CH(CH₃)O-)₂](Me)(MeO)Si(CH₂)₃]₂Sₘ,
   [[Alk-O-(CH₂-CH(CH₃)0-)₃](Me)(MeO)Si(CH₂)₃]₂Sₘ,
   [[Alk-O-(CH₂-CH(CH₃)O-)₄](Me)(MeO)Si(CH₂)₃]₂Sₘ,
   [[Alk-O-(CH₂-CH(CH₃)O-)₅](Me)(MeO)Si(CH₂)₃]₂Sₘ,
   [[Alk-O-(CH₂-CH(CH₃)O-)₆](Me)(MeO)Si(CH₂)₃]₂Sₘ,
[[Alk-O-(CH₂-CH(CH₃)O-)₂](EtO)₂Si(CH₂)₃]₂Sₘ,
   [[Alk-O-(CH₂-CH(CH₃)O-)₃](EtO)₂Si(CH₂)₃]₂Sₘ,
   [[Alk-O-(CH₂-CH(CH₃)O-)₄](EtO)₂Si(CH₂)₃]₂Sₘ,
   [[Alk-O-(CH₂-CH(CH₃)0-)₅](EtO)₂Si(CH₂)₃]₂Sₘ,
   [[Alk-O-(CH₂-CH(CH₃)0-)₆](EtO)₂Si(CH₂)₃]₂Sₘ,
[[Alk-O-(CH₂-CH(CH₃)0-)₂]₂(EtO)Si(CH₂)₃]₂Sₘ,
   [[Alk-O-(CH₂-CH(CH₃)O-)₃]₂(EtO)Si(CH₂)₃]₂Sₘ,
   [[Alk-0-(CH₂-CH(CH₃)O-)₄]₂(EtO)Si(CH₂)₃]₂S_{m,}
   [[Alk-O-(CH₂-CH(CH₃)O-)₅]₂(EtO)Si(CH₂)₃]2Sₘ,
   [[Alk-0-(CH₂-CH(CH₃)O-)₆]₂(EtO)Si(CH₂)₃]₂Sₘ,
[[Alk-O-(CH₂-CH(CH₃)O-)₂](Me)(EtO)Si(CH₂)₃]₂Sₘ,
   [[Alk-O-(CH₂-CH(CH₃)O-)₃](Me)(EtO)Si(CH₂)₃]₂Sₘ,
   [[Alk-O-(CH₂-CH(CH₃)O-)₄](Me)(EtO)Si(CH₂)₃]₂Sₘ,
   [[Alk-O-(CH₂-CH(CH₃)O-)₅](Me)(EtO)Si(CH₂)₃]₂Sₘ,
   [[Alk-O-(CH₂-CH(CH₃)0-)₆](Me)(EtO)Si(CH₂)₃]₂Sₘ,
[[Alk-O-(CH₂-CH(CH₃)0-)₂]₂(Me)Si(CH₂)₃₂Sₘ,
   [[Alk-O-(CH₂-CH(CH₃)0-)₃]₂(Me)Si(CH₂)₃]₂Sₘ,
   [[Alk-O-(CH₂-CH(CH₃)O-)₄]₂(Me)Si(CH₂)₃]₂Sₘ,
   [[Alk-O-(CH₂-CH(CH₃)0-)₅]₂(Me)Si(CH₂)₃]₂Sₘ,
   [[Alk-O-(CH₂-CH(CH₃)0-)₆]₂(Me)Si(CH₂)₃]₂Sₘ,
[[Alk-0-(CH₂-CH(CH₃)O-)₂](Me)₂Si(CH₂)₃]₂Sₘ,
   [[Alk-O-(CH₂-CH(CH₃)O-)₃](Me)₂Si(CH₂)₃]₂Sₘ,
   [[Alk-O-(CH₂-CH(CH₃)O-)₄](Me)₂Si(CH₂)₃]₂Sₘ,
   [[Alk-O-(CH₂-CH(CH₃)O-)₅](Me)₂Si(CH₂)₃]₂Sₘ oder
   [[Alk-O-(CH₂-CH(CH₃)O-)₆](Me)₂Si(CH₂)₃]₂Sₘ,
wobei die Gruppen Alk unverzweigt oder verzweigt sein können.

Alkylpolyetheralkohole der Formel V können sowohl als Gemische verschiedener Alkohole, wie auch als reine Substanzen eingesetzt werden. Als Alkylpolyetheralkohole HO-((CR^{II}₂)_{w}-O-)ᵥ Alk können beispielsweise verzweigte oder lineare Alkohole eingesetzt werden, die ethoxyliert/propoxyliert sind bzw. Ethylenoxid- und/oder Propylenoxid-Einheiten enthalten.

Die verwendeten Alkylpolyetheralkohole können kohlenwasserstoffterminiertes Polyethylenglykol Alk'-O-(CH₂-CH₂-O)_{yI}-H bzw. Alk'-(CH₂-CH₂-O_{yI}-Alk',
kohlenwasserstoffterminiertes Polypropylenglykol Alk'-O-(CH₂-CH(CH₃)-O)_{yI}-H bzw. Alk'-O-(CH₂-CH(CH₃)-O)_{yI}-Alk',
kohlenwasserstoffterminiertes Polybutylenglykol Alk-O-(CH₂-CH₂-CH₂-CH₂-O)_{yI}-H, Alk'-O-(CH₂-CH(CH₃)-CH₂-O)_{yI}-H, Alk'-0- (CH₂-CH₂-CH₂-CH₂-O) _{yI}-Alk' oder Alk' -0- (CH₂-CH (CH₃) -CH₂-O)_{yI}-Alk',
mit y^{I} im Mittel 2-25, bevorzugt 2-15, besonders bevorzugt 3-8 und 10-14, ganz besonders bevorzugt 3-6 und 10-13, und Alk' gleich eine verzweigte oder unverzweigte, gesättigte oder ungesättigte, substituierte oder unsubstituierte, aliphatische, aromatische oder gemischt aliphatische /aromatische einbindige C₁-C₃₅ -, bevorzugt C₂-C₂₂ -, besonders bevorzugt C₃-C₁₈ -, ganz besonders bevorzugt C₄ - C₁₃ -, außerordentlich bevorzugt C₆-C₁₀ -, Kohlenwasserstoffgruppe ist,
sein.

Die in den Alkylpolyetheralkoholen der Form HO-(CR^{II}₂-CR^{II}₂-O)_{yI}-Alk' vorhandene Einheit O-(CR^{II}₂-CR^{II}₂-O)_{yI} kann bevorzugt sein:
O-(-CH₂-CH₂-O-)ₐ,
O-(-CH(CH₃)-CH₂-O-)ₐ,
O-(-CH₂-CH(CH₃)-O-)ₐ,
O-(-CH₂-CH₂-O-)₈(-CH(CH₃)-CH₂-O-),
O-(-CH₂-CH₂-O-)(-CH(CH₃)-CH₂-O-)ₐ,
O-(-CH₂-CH₂-O-)ₐ(-CH₂-CH(CH₃)-O-),
O-(-CH₂-CH₂-O-)(-CH₂-CH(CH₃)-O-)ₐ,
O-(-CH(CH₃)-CH₂-O-)ₐ(-CH₂-CH(CH₃)-O-),
O-(-CH(CH₃)-CH₂-O-)(-CH₂-CH(CH₃)-O-)ₐ,
0- (-CH₂-CH₂-O-)ₐ(CH(CH₃)-CH₂-O-)_{b}(-CH₂-CH(CH₃)-O-)_{c}oder Kombination miteinander,
   wobei a + b + c = y^{T} ist.

Die Indexe a, b und c sind ganze Zahlen und bezeichnen die Anzahl der Wiederholeinheiten.

Die Alkylpolyetheralkohole der allgemeinen Formel V können bevorzugt sein:
HO-(CH₂-CH₂O)₂-C₃H₇, HO-(CH₂-CH₂O)₃-C₃H₇, HO-(CH₂-CH₂O)₄-C₃H₇, HO-(CH₂-CH₂O)₅-C₃H₇, HO-(CH₂-CH₂O)₆-C₃H₇, HO-(CH₂-CH₂O)₇-C₃H₇, HO-(CH (CH₃) -CH₂O)₂-C₃H₇, HO- (CH (CH₃)-CH₂O)₃-C₃H₇, HO- (CH (CH₃) - CH₂O)₄-C₃H_{7,} HO-(CH(CH₃)-CH₃O)₅-C₃H₇, HO-(CH(CH₃)-CH₂O)₆-C3H₇, HO- (CH (CH₃)-CH₂O)₇-C₃H₇,
HO-(CH₂-CH₂O)₂-C₄H₉, HO-(CH₂-CH₂O)₃-C₄H₉, HO-(CH₂-CH₂O)₄-C₄H₉, HO-(CH₂-CH₂O)₅-C₄H₉, HO-(CH₂-CH₂O)₆-C₄H₉, HO-(CH₂-CH₂O)₇-C₄H₉, HO- (CH (CH₃)-CH₂O)₂-C₄H₉, HO- (CH (CH₃)-CH₂O)₃-C₄H₉, HO- (CH (CH₃) - CH₂O)₄-C₄H₉, HO-(CH(CH₃)-CH₂O)₅-C₄H₉, HO-(CH(CH₃)-CH₂O)₆-C₄H₉, HO- (CH (CH₃)-CH₂O)₇-C₄H₉,
HO-(CH₂-CH₂O)₂-C₅H₁₁, HO-(CH₂-CH₂O)₃-C₅H₁₁, HO-(CH₂-CH₂O)₄-C₅H₁₁, HO-(CH₂-CH₂O)₅-CH₁₁, HO-(CH₂-CH₂O)₆-C₅H₁₁, HO- (CH₂-CH₂O)₇-C₅H₁₁, HO-(CH(CH₃)-CH₂O)₂-C₅H₁₁, HO-(CH(CH₃)-CH₂O)₃-C₅H₁₁, HO-(CH (CH₃)-CH₂O)-C₅H₁₁,HO- (CH (CH₃)-CH₂O)₅-C₅H₁₁, HO-(CH (CH₃) - CH₂O)₆-C₅H₁₁, HO- (CH (CH₃)-CH₂O)₇-C₅H₁₁,
HO-(CH₂-CH₂O)₂-C₆H₁₃, HO-(CH₂-CH₂O)₃-C₆H₁₃, HO-(CH₂-CH₂O)₄-C₆H₁₃, HO-(CH₂-CH₂O)₅-C₆H₁₃, HO-(CH₂-CH₂O)₆-C₆H₁₃, HO-(CH₂-CH₂O)₇-C₆H₁₃, HO-(CH(CH₃)-CH₂O)₂-C₆H₁₃, HO-(CH(CH₃)-CH₂O)₃-C₆H₁₃, HO-(CH(CH₃)-CH₂O)₄-C₆H₁₃, HO-(CH(CH₃)-CH₂O)₅-C₆H₁₃, HO-(CH(CH₃-CH₂O)₆-C₆H₁₃, HO- (CH (CH₃)-CH₂O)₇-C₆H₁₃,
HO-(CH₂-CH₂O)₂-C₇H₁₅, HO-(CH₂-CH₂O)₃-C₇H₁₅ , HO-(CH₂-CH₂O)₄-C₇H₁₅, HO-(CH₂-CH₂O)₅-C₇H₁₅, HO-(CH₂-CH₂O)₆-C₇H₁₅, HO-(CH₂-CH₂O)-C₇H₁₅, HO-(CH(CH₃)-CH₂O)₂-C₇H₁₅, HO-(CH(CH₃)-CH₂O)₃-C₇H₁₅, HO-(CH(CH₃)-CH₂O)₄-C₇H₁₅, HO-(CH(CH₃)-CH₂O)₅-C₇H_{15,} HO-(CH(CH₃)-CH₂O)₆-C₇H₁₅, HO- (CH (CH₃)-CH₂O)₇-C₇H₁₅,
HO-(CH₂-CH₂O)₂-C₈H₁₇, HO-(CH₂-CH₂O)₃-C₈H₁₇, HO-(CH₂-CH₂O)₄-C₈H₁₇, HO-(CH₂-CH₂O)₅-C₈H₁₇, HO-(CH₂-CH₂O)₆-C₈H₁₇, HO-(CH₂-CH₂O)₇-C₈H₁₇, HO-(CH(CH₃)-CH₂O)-C₈H₁₇, HO-(CH(CH₃)₋CH₂O)₃-C₈H₁₇, HO-(CH (CH₃)-CH₂O)₄-C₈H₁₇, HO- (CH(CH₃)-CH₂O)₅-C₈H₁₇, HO- (CH (CH₃) - CH₂O)₆-C₈H₁₇, HO- (CH (CH₃)-CH₂O)₇-C₈H₁₇,
HO-(CH₂-CH₂O)₂-C₉H₁₉, HO-(CH₂-CH₂O)₃C₉H₁₉, HO-(CH₂-CH₂O)₄-C₉H₁₉, HO-(CH₂-CH₂O)₅-C₉H₁₉**,** HO-CH₂-CH₂O)₆-C₉H₁₉, HO-(CH₂-CH₂O)C₉H₁₉, HO-(CH(CH₃)-CH₂O)₂-C₉H₁₉, HO-(CH(CH₃)-CH₂O)₃-C₉H₁₉, HO-(CH(CH₃)-CH₂O)₄-C₉H₁₉, HO-(CH(CH₃)-CH₂O)₅-C₉H₁₉, HO-(CH(CH₃)-CH₂O)₆-C₉H₁₉, HO- (CH(CH₃)-CH₂O)₇C₉H₁₉,
HO-(CH₂-CH₂O)₂-C₁₀H₂₁, HO-(CH₂-CH₂O)₃-C₁₀H₂₁, HO-(CH₂-CH₂O)₄-C₁₀H₂₁, HO-(CH₂-CH₂O)₅-C₁₀H₂₁, HO-(CH₂-CH₂O)₆-C₁₀H₂₁, HO-(CH₂-CH₂O)₇-C₁₀H₂₁,
   HO-(CH(CH₃)-CH₂O)₂-C₁₀H₂₁, HO-(CH(CH₃)-CH₂O)₃-C₁₀H₂₁, HO-(CH(CH₃)-CH₂O)₄-C₁₀H₂₁, HO-(CH(CH₃)-CH₂O)₅-C₁₀H₂₁, HO-(CH(CH₃)-CH₂O)₆-C₁₀H₂₁, HO- (CH (CH₃)-CH₂O)₇-C₁₀H₂₁,
HO-(CH₂-CH₂O)₂-C₁₁H₂₃, HO-(CH₂-CH₂O)₃-C₁₁H₂₃, HO-(CH₂-CH₂O)₄-C₁₁H₂₃, HO-(CH₂-CH₂O)₅-C₁₁H₂₃, HO-(CH₂-CH₂O)₆-C₁₁H₂₃, HO-(CH₂-CH₂O)₇-C₁₁H₂₃,
   HO-(CH(CH₃)-CH₂O)₂-C₁₁H₂₃, HO- (CH (CH₃)-CH₂O)₃-C₁₁H₂₃, HO-(CH (CH₃)-CH₂O)₄-C₁₁H₂₃, HO-(CH(CH₃)-CH₂O)₅-C₁₁H₂₃, HO- (CH (CH₃) - CH₂O)₆-C₁₁,H₂₃, HO-(CH(CH₃)-CH₂O)-C₁₁H₂₃,
HO-(CH₂-CH₂O)₂-C₁₂H₂₅, HO-(CH₂-CH₂O)₃-C₁₂H₂₅, HO-(CH₂-CH₂O) ₄-C₁₂H₂₅, HO-(CH₂-CH₂O)₅-C₁₂H₂₅, HO-(CH₂-CH₂O)₆-C₁₂H₂₅, HO- (CH₂-CH₂O)₇-C₁₂H₂₅,
   HO- (CH (CH₃)-CH₂O)₂-C₁₂H₂₅, HO- (CH (CH₃) -CH₂O)₃-C₁₂H_{25,} HO-(CH (CH₃)-CH₂O)₄-C₁₂H₂₅, HO-(CH(CH₃)-CH₂O)₅-C₁₂H₂₅, HO- (CH (CH₃) - CH₂O)₆-C₁₂H₂₅, HO-(CH(CH₃)-CH₂O)₇-C₁₂H₂₅,
HO-(CH₂-CH₂O)₂-C₁₃H₂₇, HO-(CH₂-CH₂O)₃-C₁₃H₂₇, HO-(CH₂-CH₂O) ₄-C₁₃H₂₇, HO-(CH₂-CH₂O)₅-C₁₃H₂₇, HO-(CH₂-CH₂O)₆-C₁₃H₂₇, HO- (CH₂-CH₂O)₇-C₁₃H₂₇,
   HO- (CH (CH₃) -CH₂O)₂-C₁₃H₂₇, HO-(CH (CH₃)-CH₂O)₃-C₁₃H₂₇, HO-(CH (CH₃)-CH₂O)₄-C₁₃H₂₇, HO-(CH (CH₃)-CH₂O)₅-C₁₃H₂₇, HO- (CH (CH₃) - CH₂O)₆-C₁₃H₂₇, HO-(CH(CH₃)-CH₂O)₇-C₁₃H₂₇,
HO-(CH₂-CH₂O)₂-C₁₄H₂₉, HO-(CH₂-CH₂O)₃-C₁₄H₂₉, HO-(CH₂-CH₂O) ₄-C₁₄H₂₉, HO-(CH₂-CH₂O)₅-C₁₄H₂₉, HO-(CH₂-CH₂O)₆-C₁₄H₂₉, HO- (CH₂-CH₂O)-₇-C₁₄H₂₉,
   HO-(CH(CH₃)-CH₂O)₂-C₁₄H₂₉, HO- (CH (CH₃)-CH₂O)-C₁₄H29, HO-(CH(CH₃)-CH₂O)₄-C₁₄H₂₉, HO-(CH(CH₃)-CH₂O)₅-C₁₄H₂₉, HO-(CH(CH₃) - CH₂O)₆-C₁₄H₂₉, HO-(CH(CH₃-CH₂O)₇-C₁₄H₂₉,
HO-(CH₂-CH₂O)₂-C₁₅H₃₁, HO-(CH₂-CH₂O)₃-C₁₅H₃₁, HO-(CH₂-CH₂O) ₄-C₁₅H₃₁, HO-(CH₂-CH₂O)₅-C₁₅H₃₁, HO-(CH₂-CH₂O)₆-C₁₅H₃₁, HO- (CH₂-CH₂O)₇-C₁₅H₃₁,
   HO-(CH(CH₃)-CH₂O)₂-C₁₅H₃₁, HO- (CH (CH₃)-CH₂O)₃-C₁₅H₃₁, HO-(CH(CH₃)-CH₂O)₄-C₁₅H₃₁, HO-(CH(CH₃)-CH₂O)₅-C₁₅H₃₁, HO-(CH(CH₃) - CH₂O)₆-C₁₅H₃₁, HO-(CH(CH₃)-CH₂O)₇-C₁₅H₃₁,
HO-(CH₂-CH₂O)₂-C₁₆H₃₃, HO-(CH₂-CH₂O)₃-C₁₆H₃₃, HO-(CH₂-CH₂O) ₄-C₁₆H₃₃, HO- (CH₂-CH₂O)₅-C₁₆H₃₃, HO-(CH₂-CH₂O)₆-C₁₆H₃₃, HO-(CH(CH₃)-CH₂O)₂-C₁₆H₃₃, HO-(CH(CH₃)-CH₂O)₃-C₁₆H_{33,} HO-(CH(CH₃)-CH₂O)₄-C₁₆H₃₃, HO-(CH(CH₃)-CH₂O)₅-C₁₆H_{33,} HO-(CH(CH₃)-CH₂O)₆-C₁₆H₃₃,
HO-(CH₂-CH₂O)₂-C₁₇H₃₅, HO-(CH₂-CH₂O)₃--C₁₇H₃₅, HO-(CH₂-CH₂O)₄-C₁₇H₃₅, HO-(CH₂-CH₂O)₅-C₁₇H₃₅, HO-(CH₂-CH₂O)₆-C₁₇H_{35,} HO-(CH₂-CH₂O)₇-C₁₇H₃₅,
   HO-(CH(CH₃)-CH₂O)₂-C₁₇H₃₅, HO-(CH(CH₃)-CH₂O)₃-C₁₇H₃₅, HO-(CH(CH₃)-CH₂O)₄-C₁₇H₃₅, HO-(CH(CH₃)-CH₂O)₅-C₁₇H₃₅, HO-(CH(CH₃)-CH₂O)₆-C₁₇H₃₅, HO-(CH(CH₃-CH₂O)₇-C₁₇H₃₅,
HO-(CH₂-CH₂O)₂-C₁₈H₃₇, HO-(CH₂-CH₂O)₃-C₁₈H₃₇, HO-(CH₂-CH₂O) ₄-C₁₈H₃₇, HO-(CH₂-CH₂O)₅-C₁₈H₃₇,
   HO- (CH (CH₃)-CH₂O)₂-C₁₈H₃₇, HO-(CH(CH₃-CH₂O)₃-C₁₈H₃₇,
   HO-(CH(CH₃)-CH₂O)₄-C₁₈H₃₇, HO-(CH(CH₃)-CH₂O)₅-C₁₈H₃₇, HO-(CH (CH₃)-CH₂O)₆-C₁₈H₃₇, HO- (CH(CH₃)-CH₂O)₇C₁₈H₃₇,
HO-(CH₂-CH₂O)₂-C₆H₄-C₉H₁₉, HO-(CH₂-CH₂O)₃-C₆H₄-C₉H₁₉, HO-(CH₂-CH₂O)₄--C₆H₄-C₉H₁₉, HO-(CH₂-CH₂O)₅-C₆H₄-C₉H₁₉, HO-(CH₂-CH₂O)₆-C₆H₄-C₉H₁₉, HO-(CH₂-CH₂O)-C₆H₄-C₉H₁₉,
HO- (CH (CH₃)-CH₂O)₂-C₆H₄-C₉H₁₉, HO- (CH (CH₃)-CH₂O)₃-C₆H₄-C₉H₁₉, HO- (CH (CH₃)-CH₂O)₄-C₆H₄-C₉H₁₉, HO-(CH(CH₃)-CH₂O)₅-C₆H₄-C₉H₁₉, HO-(CH(CH₃)-CH₂O)₆-C₆H₄-C₉H₁₉ oder HO- (CH(CH₃)-CH₂O)₇-C₆H₄-C₉H₁₉ sein.

Die polysulfidischen Organo(alkylpolyethersilane) der allgemeinen Formel III und IV können Gemische aus polysulfidischen Organo(alkylpolyethersilanen) der allgemeinen Formel III und IV sein.

Die polysulfidischen Organo(alkylpolyethersilane) der allgemeinen Formel III und IV können Gemische aus polysulfidischen Organo(alkylpolyethersilanen) der allgemeinen Formel III und IV sein, die unterschiedliche X mit gegebenenfalls unterschiedlichen v und/oder w besitzen.

Die polysulfidischen Organo(alkylpolyethersilane) der allgemeinen Formel IV können ein Gemisch aus polysulfidischen Organo(alkylpolyethersilanen) der allgemeinen Formel IV sein, in denen Alk eine unterschiedliche Anzahl an Kohlenstoffatomen hat und/oder verzweigt ist.

Die polysulfidischen Organo(alkylpolyethersilane) der allgemeinen Formel IV können ein Gemisch aus polysulfidischen Organo(alkylpolyethersilanen) der allgemeinen Formel IV sein, in denen Verbindungen mit S₂ mit mehr als 50 mol-%, bevorzugt mit mehr als 70 mol-%, besonders bevorzugt mit mehr als 85 mol-%, ganz besonders bevorzugt mit mehr als 95 mol-%, enthalten sind.

Die polysulfidischen Organo(alkylpolyethersilane) mit S₁ können mit 0,01 bis 20 mol-%, bevorzugt von 0,1 bis 15 mol-%, besonders bevorzugt von 0,1 bis 10 mol-%, ganz besonders bevorzugt von 2 bis 8 mol-%, bezogen auf die im erfindungsgemäßen Gemisch enthaltenen polysulfidischen Organo(alyklpolyethersilanen) der allgemeinen Formel III und IV, enthalten sein.

Aus den erfindungsgemäßen Gemischen aus siliciumhaltigen Kopplungsreagentien, enthaltend
silanolgruppenhaltige (Mercaptoorganyl)alkylpolyethersilane und
silanolgruppenfreie (Mercaptoorganyl)alkylpolyethersilane in Gew.-Verhältnissen von 5:95 bis 95:5 können durch Wasserzugabe und ggf. Additivzugabe unter Hydrolyse oder Wasserabspaltung leicht Kondensationsprodukte, das heisst Oligo- und Polysiloxane, gebildet werden.

Diese oligomeren oder polymeren Siloxane aus den erfindungsgemäßen Gemischen aus siliciumhaltigen Kopplungsreagentien können als Kopplungsreagentien für dieselben Anwendungen wie die erfindungsgemäßen, nicht kondensierten Gemische aus siliciumhaltigen Kopplungsreagentien eingesetzt werden.

Die erfindungsgemäßen Gemische aus siliciumhaltigen Kopplungsreagentien können mittels HPLC- und/oder GPC-Techniken aufgetrennt werden.

Die erfindungsgemäßen Gemische aus siliciumhaltigen Kopplungsreagentien können als Mischung oder aufgetrennt in einzelne Fraktionen oder Bestandteile mittels hochauflösender ¹H-, ²⁹Si-, ¹³C-NMR, HPLC, GPC und/oder hochauflösender Massenspektrometrie analytisch beschrieben werden.

Die erfindungsgemäßen Gemische aus siliciumhaltigen Kopplungsreagentien können als Mischung oder aufgetrennt in einzelne Fraktionen oder Bestandteile bevorzugt mittels hochauflösender ¹³C-NMR analytisch beschrieben werden.

Die erfindungsgemäßen Gemische aus siliciumhaltigen Kopplungsreagentien können durch HPLC in Ihre einzelnen Bestandteile aufgetrennt und analysiert werden.

Die erfindungsgemäßen Gemische aus siliciumhaltigen Kopplungsreagentien können durch GPC in einzelne Fraktionen oder Bestandteile aufgetrennt und anschließend analytisch beschrieben werden.

Die erfindungsgemäßen Gemische aus siliciumhaltigen Kopplungsreagentien können durch hochauflösende Massenspektrometrie bezüglich ihrer einzelnen Bestandteile analysiert werden.

Die summarische Zusammensetzung der erfindungsgemäßen Gemische aus siliciumhaltigen Kopplungsreagentien kann durch die relativen Verteilung der Alkoxysubstituenten zueinander mittels ¹³C- und ²⁹Si-Kernresonanzspektroskopie ermittelt werden.

Die Zusammensetzung der entstandenen Substanzgemische bezüglich der relativen Verteilung der Alkoxysubstituenten zueinander kann durch Totalhydrolyse der Alkoxysilane und anschließender chromatographischer Analyse erfolgen.

Die erfindungsgemäßen Gemische aus siliciumhaltigen Kopplungsreagentien können folgendermaßen erhältlich sein:
(1) Physikalische Vermischung der einzelnen Bestandteile oder von Gruppen der Bestandteile zu der erfindungsgemäßen Mischung aus siliciumhaltigen Kopplungsreagentien.
(2) Veresterung einer Mischung aus Mercaptoorganyl-(alkoxysilanen) und gegebenenfalls Bis(alkoxysilylorganyl)-polysulfiden mit Alkylpolyetheralkoholen der allgemeinen Formel V in Gegenwart von Wasser. Die hydrolysierten oder umgeesterten Alkoxygruppen der Alkoxysilane werden als Alkohol, bevorzugt Methanol oder Ethanol abdestilliert.
(3) Hydrolyse von Alkoxygruppen in siliciumhaltigen Kopplungsreagentien der allgemeinen Formel (Alkyl-O)₃-ₕ(Alkyl)ₕSi-R^{I}-SH oder in Mischungen aus siliciumhaltigen Kopplungsreagentien der allgemeinen Formel (Alkyl-O)₃-ₕ(Alkyl)ₕSi-R^{I}-SH und [(Alkyl-O)₃₋ₕ (Alkyl)ₕSi-R^{I}-]₂Sₘ, mit h = 0 oder 1, z.B. durch Wasser und / oder Additivzusatz. Anschließend erfolgt eine Um- oder Veresterung der gebildeten Silanolgruppen oder verbliebenen Alkoxyfunktionen mit Alkylpolyetheralkoholen zu den erfindungsgemäßen Gemischen von siliciumhaltigen Kopplungsreagentien, wahlweise mit einer destillativen Entfernung der freigesetzten, leichtflüchtigen Alkoholen, bevorzugt Methanol und Ethanol bzw. von Wasser.
(4) Hydrolyse von Alkoxy- oder Alkylpolyethergruppen in siliciumhaltigen Kopplungsreagentien der allgemeinen Formel II oder in Mischungen aus siliciumhaltigen Kopplungsreagentien der allgemeinen Formel II und IV zu den erfindungsgemäßen Gemischen von siliciumhaltigen Kopplungsreagentien. Die Hydrolyse erfolgt z.B. durch Wasser, wahlweise dem Zusatz von Additiven und der destillativen Entfernung der freigesetzten, flüchtigen Alkohole, bevorzugt Methanol und Ethanol.
(5) Schwefelung einer Verbindung der allgemeinen Formel (X) (X''') (X''') Si-R^{I}-Halogen analog dem in EP 06110685.2 beanspruchten Verfahren zu dem erfindungsgemäßen Gemisch aus siliciumhaltigen Kopplungsreagentien, gegebenenfalls unter Zusatz von Alkylpolyetheralkoholen der allgemeinen Formel V. Die Schwefelung kann z.B. mittels Phasentransferkatalyse in einer wässrigen Umgebung erfolgen. Die Schwefelung kann in Anlehnung an US 5840952 unter Verwendung von Schwefelwasserstoff und Natriumsulfid gegebenenfalls unter Luftausschluß und/oder unter Druck erfolgen.

Die für die physikalische Vermischung der einzelnen Bestandteile oder von Gruppen der Bestandteile zu der erfindungsgemäßen Mischung aus siliciumhaltigen Kopplungsreagentien notwendigen Substanzen können beispielsweise analog EP 1672017, EP1394166 , DE 3426987, DE 102005032658.7, DE 102005052233; DE 102005060122.7 synthetisiert werden, oder sind als Handelsprodukt erhältlich.

Ein weiterer Gegenstand der Erfindung ist ein Verfahren zur Herstellung der erfindungsgemäßen Gemische aus siliciumhaltigen Kopplungsreagentien, welches dadurch gekennzeichnet ist, daß man Mercaptoorganyl(alkoxysilane) mit Alkylpolyetheralkoholen der allgemeinen Formel V in Gegenwart von Wasser umestert und hydrolysiert.

Ein weiterer Gegenstand der Erfindung ist ein Verfahren zur Herstellung der erfindungsgemäßen Gemische aus siliciumhaltigen Kopplungsreagentien, welches dadurch gekennzeichnet ist, daß man Mercaptoorganyl(alkoxysilane) oder Mischungen von Mercaptoorganyl(alkoxysilanen) durch Wasser und/oder Additivzusatz teilweise hydrolysiert, anschließend oder während der Hydrolyse Alkylpolyetheralkohole der allgemeinen Formel V zusetzt und die Substanzen zu den erfindungsgemäßen Gemischen von siliciumhaltigen Kopplungsreagentien umsetzt.

Ein weiterer Gegenstand der Erfindung ist ein Verfahren zur Herstellung der erfindungsgemäßen Gemische aus siliciumhaltigen Kopplungsreagentien, welches dadurch gekennzeichnet ist, daß man siliciumhaltige Kopplungsreagentien der allgemeinen Formel II zu den erfindungsgemäßen Gemischen von siliciumhaltigen Kopplungsreagentien durch Wasserzugabe und/oder Additivzugabe umsetzt.

In einer speziellen Ausführungsform kann die erfindungsgemäße Mischung hergestellt werden, indem man Mercaptoorganyl(alkoxysilane) mit Bis(alkoxysilylorganyl)-polysulfiden vermischt und mit Alkylpolyether-alkoholen der allgemeinen Formel V in Gegenwart von Wasser umsetzt.

Die Umsetzung kann in Gegenwart eines Katalysators durchgeführt werden.

Die als Katalysatoren verwendeten Verbindungen können metallhaltig oder metallfrei sein. Die als Katalysatoren nutzbaren Verbindungen können die in EP 1285926 A1 beschriebenen Katalysatoren sein.

In einer besonderen Ausführung der Reaktion können Alkoholate der IV. Nebengruppe des Periodensystems, insbesondere Alkoholate des Titans, wie beispielsweise Tetra-*n*-butyl-othotitanat, verwendet werden.
Diese Katalysatoren können in Mengen von 0,01-5 Gew.-%, bevorzugt 0,01-1 Gew.-%, besonders bevorzugt 0,01-0,5 Gew.-%, bezogen auf eingesetzte siliciumhaltige Verbindungen, eingesetzt werden.

Bei Temperaturen von 20-150°C, bevorzugt 50-120°C, besonders bevorzugt 60-100°C, kann die Reaktionsmischung mit Alkylpolyetheralkoholen der allgemeinen Formel V, denen man zuvor 0-10 Gew.-% Wasser (bezogen auf die Menge an eingesetzten siliciumhaltigen Verbindungen) zugibt, versetzt und bei Temperaturen von 20-200°C, bevorzugt 50-160°C, besonders bevorzugt 80-140°C, umgesetzt werden.

Die Reaktion kann bei Normaldruck oder vermindertem Druck durchgeführt werden.

Freiwerdende Alkohole können nach der Reaktion destillativ entfernt werden oder während des Reaktionsverlaufs kontinuierlich oder diskontinuierlich entfernt werden.

Der Umsatz der Reaktion kann durch die Menge an abdestilliertem Alkohol verfolgt werden. In Fällen, in denen der Umsatz auch nach längerem Erwärmen und Evakuieren unvollständig bleibt, kann es empfehlenswert sein, erneut eine Menge von 0-5 Gew.-% (bezogen auf die Menge an eingesetzten siliciumhaltigen Verbindungen) des Katalysators zuzugeben.

Die Synthese der erfindungsgemäßen Mischungen kann darüber hinaus durch Hydrolyse der Alkoxygruppen einer Mischung von Verbindungen der allgemeinen Formel II oder einer Mischung von siliciumhaltigen Kopplungsreagentien der allgemeinen Formel II und IV erfolgen. Dazu wird die genannte Mischung mit einem Anteil von 0-10 Gew.-% Wasser (bezogen auf die eingesetzten siliziumhaltigen Spezies) versetzt und ggf. ein Katalysator zugegeben. Katalysatoren können die oben beschriebenen metallhaltigen oder metallfreien Verbindungen sein. Katalysatoren können Verbindungen der allgemeinen Formeln NH₄(OH) oder N(Alkyl)H₃(OH), N(Alkyl)₂H₂(OH), N(Alkyl)₃H(OH) oder N(Alkyl)₄(OH) sein. Diese Katalysatoren können in Mengen von 0-5 Gew.-%, bevorzugt 0,01-1 Gew.-%, besonders bevorzugt 0,01-0,5 Gew.-%, bezogen auf eingesetzte siliciumhaltige Verbindungen, eingesetzt werden.

Die Reaktionsmischung kann bei Temperaturen von 20-150°C, bevorzugt 50-120°C, besonders bevorzugt 60-100°C, umgesetzt werden.

Die Reaktion kann bei Normaldruck oder verminderten Drücken durchgeführt werden.

Freiwerdende Alkohole können nach der Reaktion destillativ entfernt werden oder während des Reaktionsverlaufs kontinuierlich oder diskontinuierlich abdestilliert werden.

Ein weiterer Gegenstand der Erfindung sind Kautschukmischungen, welche dadurch gekennzeichnet sind, daß sie Kautschuk, Füllstoff, wie beispielsweise gefällte Kieselsäure, gegebenenfalls weitere Kautschukhilfsmittel, sowie die erfindungsgemäße Mischung aus siliciumhaltigen Kopplungsreagentien enthalten.

Das erfindungsgemäße Gemisch aus siliciumhaltigen Kopplungsreagentien kann als Haftvermittler zwischen anorganischen Materialien (zum Beispiel Glaskugeln, Glasplittern, Glasoberflächen, Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel für oxidische Oberflächen verwendet werden. Das erfindungsgemäße Gemisch aus siliciumhaltigen Kopplungsreagentien kann als Kopplungsreagentien in gefüllten Kautschukmischungen, beispielsweise für Reifenlaufflächen, verwendet werden.

Das erfindungsgemäße Gemisch aus siliciumhaltigen Kopplungsreagentien kann in Mengen von 0,1 bis 70 Gew-%, bevorzugt 0,1 bis 40 Gew.-%, besonders bevorzugt 1 bis 30 Gew.-%, ganz besonders bevorzugt 1 bis 20 Gew.-%, bezogen auf die Menge des eingesetzten Kautschuks, eingesetzt werden.

Das erfindungsgemäße Gemisch aus siliciumhaltigen Kopplungsreagentien kann sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürliche oder synthetische Oxide, bevorzugt Aluminiumoxid, oder Ruße sein. Desweiteren kann das erfindungsgemäße Gemisch aus siliciumhaltigen Kopplungsreagentien auch vorreagiert mit dem einzusetzenden Füllstoff dem Mischprozeß zugegeben werden.

Das erfindungsgemäße Gemisch aus siliciumhaltigen Kopplungsreagentien kann physikalisch vermischt mit einem organischen Stoff oder einem organischen Stoffgemisch dem Mischprozess zugegeben werden. Der organische Stoff oder das organische Stoffgemisch kann Polymere oder Oligomere enthalten. Die Polymere oder Oligomere, können heteroatomenthaltende Polymere oder Oligomere, zum Beispiel Ethylenvinylalkohol, Ethylenvinylacetat, Polyvinylacetat oder/und Polyvinylalkohole sein. Polymere oder Oligomere, können gesättigte oder ungesättigte Elastomere, bevorzugt Emulsions-SBR oder/und Lösungs-SBR, sein. Der Schmelzpunkt der Abmischung des erfindungsgemäßen Gemisches aus siliciumhaltigen Kopplungsreagentien und organischem Stoff oder einem organischen Stoffgemisch kann zwischen 50 und 200°C, bevorzugt zwischen 70 und 180°C, besonders bevorzugt zwischen 70 und 150°C, ganz besonders bevorzugt zwischen 70 und 130°C, außerordentlich bevorzugt zwischen 90 und 110°C, betragen. Der organische Stoff oder das organische Stoffgemisch kann mindestens ein olefinisches Wachs und/oder langkettige Carbonsäure enthalten. Zusätzlich kann die erfindungsgemäße Kautschukmischung weitere Kautschuke, wie beispielsweise Naturkautschuk und/oder Synthesekautschuke, enthalten. Bevorzugte Synthesekautschuke sind beispielsweise bei W. Hofmann, Kautschuktechnologie, Genter Verlag, Stuttgart 1980, beschrieben. Als Synthesekautschuke können unter anderem
- Polybutadien (BR);
- Polyisopren (IR);
- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;
- Chloropren (CR);
- Isobutylen/Isopren-Copolymerisate (IIR);
- Butadien/Acrylnitril-Copolymere mit Acrylnitrilgehalten von 5 bis 60, vorzugsweise 10 bis 50 Gew.-% (NBR), besonders bevorzugt 10 bis 45 Gew.-% (NBR), ganz besonders bevorzugt 19 bis 45 Gew.-% (NBR);
- teilhydrierter oder vollständig hydrierter NBR-Kautschuk (HNBR);
- Ethylen/Propylen/Dien-Copolymerisate (EPDM);
- oben genannte Kautschuke, die zusätzlich funktionelle Gruppen besitzen, wie zum Beispiel Carboxy- , Silanol- oder Epoxygruppen, beispielsweise Epoxidierter NR, Carboxy-funktionalisierter NBR oder Silanol- (-SiOH) bzw. Silylalkoxy-funktionalisierter (-Si-OR) SBR;
oder Mischungen dieser Kautschuke eingesetzt werden.

In einer bevorzugten Ausführungsform können die Kautschuke schwefelvulkanisierbar sein.

Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteil einen Vinylanteil von über 20 Gew.-% aufweisen, eingesetzt werden. Ganz besonders bevorzugt können L-SBR-Kautschuke, deren Butadienteil einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Als Füllstoffe können für die erfindungsgemäßen Kautschukmischungen die folgenden Füllstoffe eingesetzt werden:
- Ruße: Die hierbei zu verwendenden Ruße können Flammruße, Furnaceruße, Gasruße oder Thermalruße sein. Die BET-Oberflächen der Ruße können 20 bis 200 m²/g betragen. Die Ruße können gegebenenfalls auch Heteroatome wie zum Beispiel Si enthalten.
- Amorphe Kieselsäuren, hergestellt zum Beispiel durch Fällung von Lösungen von Silikaten (Fällungskieselsäuren) oder Flammenhydrolyse von Siliciumhalogeniden (pyrogene Kieselsäuren). Die Kieselsäuren können eine spezifische Oberfläche von 5 bis 1000 m²/g, vorzugsweise 20 bis 400 m²/g (BET-Oberfläche) und Primärteilchengrößen von 10 bis 400 nm haben. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminium-oxide und - hydroxide
- Natürliche Silikate, wie Kaolin und andere natürlich vorkommende Kieselsäuren.
- Glasfaser und Glasfaserprodukte (Matten, Stränge) oder Mikroglaskugeln.

Für die erfindungsgemäßen Kauschukmischungen können Mischungen dieser Füllstoffe verwendet werden.

Bevorzugt können amorphe Kieselsäuren, hergestellt durch Fällung von Lösungen von Silikaten, mit BET-Oberflächen von 20 bis 400 m²/g, besonders bevorzugt 100 m²/g bis 250 m²/g, in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

In einer besonders bevorzugten Ausführung können die Kautschukmischungen 10 bis 150 Gew.-Teile helle Füllstoffe, beispielsweise Kieselsäuren, gegebenenfalls zusammen mit 0 bis 100 Gew.-Teilen Ruß, sowie 0,1 bis 70 Gew.-Teile, vorzugsweise 0,1 bis 40 Gew.-Teile, besonders bevorzugt 1 bis 30 Gew.-Teile, außerordentlich bevorzugt 1 bis 20 Gew.-Teile des erfindungsgemäßen Gemisches aus siliciumhaltigen Kopplungsreagentien, jeweils bezogen auf 100 gew.-Teile Kautschuk, enthalten.

Die Kautschukmischungen können zusätzlich Silikonöl und/oder Alkylsilan enthalten.

Die erfindungsgemäßen Kautschukmischungen können weitere bekannte Kautschukhilfsmittel, wie zum Beispiel Vernetzer, Vulkisationsbeschleuniger, Reaktionsbeschleuniger, - verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin oder Hexantriol.

Weitere Kautschukhilfsstoffe können sein: Polyethylenglykol oder/und Polypropylenglykol oder/und Polybutylenglykol mit Molgewichten zwischen 50 und 50.000 g/mol, bevorzugt zwischen 50 und 20.000 g/mol, besonders bevorzugt zwischen 200 und 10.000 g/mol, ganz besonders bevorzugt zwischen 400 und 6.000 g/mol, außerordentlich bevorzugt zwischen 500 und 3.000 g/mol,
polyethylenglykol-, polypropylenglykol-, polybutylenglykol-, oder mit Mischungen davon verethertes Neopentylglykol HO-CH₂-C(Me)₂-CH₂-OH, Pentaerythrit C(CH₂-OH) oder Trimethylolpropan CH₃-CH₂-C(CH₂-OH)₃, wobei die Wiederholeinheiten von Ethylenglykol, Propylenglykol oder/und Butylenglykol in den veretherten Polyalkoholen zwischen 2 und 100, bevorzugt zwischen 2 und 50, besonders bevorzugt zwischen 3 und 30, ganz besonders bevorzugt zwischen 3 und 15, sein kann.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.

Als Vernetzer können Schwefel oder organische Schwefelspender eingesetzt werden.

Die erfindungsgemäßen Kautschukmischungen können weitere Vulkanisationsbeschleuniger enthalten. Beispielsweise können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.

Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden.

Ein weiterer Gegenstand der Erfindung ist ein Verfahren zur Herstellung der erfindungsgemäßen Kautschukmischungen, welches dadurch gekennzeichnet ist, daß man mindestens einen Kautschuk, mindestens einen Füllstoff und das erfindungsgemäße Gemisch aus siliciumhaltigen Kopplungsreagentien mischt.

Die Zugabe des erfindungsgemäßen Gemisches aus siliciumhaltigen Kopplungsreagentien sowie die Zugabe der Füllstoffe können bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die Abmischung der Kautschuke mit dem Füllstoff, gegebenenfalls Kautschukhilfsmitteln und des erfindungsgemäßen Gemisches aus siliciumhaltigen Kopplungsreagentien kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, das erfindungsgemäße Gemisch aus siliciumhaltigen Kopplungsreagentien und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200 °C, bevorzugt 130 bis 180°C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Die erfindungsgemäßen Kautschukmischungen haben den Vorteil, dass die Alkoholemission während des Mischprozesses reduziert ist bei gleichzeitig mindestens gleichen Verarbeitungseigenschaften und/oder mindestens gleichen dynamischen Eigenschaften im Vergleich zu bekannten Mischungen.

### Beispiele:

Die verwendeten Rohstoffe sind kommerziell erhältlich bzw. werden nach bekannten Vorschriften hergestellt.

Die ethoxylierten Alkohole sind Verkausprodukte der Firmen BASF (Lutensol TO 5 und Lutensol ON 50), Sasol (Marlipal 013/50) und Schärer & Schläpfer (Aduxol Hex 05B, Aduxol ST 04, Aduxol ST 05 und Aduxol LH-05). C1E3-Alkohol kann unter der Artikelnummer 8.14587.0250 von der Firma Merck bezogen werden. Titantetrabutylat, THF, NH₃-Lösung und MgSO₄ werden von der Firma Merck bezogen. 3-Mercaptopropyltriethoxysilan ist ein Produkt der Degussa GmbH und kann unter dem Handelsnamen VP Si 263 bezogen werden.
XP Si 363-Varianten werden nach bekannten Vorschriften aus dem jeweiligen ethoxylierten Alkohol erhalten wie zum Beispiel in der Patentanmeldung DE 102005057801.2 beschrieben. VP Si 363 ist ein Verkaufsprodukt der Degussa GmbH.
Die erfindungsgemäßen silanolgruppenhaltigen Mischungen können mit den üblichen physikalischen und chemischen Methoden getrennt und charakterisiert werden. Insbesondere können HPLC, GC und GPC zu Trennung, sowie ¹H-, ¹³C- und ²⁹Si-NMR-Spektroskopie, IR-Spektroskopie sowie Massenspektrometrie zu ihrer Charakterisierung verwendet werden.
APCI-MS-Spektren, die nach dem Fachmann bekannten Methoden unter wasserfreien Bedingungen und unter Zugabe von NH₄⁺-Salzen aufgenommen werden, zeigen im positiven und im negativen Modus die akkuraten Massen der Verbindungen der allgemeinen Formel I.
Silanolhaltige und silanolfreie Spezies können durch unterschiedliche Verschiebungen der zugehörigen 0- und/oder Si-Atome in Röntgenphotoelektronenspektren, die bei sehr hoher Spektrometerauflösung gemessen werden, unterschieden werden. Eine Gauß'sche oder Lorentz'sche Linienformanalyse der erhaltenen Röntgenphotoelektronenspektren kann eine Quantifizierung der silanolhaltigen Spezies erlauben. Röntgenphotoelektronenspektren können nach dem Fachmann bekannten Methoden erhalten werden (D. Briggs and M.P. Seah (Eds.) "Practical Surface Analysis",2nd Ed., Vol. 1 "Augerand X-ray Photoelectron Spectroscopy", Wiley & Sons Chichester, Salle+Sauerländer Aarau, 1990).
²⁹Si-NMR- und ¹³C-NMR-Spektren können nach dem Fachmann bekannten Methoden aufgenommen werden. ²⁹Si-NMR-Spektren zeigen im Bereich von -44 bis -45 ppm Signale für monomere Silanspezies, von -52 bis -54 Signale von Silan-M-Strukturen und ab -57 ppm Signale der stärker oligomerisierten Spezies.
¹³C-NMR-Spektren zeigen um 62 ppm Signale die zu gebundenen Alkylpolyetheralkohol-Resten gehören, um 61 ppm Signale die zu ungebundenen Alkylpolyetheralkoholen der allgemeinen Formel V gehören, um 58 ppm Signale die zu gebundenem EtO-Resten gehören und um 57 ppm Signale die zu ungebundenem EtOH gehören.
Aus den Integralen dieser ²⁹Si-NMR- und ¹³C-NMR-Signale können der Gehalt an freien Silanolgruppen, das Gewichtsverhältnis von silanolgruppenhaltigen zu silanolgruppenfreien Spezies sowie der Gewichtsanteil an freiem Alkylpolyetheralkohol berechnet werden.
Der Anteil an polysulfidischen
Organo(alkylpolyethersilanen) kann bestimmt werden, indem man das Produktgemisch in Acetonitril löst und mit DTNB (5,5'-Dithiobis(2-nitrobenzoesäure)) unter Zugabe von NEt₃ derivatisiert. Die Absorption bei einer Wellenlänge von 480 nm einer 7*10⁻⁵ M Lösung dieses Derivates korreliert linear mit dem Gehalt an freien SH-Gruppen. Die Menge an polysulfidischen Organo(alkylpolyethersilanen) ergibt sich aus der Differenz zu 100.

### Allgemeine Arbeitsvorschriften:

Soweit nicht anders angegeben, werden die silanolhaltigen Proben nach einer der folgenden allgemeinen Arbeitsvorschriften hergestellt.
**A:** In einem Rundkolben mit Rückflusskühler und Tropftrichter wird das Silan in THF gelöst (c = 0,9 mol/L). Dazu werden 4% (v% bezogen auf THF) 25% wässrige NH₃ getropft und die entstandene Lösung für 2h zum sieden erhitzt. Nach abkühlen auf RT trennt man gegebenenfalls die Phasen und trocknet die organische Phase über M₉SO₄. Entfernen des Lösemittels im Vakuum ergibt das silanolhaltige Produkt.
**B:** In einem Rundkolben mit Destillationsbrücke werden 2 Äquivalente des ethoxylierten Alkohols, 1 Äquivalent 3-Mercaptopropyltriethoxysilan und 0,05 Gew.-% Ti(On-Bu)₄ (bezogen auf das Silan) gemischt und die Mischung bis auf 140 °C erwärmt. Durch kontinuierliches absenken des Drucks nach 1h Reaktionszeit bei 140 °C wird das entstehende EtOH abdestilliert. Das silanolhaltige Produkt wird als Sumpfprodukt erhalten.
**C:** In einem Rundkolben mit Rückflusskühler und Tropftrichter wird die angegebene Menge des Silans in der angegebenen Menge THF gelöst. Dazu wird 25% wässrige NH₃ getropft und die entstandene Lösung für die angegebene Zeit zum sieden erhitzt. Nach abkühlen auf ca. 50 °C wird mit gesättigter wässriger KH₂PO₄-Lsg. neutralisiert, bei RT filtriert und über MgSO₄ getrocknet. Entfernen des Lösemittels im Vakuum ergibt das silanolhaltige Produkt.

### Beispiel 1:

In einem 500 ml-Kolben mit Rührer, Thermometer und Destillationsbrücke werden unter N₂-Schutzgas 59,5 g 3-Mercaptopropyl(triethoxysilan) (0,25 mol) vorgelegt. Dazu werden 210 g Lutensol TO 5 (0,5 mol) gegeben, dem man zuvor 3 Gew.-% Wasser (bezogen auf das Silan) zugesetzt hat. Die Reaktionsmischung wird für einige Minuten kräftig gerührt, dann werden unter Rühren 0,05 Gew.-% Titantetrabutylat (bezogen auf das eingesetzte Silan) zugegeben. Anschließend wird für 1 h auf 80 °C, dann für 1 h auf 140 °C erwärmt. Nach dieser Zeit wird der Druck langsam bis auf 50 mbar abgesenkt und entstehendes Ethanol abdestilliert. Nach einer Reaktionszeit von 7 h wird abgekühlt, entspannt und erneut 0,05 Gew.-% Titantetrabutylat (bezogen auf das eingesetzte Silan) zugegeben. Man erwärmt erneut auf 140 °C und senkt den Druck langsam bis auf 50 mbar ab. Man erhält 245 g einer farblosen, leicht trüben Flüssigkeit.

### Beispiel 2:

In einem 500 ml-Kolben mit Rührer, Thermometer und Destillationsbrücke werden unter N₂-Schutzgas 59,5 g 3-Mercaptopropyl(triethoxysilan) (0,25 mol) vorgelegt. Dazu werden 210 g Lutensol TO 5 (0,5 mol) gegeben, dem man zuvor 6 Gew.-% Wasser (bezogen auf das Silan) zugesetzt hat.

Die Reaktionsmischung wird für einige Minuten kräftig gerührt, dann werden unter Rühren 0,05 Gew.-% Titantetrabutylat (bezogen auf das eingesetzte Silan) zugegeben. Anschließend wird für 1 h auf 80 °C, dann für 1 h auf 140 °C erwärmt. Nach dieser Zeit wird der Druck langsam bis auf 50 mbar abgesenkt und entstehendes Ethanol abdestilliert. Nach einer Reaktionszeit von 7 h wird abgekühlt, entspannt und weitere 0,05 % (w/w) Titantetrabutylat (bezogen auf das eingesetzte Silan) zugegeben. Man erwärmt erneut auf 140 °C und senkt den Druck langsam bis auf 50 mbar ab. Man erhält 235 g einer farblosen, leicht trüben Flüssigkeit.

Die Tabelle 1 zeigt die Zusammensetzung der Beispiele 1 und 2 bestimmt durch ¹H-, ¹³C- und ²⁹Si-NMR.

**Tabelle 1**

| Beispiel | Alkylpolyetheralkohol | silanolgruppenhaltige (Mercaptoorganyl)-alkylpolyethersilane | silanolgruppenfreie (Mercaptoorganyl)-alkylpolyethersilane | freier Alkylpolyetheralkohol | silanolgruppenfreie, polysulfidische Organo(alkylpolyethersilane) |
|---|---|---|---|---|---|
| Bestimmung durch | | ²⁹Si-NMR | ²⁹Si-NMR | ¹³C-NMR | ¹H-NMR |
| | | Gew.-% des erfindungsgemäßen Gemisches | Gew.-% des erfindungsgemäßen Gemisches | Gew.-% bzgl. Spalte 3+4 | Gew.-% bzgl. Spalte 3+4 |
| 1 | Lutensol TO 5 | 14 | 86 | 1 | 0,2 |
| 2 | Lutensol TO 5 | 27 | 73 | 4 | 0,2 |

### Beispiel 3

### Gummitechnische Untersuchungen

Die für die Kautschukmischungen verwendete Rezeptur ist in der folgenden Tabelle 2 angegeben. Dabei bedeutet die Einheit phr Gewichtsanteile, bezogen auf 100 Teile des eingesetzten Rohkautschuks. Die Organosiliciumverbindungen werden equimolar, d.h. mit gleicher Stoffmenge eingesetzt.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 2:**

| | Mischung 1 Vergleichsbeispiel | Mischung 2 Beispiel 1 | Mischung 3 Beispiel 2 |
|---|---|---|---|
| | [phr] | [phr] | [phr] |
| **1. Stufe** | | | |
| Buna VSL 5025-1 | 96 | 96 | 96 |
| Buna CB 24 | 30 | 30 | 30 |
| Ultrasil 7000 GR | 80 | 80 | 80 |
| VP Si 363 | 10 | - | - |
| Beispiel 1 | - | 9,7 | - |
| Beispiel 2 | - | - | 9,7 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protektor G 3108 | 1 | 1 | 1 |

| **2. Stufe** | | | |
|---|---|---|---|
| Batch Stufe 1 | | | |

| **3. Stufe** | | | |
|---|---|---|---|
| Batch Stufe 2 | | | |
| Vulkacit D | 0,25 | 0,25 | 0,25 |
| Vulkacit CZ | 1,5 | 1,5 | 1,5 |
| Perkacit TBzTD | 0,5 | 0,5 | 0,5 |
| Schwefel | 2,2 | 2,2 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Als aromatisches Öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit CZ (CBS) und Vulkacit D (DPG) sind Handelsprodukte der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 3 hergestellt.

**Tabelle 3**

| | | Stufe 1 |
|---|---|---|
| Einstellungen | | |
| Mischaggregat | | Werner & Pfleiderer E-Typ |
| Drehzahl | | 70 min⁻¹ |
| Stempeldruck | | 5,5 bar |
| Leervolumen | | 1,58 L |
| Füllgrad | | 0,56 |
| Durchflußtemp. | | 70 °C |

| Mischvorgang | | |
|---|---|---|
| 0 bis | 1 min | Buna VSL 5025-1 + Buna CB 24 |
| 1 bis | 2 min | 1/2 Kieselsäure, ZnO, Stearinsäure, Naftolen ZD, Kopplungsagens |
| 2 bis | 4 min | 1/2 Kieselsäure, Vulkanox, Protektor |
| | 4 min | Säubern |
| 4 bis | 5 min | Mischen |
| | 5 min | Lüften |
| 5 bis | 6 min | Mischen und ausfahren |
| | | |
| Batch-Temp. | | 140-150°C |
| Lagerung | | 24 h bei Raumtemperatur |
| | | |

| | | Stufe 2 |
|---|---|---|
| Einstellungen | | |
| Mischaggregat | | Wie in Stufe 1 bis auf: |
| Drehzahl | | 60 min⁻¹ |
| Durchflußtemp. | | 80 °C |
| Füllgrad | | 0,54 |

| Mischvorgang | | |
|---|---|---|
| 0 bis | 2 min | Batch Stufe 1 aufbrechen |
| 2 bis | 5 min | Batchtemperatur 145°C durch Drehzahlvariation halten |
| | 5 min | Ausfahren |
| | | |
| Batch-Temp. | | 140-150°C |
| Lagerung | | 4 h bei Raumtemperatur |

| | | Stufe 3 |
|---|---|---|
| Einstellungen | | |
| Mischaggregat | | wie in Stufe 1 bis auf |
| Drehzahl | | 40 min⁻¹ |
| Füllgrad | | 0,52 |
| Durchflußtemp. | | 50 °C |

| Mischvorqanq | | |
|---|---|---|
| 0 bis | 2 min | Batch Stufe 2, Beschleuniger, Schwefel |
| | | |
| | 2 min | ausfahren und auf Labormischwalzwerk Fell bilden |
| | | (Durchmesser 200 mm, Länge 450 mm, Durchflußtemperatur 50°C) |
| | | |
| | | Homogenisieren: |
| | | 5* links, 5* rechts einschneiden und 6* bei weitem Walzenspalt (6 mm) und 3* bei engem Walzenspalt (3 mm) Fell ausziehen. |
| | | |
| Batch-Temp. | | < 110°C |

In Tabelle 4 sind die Methoden für die Gummitestung zusammengestellt.

**Tabelle 4**

| Physikalische Testung | | Norm/Bedingungen |
|---|---|---|
| ML 1+4, 100°C, 3. Stufe | | DIN 53523/3, ISO 667 |
| Vulkameterprüfung, 165°C | | DIN 53529/3, ISO 6502 |
| | Dmax-Dmin (dNm) | |
| | | |
| Zugversuch am Ring, 23°C | | DIN 53504, ISO 37 |
| | Zugfestigkeit (MPa) | |
| | Bruchdehnung (%) | |
| Shore-A-Härte, 23°C (SH) | | DIN 53 505 |
| Ball Rebound, 60°C (%) | | ASTM D 5308 |

Die Tabelle 5 zeigt die Ergebnisse der gummitechnischen Prüfung. Die Mischungen werden 10 min bei 165°C vulkanisiert.

**Tabelle 5**

| **Rohmischungsdaten** | **Einheit** | **Mischung 1 (Vergleichsbeispiel)** | **Mischung 2 Beispiel 1** | **Mischung 3 Beispiel 2** |
|---|---|---|---|---|
| ML 1+4, 3. Stufe | [-] | 61 | 60 | 59 |
| Dmax-Dmin | [dNm] | 14,4 | 14,9 | 15,0 |

| **Vulkanisatdaten** | **Einheit** | | | |
|---|---|---|---|---|
| Zugfestigkeit | [MPa] | 13,1 | 13,5 | 13,4 |
| Bruchdehnung | [%] | 310 | 325 | 330 |

Wie man anhand der Daten in Tabelle 5 erkennen kann, zeichnen sich die Mischungen mit den erfindungsgemäßen Gemischen der Beispiele 1 und 2 durch eine niedrigere Mooney-Viskosität der Rohmischungen aus. Zusätzlich besitzen die Mischungen mit den erfindungsgemäßen Gemischen einen höheren Dmax-Dmin und höhere Zugfestigkeiten, was auf eine höhere Verstärkung schließen läßt. Da die Mischungen 2 und 3 gleichzeitig höhere Bruchdehnungen besitzen, besitzen sie ein vorteilhaftes Zug-Dehnungs-Verhalten.

### Beispiel 4

33,2 g XP Si 363 (C1E1-3) werden gemäß der allgemeinen Arbeitsvorschrift **A** umgesetzt. Man erhält 39,8 g Produkt mit einem Silanolanteil von 5%.

### Beispiel 5

47,8 g XP Si 363 (C1E3-2) werden gemäß der allgemeinen Arbeitsvorschrift **A** umgesetzt. Man erhält 56 g Produkt mit einem Silanolanteil von 11%.

### Beispiel 6

189,9 g XP Si 363 (C1E3-2) werden in 250 mL THF gelöst und mit 3 mL 25% wässrigem NH₃ versetzt und anschließend wie in der allgemeinen Arbeitsvorschrift **A** beschrieben umgesetzt. Man erhält 187,1 g Produkt mit einem Silanolanteil von 1%.

### Beispiel 7

630 g Aduxol Hex 05B (1,8 mol) werden gemäß der allgemeinen Arbeitsvorschrift **B** mit 3-Mercaptopropyltriethoxysilan umgesetzt. Man erhält 707,2 g Produkt mit einem Silanolanteil von 10%.

### Beispiel 8

268 g Lutensol ON 50 (0,7 mol) werden gemäß der allgemeinen Arbeitsvorschrift **B** mit 3-Mercaptopropyltriethoxysilan umgesetzt. Es werden 5 Gew.-% Wasser (bezogen auf 3-Mercaptopropyltriethoxysilan) zugegeben. Man erhält 329,1 g Produkt mit einem Silanolanteil von 4%.

### Beispiel 9

327,1 g Lutensol ON 50 (0,86 mol) werden gemäß der allgemeinen Arbeitsvorschrift **B** mit 3-Mercaptopropyltriethoxysilan umgesetzt. Man erhält 374,7 g Produkt mit einem Silanolanteil von 26%.

### Beispiel 10

132,1 g XP Si 363 (C12E5-3) werden gemäß der allgemeinen Arbeitsvorschrift **A** umgesetzt. Man erhält 132,9 g Produkt mit einem Silanolanteil von 44%.

### Beispiel 11

In einem 500 mL-Kolben mit Destillationsbrücke werden 59,6 g 3-Mercaptopropyltriethoxysilan mit 106,1 g Lutensol TO 5, 3,6 g Wasser und 29,8 mg Ti(O-nBu)₄ versetzt. Die Reaktionsmischung wird auf 140 °C erwärmt und entstehendes EtOH abdestilliert. Man erhält 143,2 g Produkt mit einem Silanolateil von 23%.

### Beispiel 12

99,8 g VP Si 363 (C13E5-2) (0,1 mol) in 250 mL THF werden nach der allgemeinen Arbeitsvorschrift **C** mit 1 mL 25% wässrigem NH₃ für 1 h umgesetzt. Man erhält 88 g Produkt mit einem Silanolanteil von 6%.

### Beispiel 13

100,3 g VP Si 363 (C13E5-2) (0,1 mol) in 250 mL THF werden nach der allgemeinen Arbeitsvorschrift **C** mit 10 mL 25% wässrigem NH₃ für 2h umgesetzt. Man erhält 81,4 g Produkt mit einem Silanolanteil von 28%.

### Beispiel 14

136,2 g XP Si 363 (C13E5-3) werden gemäß der allgemeinen Arbeitsvorschrift **A** umgesetzt. Man erhält 137,4 g Produkt mit einem Silanolanteil von 58%.

### Beispiel 15

104 g XP Si 363 (C18E4-2) werden gemäß der allgemeinen Arbeitsvorschrift **A** umgesetzt. Man erhält 104,2 g Produkt mit einem Silanolanteil von 21%.

### Beispiel 16

103,9 g XP Si 363 (C18E4-2) werden gemäß der allgemeinen Arbeitsvorschrift **A** umgesetzt. Man erhält 102,7 g Produkt mit einem Silanolanteil von 24%.

### Beispiel 17

100,2 g XP Si 363 (C18E5-2) (0,1 mol) in 350 mL THF werden nach der allgemeinen Arbeitsvorschrift **C** mit 10 mL 25% wässrigem NH₃ für 2h umgesetzt. Man erhält 96,3 g Produkt mit einem Silanolanteil von 14%.

### Beispiel 18

Die für die Kautschukmischungen verwendete Rezeptur ist in Tabelle 2 angegeben, lediglich die erfindungsgemäßen Verbindungen und deren Mengen variieren. Als Vergleichsbeispiel wird VP Si 363 verwendet.

Bei den erfindungsgemäßen Verbindungen wird entweder gewichtsgleich dosiert oder es werden sowohl die Molare Masse als auch die analytischen Ergebnisse aus Tabelle 6 berücksichtigt, damit eine gleiche Anzahl an kopplungsfähigen Spezies in den Kautschukmischungen vorliegen (Tabelle 7).

**Tabelle 6:**

| Beispiel | Alkylpolyetheralkohol | Alkoholkomponente CxEv | Gew.-% freier Alkylpolyether | Gew.-% polysulfidische Organo(alkylpolyethersilane) | Gew.-Verhältnis silanolhaltige : silanolfreie Spezies |
|---|---|---|---|---|---|
| 4 | XP Si 363 C1E1 | C1E1 | 2 | nb | 14:86 |
| 5 | XP Si 363 C1E3 | C1E3 | 9 | nb | 11:89 |
| 6 | XP Si 363 C1E3 | C1E3 | 2 | - | 1:99 |
| 7 | Aduxol Hex 05B | C8E5 | 5 | nb | 31:69 |
| 8 | Lutensol ON 50 | C10E5 | 22 | - | 12:88 |
| 9 | Lutensol ON 50 | C10E5 | 8 | 8 | 70:30 |
| 10 | Aduxol LH-05 | C12E5 | 22 | 11 | 100:0 |
| 11 | Lutensol TO 5 | C13E5 | 0 | - | 62:38 |
| 12 | Lutensol TO 5 + Marlipal 013/50 (1:1) | C13E5 | 3 | 2 | 13:87 |
| 13 | Lutensol TO 5 + Marlipal 013/50 (1:1) | C13E5 | 14 | 2 | 79:21 |
| 14 | Lutensol TO 5 | C13E5 | 21 | 11 | 100:0 |
| 15 | Aduxol ST 04 | C18E4 | 10 | - | 61:39 |
| 16 | Aduxol ST 04 | C18E4 | 14 | - | 69:31 |
| 17 | Aduxol ST 05 | C18E5 | 6 | - | 37:63 |

| | | | | | |
|---|---|---|---|---|---|
| "nb": nicht bestimmbar, "-": nicht bestimmt CxEv: Anzahl x der C-Atome in der Alkylkette Alk, Anzahl v der Ethylenoxideinheiten | | | | | |

**Tabelle 7:**

| Beispiel | Dosierung in phr (per hundred rubber) |
|---|---|
| Vergleichsbeispiel VP Si 363 | 10 |
| 13 | 10 |
| 12 | 10 |
| 15 | 12,1 |
| 5 | 7,1 |
| 17 | 13,4 |
| 16 | 12,6 |
| 14 | 9,7 |
| 10 | 12,9 |
| 9 | 10,6 |

Die Kautschukmischungen werden in einem Innenmischer entsprechend der Mischvorschrift in Tabelle 3 hergestellt.

In Tabelle 4 sind die Methoden für die Gummitestung zusammengestellt.

Die Tabelle 8 zeigt die Ergebnisse der gummitechnischen Prüfung der Beispiele 12 und 13. Die Mischung 4 wird 20 min und die Mischungen 5 und 6 15 min bei 165°C vulkanisiert.

**Tabelle 8**

| **Rohmischungsdaten** | **Einheit** | **Mischung 4 (Vergleichsbeispiel)** | **Mischung 5 Beispiel 13** | **Mischung 6 Beispiel 12** |
|---|---|---|---|---|
| ML 1+4, 3. Stufe | [-] | 59 | 59 | 59 |
| Dmax-Dmin | [dNm] | 13,4 | 13,4 | 13,4 |

| **Vulkanisatdaten** | **Einheit** | | | |
|---|---|---|---|---|
| Zugfestigkeit | [MPa] | 13,2 | 12,2 | 12,3 |
| Bruchdehnung | [%] | 335 | 325 | 320 |
| Shore-A-Härte | [-] | 56 | 56 | 57 |
| Ball-Rebound | [%] | 73,2 | 73,3 | 73,9 |

Wie man anhand der Tabelle 8 erkennen kann sind die Mooney-Viskositäten der Kautschukmischungen identisch. Gleiches gilt für den Dmax-Dmin Wert.
Die Ball-Rebound Daten der Mischungen 5 und 6 sind gegenüber dem Vergleichsbeispiel (Mischung 4) leicht erhöht.

Die Tabelle 9 zeigt die Ergebnisse der gummitechnischen Prüfung der Beispiele 5 und 15. Die Mischung 7 wird 20 min und die Mischungen 8 und 9 10 min bei 165°C vulkanisiert.

**Tabelle 9:**

| **Rohmischungsdaten** | **Einheit** | **Mischung 7 (Vergleichsbeispiel)** | **Mischung 8 Beispiel 15** | **Mischung 9 Beispiel 5** |
|---|---|---|---|---|
| ML 1+4, 3. Stufe | [-] | 62 | 60 | 60 |
| Dmax-Dmin | [dNm] | 15,5 | 12,9 | 14,9 |

| **Vulkanisatdaten** | **Einheit** | | | |
|---|---|---|---|---|
| Zugfestigkeit | [MPa] | 12,3 | 13,8 | 13,1 |
| Bruchdehnung | [%] | 325 | 360 | 325 |
| Shore-A-Härte | [-] | 59 | 56 | 58 |
| Ball-Rebound | [%] | 73,7 | 73,8 | 73,1 |

Die Mischungen 8 und 9 zeigen gegenüber der Vergleichsmischung 7 eine niedrigere Mooney-Viskosität.
Vergleichbar sind auch Shore-A Härte und Bruchdehnung der vulkanisierten Kautschukmischungen.

Die Tabelle 10 zeigt die Ergebnisse der gummitechnischen Prüfung der Beispiele 9, 10, 14, 16 und 17. Die Mischung 10 wird 20 min und die Mischungen 11-15 10 min bei 165°C vulkanisiert.

Wie man anhand der Tabelle 10 erkennen kann, besitzen alle Mischungen außer Mischung 11 niedrigere Viskositäten als die Vergleichmischung. Die Mischung 11 besitzt einen höheren Ball-Rebound als die Vergleichsmischung.

**Tabelle 10:**

| **Rohmischungsdaten** | **Einheit** | **Mischung 10 (vergleichsbeispiel)** | **Mischung 11 Beispiel 17** | **Mischung 12 Beispiel 16** | **Mischung 13 Beispiel 14** | **Mischung 14 Beispiel 10** | **Mischung 15 Beispiel 9** |
|---|---|---|---|---|---|---|---|
| ML 1+4, 2. Stufe | [-] | 73 | 76 | 72 | 72 | 73 | 76 |
| ML 1+4, 3. Stufe | [-] | 60 | 62 | 58 | 58 | 58 | 59 |
| Dmax-Dmin | [dNm] | 14,3 | 12,5 | 12,3 | 16,9 | 13,8 | 13,8 |

| **Vulkanisatdaten** | **Einheit** | Einheit | | | | | |
|---|---|---|---|---|---|---|---|
| Zugfestigkeit | [MPa] | 13,9 | 11,2 | 9,6 | 11,8 | 8,4 | 12,4 |
| Bruchdehnung | [%] | 350 | 290 | 295 | 360 | 270 | 320 |
| Shore-A-Härte | [-] | 58 | 57 | 56 | 62 | 57 | 59 |
| Ball-Rebound | [%] | 74,3 | 75,6 | 76,2 | 73,0 | 74,7 | 73,5 |

## Patentansprüche

1. Gemische aus siliciumhaltigen Kopplungsreagentien,
**dadurch gekennzeichnet, dass** sie
silanolgruppenhaltige (Mercaptoorganyl)alkylpolyethersilane und silanolgruppenfreie (Mercaptoorganyl)alkylpolyethersilane in einem Gew.-Verhältnis von 5:95 bis 95:5 enthalten.

2. Gemische aus siliciumhaltigen Kopplungsreagentien gemäß Anspruch 1, **dadurch gekennzeichnet, dass** diese auf einen inerten organischen oder anorganischen Träger aufgezogen beziehungsweise mit diesem vermischt oder mit einem organischen oder anorganischen Träger vorreagiert sind.

3. Gemische aus siliciumhaltigen Kopplungsreagentien gemäß Anspruch 1, **dadurch gekennzeichnet, dass** die silanolgruppenhaltige (Mercaptoorganyl)alkylpolyethersilane Verbindungen der allgemeinen Formel I
(X) (X') (X") Si-R^{I}-SH I
sind, wobei unabhängig voneinander X eine Alkylpolyethergruppe 0- ((CR^{II}₂)_{w}-O-)ᵥ Alk ist, mit
v = 1-40, w = 1-40,
R^{II} unabhängig voneinander H, eine Phenyl- oder eine unverzweigte oder verzweigte Alkylgruppe ist,
Alk eine verzweigte oder unverzweigte, gesättigte oder ungesättigte, substituierte oder unsubstituierte, aliphatische, aromatische oder gemischt aliphatische /aromatische einbindige C₁-C₃₅ -Kohlenwasserstoffgruppe ist,
X' ein verzweigtes oder unverzweigtes Alkyl, ein verzweigtes oder unverzweigtes Alkoxy,
ein verzweigtes oder unverzweigtes C₂-C₂₅ Alkenyloxy-, ein C₆-C₃₅ Aryloxy-,
eine verzweigte oder unverzweigte C₇-C₃₅ Alkylaryloxygruppe, eine verzweigte oder unverzweigte C₇-C₃₅ Aralkyloxygruppe,
ein X oder eine Hydroxygruppe (-OH) ist,
X" eine Hydroxygruppe (-OH) ist,
R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, ist.

4. Gemische aus siliciumhaltigen Kopplungsreagentien gemäß Anspruch 1 und 2, **dadurch gekennzeichnet, dass** sie 0,01-50 Gew.-% silanolgruppenhaltige, polysulfidische Organo(alkylpolyethersilane), bezogen auf das Gesamtgewicht der silanolgruppenhaltigen und silanolgruppenfreien (Mercaptoorganyl)alkylpolyethersilane, enthalten.

5. Gemische aus siliciumhaltigen Kopplungsreagentien gemäß Anspruch 1 und 2, **dadurch gekennzeichnet, dass** sie 0,1-50 Gew.-% silanolgruppenfreie, polysulfidische Organo(alkylpolyethersilane), bezogen auf das Gesamtgewicht der silanolgruppenhaltigen und silanolgruppenfreien (Mercaptoorganyl)alkylpolyethersilane, enthalten.

6. Gemische aus siliciumhaltigen Kopplungsreagentien gemäß Anspruch 1 und 2, **dadurch gekennzeichnet, dass** sie 0,1-50 Gew.-% Alkylpolyetheralkohole, bezogen auf das Gesamtgewicht der silanolgruppenhaltigen und silanolgruppenfreien (Mercaptoorganyl)alkylpolyethersilane, enthalten.

7. Verfahren zur Herstellung der Gemische aus siliciumhaltigen Kopplungsreagentien gemäß Anspruch 1 und 2, **dadurch gekennzeichnet, daß** man Mercaptoorganyl-(alkoxysilane) mit Alkylpolyetheralkoholen der allgemeinen Formel V,
HO- ((CR^{II}₂)_{w}-O-)ᵥ Alk V
wobei R^{II}, w, v und Alk die oben genannten Bedeutungen haben, in Gegenwart von Wasser umestert und hydrolysiert.

8. Verfahren zur Herstellung der Gemische aus siliciumhaltigen Kopplungsreagentien gemäß Anspruch 1 und 2, **dadurch gekennzeichnet, daß** man Mercaptoorganyl-(alkoxysilane) oder Mischungen von Mercaptoorganyl-(alkoxysilanen) durch Wasser und / oder Additivzusatz teilweise hydrolysiert, anschließend oder während der Hydrolyse Alkylpolyetheralkohole der allgemeinen Formel V,
HO- ((CR^{II}₂)_{w}-O-)ᵥ Alk V
wobei R^{II}, w, v und Alk die oben genannten Bedeutungen haben, zusetzt und umsetzt.

9. Verfahren zur Herstellung der Gemische aus siliciumhaltigen Kopplungsreagentien gemäß Anspruch 1 und 2, **dadurch gekennzeichnet, daß** man siliciumhaltige Kopplungsreagentien der allgemeinen Formel II,
(X) (X"') (X"') Si-R^{I}-SH II
wobei unabhängig voneinander X und R^{I} die oben angegebenen Bedeutungen haben und X'" unabhängig voneinander ein verzweigtes oder unverzweigtes Alkyl, ein verzweigtes oder unverzweigtes Alkoxy, ein verzweigtes oder unverzweigtes C₂-C₂₅ Alkenyloxy-, ein C₆-C₃₅ Aryloxy-, eine verzweigte oder unverzweigte C₇-C₃₅ Alkylaryloxygruppe, eine verzweigte oder unverzweigte C₇-C₃₅ Aralkyloxygruppe oder ein X ist, durch Wasserzugabe und/oder Additivzugabe umsetzt.

10. Kautschukmischungen, **dadurch gekennzeichnet, daß** sie Kautschuk, Füllstoff, gegebenenfalls weitere Kautschukhilfsmittel, sowie Gemische aus siliciumhaltigen Kopplungsreagentien gemäß Anspruch 1 oder 2 enthalten.

11. Verwendung von Kautschukmischungen gemäß Anspruch 10 zur Herstellung von Formkörpern.

12. Verwendung von Kautschukmischungen gemäß Anspruch 10 zur Herstellung von Luftreifen, Reifenlaufflächen, gummihaltigen Reifenbestandteilen, Kabelmänteln, Schläuchen, Treibriemen, Förderbändern, Walzenbelägen, Reifen, Schuhsohlen, Dichtungsringen und Dämpfungselementen.

13. Reifenlauffläche **dadurch gekennzeichnet, dass** sie eine Kautschukmischung gemäß Anspruch 10 enthält.

## Claims

1. Mixtures composed of silicon-containing coupling reagents, **characterized in that** they comprise (mercaptoorganyl)alkylpolyethersilanes containing silanol groups and (mercaptoorganyl)-alkylpolyethersilanes free from silanol groups in a ratio by weight of from 5:95 to 95:5.

2. Mixtures composed of silicon-containing coupling reagents, according to Claim 1, **characterized in that** they have been absorbed onto an inert organic or inorganic carrier or have been mixed with the same, or have been prereacted with an organic or inorganic carrier.

3. Mixtures composed of silicon-containing coupling reagents, according to Claim 1, **characterized in that** the (mercaptoorganyl)alkylpolyethersilanes containing silanol groups are compounds of the general formula I
(X) (X') (X")Si-R^{I}-SH I,
where, independently of one another, X is an alkylpolyether group O-((CR^{II}₂)_{w}-O-)ᵥAlk, where v = 1-40, w = 1-40,
R^{II}, independently of one another, is H, a phenyl group, or an unbranched or branched alkyl group,
Alk is a branched or unbranched, saturated or unsaturated, substituted or unsubstituted, aliphatic, aromatic, or mixed aliphatic/aromatic monovalent C₁-C₃₅- hydrocarbon group,
X' is branched or unbranched alkyl, branched or unbranched alkoxy, a branched or unbranched C₂-C₂₅-alkenyloxy group, a C₆-C₃₅-aryloxy group,
a branched or unbranched C₇-C₃₅-alkylaryloxy group, a branched or unbranched C₇-C₃₅-aralkyloxy group,
an X, or a hydroxy group (-OH),
X" is a hydroxy group (-OH), and
R^{I} is a branched or unbranched, saturated or unsaturated, aliphatic, aromatic or mixed aliphatic/ aromatic divalent C₁-C₃₀-hydrocarbon group, optionally having substitution.

4. Mixtures composed of silicon-containing coupling reagents, according to Claim 1 and 2, **characterized in that** they comprise from 0.01 to 50% by weight of polysulfidic organo(alkylpolyethersilanes) containing silanol groups, based on the total weight of the (mercaptoorganyl)alkylpolyethersilanes containing silanol groups and free from silanol groups.

5. Mixtures composed of silicon-containing coupling reagents, according to Claim 1 and 2, **characterized in that** they comprise from 0.1 to 50% by weight of polysulfidic organo(alkylpolyethersilanes) free from silanol groups, based on the total weight of the (mercaptoorganyl)alkylpolyethersilanes containing silanol groups and free from silanol groups.

6. Mixtures composed of silicon-containing coupling reagents, according to Claim 1 and 2, **characterized in that** they comprise from 0.1 to 50% by weight of alkylpolyether alcohols, based on the total weight of the (mercaptoorganyl)alkylpolyethersilanes containing silanol groups and free from silanol groups.

7. Process for the preparation of the mixtures composed of silicon-containing coupling reagents, according to Claim 1 and 2, **characterized in that** mercapto-organyl(alkoxysilanes) are transesterified and hydrolyzed using alkylpolyether alcohols of the general formula V,
HO-((CR^{II}₂)_{w}-O-)ᵥAlk V
where R^{II}, w, v, and Alk are defined as above, in the presence of water.

8. Process for the preparation of the mixtures composed of silicon-containing coupling reagents, according to Claim 1 and 2, **characterized in that** mercaptoorganyl(alkoxysilanes) or mixtures of mercaptoorganyl(alkoxysilanes) are partially hydrolyzed by water and/or additive addition, and then, or during the hydrolysis, alkylpolyether alcohols of the general formula V,
HO-((CR^{II}₂)_{w}-O-)ᵥAlk V
where R^{II}, w, v, and Alk are defined as above, are added and reacted.

9. Process for the preparation of the mixtures composed of silicon-containing coupling reagents, according to Claim 1 and 2, **characterized in that** silicon-containing coupling reagents of the general formula II,
(X) (X"') (X"') Si-R^{I}-SH II
where, independently of one another, X and R^{I} are defined as above, and X"', independently of one another, is branched or unbranched alkyl, branched or unbranched alkoxy, a branched or unbranched C₂-C₂₅-alkenyloxy group, a C₆-C₃₅-aryloxy group, a branched or unbranched C₇-C₃₅-alkylaryloxy group, a branched or unbranched C₇-C₃₅-aralkyloxy group, or an X, are reacted via water addition and/or additive addition.

10. Rubber mixtures, **characterized in that** they comprise rubber, filler, if appropriate further rubber auxiliaries, and also mixtures composed of silicon-containing coupling reagents, according to Claim 1 or 2.

11. Use of rubber mixtures according to Claim 10 for the production of moldings.

12. Use of rubber mixtures according to Claim 10 for the production of tires, including pneumatic tires, tire treads, rubber-containing tire constituents, cable sheathing, hoses, drive belts, conveyor belts, roll coverings, shoe soles, ring seals, and damping elements.

13. Tire tread, **characterized in that** it comprises a rubber mixture according to Claim 10.

## Revendications

1. Mélanges de réactifs de couplage contenant du silicium, **caractérisés en ce qu'**ils contiennent des (mercaptoorganyl)alkylpolyéthersilanes contenant des groupes silanol et des (mercaptoorganyl)alkylpolyéthersilanes exempts de groupes silanol en un rapport en poids de 5:95 à 95:5.

2. Mélanges de réactifs de couplage contenant du silicium selon la revendication 1, **caractérisés en ce que** ceux-ci sont appliqués sur un support organique ou inorganique inerte ou mélangés avec celui-ci ou pré-réagis avec un support organique ou inorganique.

3. Mélanges de réactifs de couplage contenant du silicium selon la revendication 1, **caractérisés en ce que** les (mercaptoorganyl)alkylpolyéthersilanes contenant des groupes silanol sont des composés de formule générale I
(X) (X') (X")Si-R^{I}-SH I
dans laquelle X représente indépendamment un groupe alkylpolyéther O-((CR^{II}₂)_{w}-O-)ᵥAlk, avec v = 1 à 40, w = 1 à 40, R^{II} représentant indépendamment H, un groupe phényle ou alkyle non ramifié ou ramifié, Alk représentant un groupe hydrocarboné en C₁-C₃₅ monovalent, ramifié ou non ramifié, saturé ou insaturé, substitué ou non substitué, aliphatique, aromatique ou aliphatique/aromatique mixte,
X' représente un alkyle ramifié ou non ramifié, un alcoxy ramifié ou non ramifié, un groupe alcényloxy en C₂-C₂₅ ramifié ou non ramifié, un groupe aryloxy en C₆-C₃₅, un groupe alkylaryloxy en C₇-C₃₅ ramifié ou non ramifié, un groupe aralkyloxy en C₇-C₃₅ ramifié ou non ramifié, un X ou un groupe hydroxy (-OH),
X" représente un groupe hydroxy (-OH),
R^{I} représente un groupe hydrocarboné en C₁-C₃₀ bivalent, ramifié ou non ramifié, saturé ou insaturé, aliphatique, aromatique ou aliphatique/aromatique mixte, qui est éventuellement substitué.

4. Mélanges de réactifs de couplage contenant du silicium selon les revendications 1 et 2, **caractérisés en ce qu'**ils contiennent 0,01 à 50 % en poids d'organo(alkylpolyéthersilanes) polysulfuriques contenant des groupes silanol, par rapport au poids total des (mercaptoorganyl)alkylpolyéthersilanes contenant des groupes silanol et exempts de groupes silanol.

5. Mélanges de réactifs de couplage contenant du silicium selon les revendications 1 et 2, **caractérisés en ce qu'**ils contiennent 0,1 à 50 % en poids d'organo(alkylpolyéthersilanes) polysulfuriques exempts de groupes silanol, par rapport au poids total des (mercaptoorganyl)alkylpolyéthersilanes contenant des groupes silanol et exempts de groupes silanol.

6. Mélanges de réactifs de couplage contenant du silicium selon les revendications 1 et 2, **caractérisés en ce qu'**ils contiennent 0,1 à 50 % en poids d'alkylpolyéther-alcools, par rapport au poids total des (mercaptoorganyl)alkylpolyéthersilanes contenant des groupes silanol et exempts de groupes silanol.

7. Procédé de fabrication des mélanges de réactifs de couplage contenant du silicium selon les revendications 1 et 2, **caractérisé en ce que** des mercaptoorganyl(alcoxysilanes) sont transestérifiés et hydrolysés en présence d'eau avec des alkylpolyéther-alcools de formule générale V
HO- ((CR^{II}₂)w-O-)ᵥAlk V
dans laquelle R^{II}, w, v et Alk ont les significations indiquées précédemment.

8. Procédé de fabrication des mélanges de réactifs de couplage contenant du silicium selon les revendications 1 et 2, **caractérisé en ce que** des mercaptoorganyl(alcoxysilanes) ou des mélanges de mercaptoorganyl(alcoxysilanes) sont partiellement hydrolysés par un ajout d'eau et/ou d'un additif, des alkylpolyéther-alcools de formule générale V
HO- ((CR^{II}₂)_{w}-O-)ᵥAlk V
dans laquelle R^{II}, w, v et Alk ont les significations indiquées précédemment,
étant ajoutés après ou pendant l'hydrolyse et mis en réaction.

9. Procédé de fabrication des mélanges de réactifs de couplage contenant du silicium selon les revendications 1 et 2, **caractérisé en ce que** des réactifs de couplage contenant du silicium de formule générale II
(X) (X"') (X"')Si-R^{I}-SH II
dans laquelle X et R^{I} ont indépendamment les significations indiquées précédemment et X"' représente indépendamment un alkyle ramifié ou non ramifié, un alcoxy ramifié ou non ramifié, un groupe alcényloxy en C₂-C₂₅ ramifié ou non ramifié, un groupe aryloxy en C₆-C₃₅, un groupe alkylaryloxy en C₇-C₃₅ ramifié ou non ramifié, un groupe aralkyloxy en C₇-C₃₅ ramifié ou non ramifié ou un X,
sont mis en réaction par ajout d'eau et/ou ajout d'un additif.

10. Mélanges de caoutchouc, **caractérisés en ce qu'**ils contiennent un caoutchouc, une charge, éventuellement des adjuvants de caoutchouc supplémentaires, ainsi que des mélanges de réactifs de couplage contenant du silicium selon la revendication 1 ou 2.

11. Utilisation de mélanges de caoutchouc selon la revendication 10 pour la fabrication de corps moulés.

12. Utilisation de mélanges de caoutchouc selon la revendication 10 pour la fabrication de pneumatiques, de bandes de roulement de pneus, de constituants de pneus contenant du caoutchouc, de gainages de câbles, de tuyaux, de courroies d'entraînement, de bandes transporteuses, de revêtements de cylindres, de pneus, de semelles de chaussures, de bagues d'étanchéité et d'éléments d'amortissement.

13. Bande de roulement de pneu, **caractérisée en ce qu'**elle contient un mélange de caoutchouc selon la revendication 10.
